# EUROPEAN PATENT APPLICATION

(11) **EP 4 827 169 A1**
(43) Date of publication of application: **21.10.2026**
(21) Application number: 24916068.0
(22) Date of filing: 12.01.2024
(51) Int. Cl.: H04W 36/00

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); LENG, Bingxue, Dongguan, Guangdong 523860 (CN); YU, Xinlei, Dongguan, Guangdong 523860 (CN)
(74) Representative: Penza, Giancarlo
(86) International application number: PCT/CN2024/071978
(87) International publication number: WO 2025/147997

(57) **Abstract**

Provided are a wireless communication method, a terminal device, and a network device. The method includes: a terminal device performs a first operation based on first information, wherein the first operation is related to logical channel processing.

## Description

### TECHNICAL FIELD

The present disclosure relates to the technical field of communication, and more specifically, to a wireless communication method, a terminal device and a network device.

### BACKGROUND

In some scenarios, for certain data (such as multimodal data), there is currently no explicit solution on how to support transmission based on such data over an air interface.

### SUMMARY

The present disclosure provides a wireless communication method, a terminal device, and a network device. Various aspects related to the present disclosure are described below.

In a first aspect, a wireless communication method is provided, including that: a terminal device performs a first operation based on first information, the first operation being related to logical channel (LCH) processing.

In a second aspect, a wireless communication method is provided, including that: a network device transmits second indication information to a terminal device, the second indication information being configured to indicate first information, the first information being configured to perform a first operation, the first operation being related to LCH processing.

In a third aspect, a terminal device is provided, including: an executing unit configured to perform a first operation based on first information, the first operation being related to LCH processing.

In a fourth aspect, a network device is provided, including: a transmission unit configured to transmit second indication information to a terminal device, the second indication information being configured to indicate first information, the first information being configured to perform a first operation, the first operation being related to LCH processing.

In a fifth aspect, a terminal device is provided, including a processor, a memory, and a communication interface, the memory being configured to store one or more computer programs, and the processor being configured to invoke the one or more computer programs in the memory to cause the terminal device to perform some or all operations of the method according to the first aspect.

In a sixth aspect, a network device is provided, including a processor, a memory, and a transceiver, the memory being configured to store one or more computer programs, and the processor being configured to invoke the one or more computer programs in the memory to cause the network device to perform some or all operations of the method according to the second aspect.

In a seventh aspect, an embodiment of the present disclosure provides a communication system including the above-mentioned terminal device and/or network device. In another possible design, the system may further include other devices that may interact with the terminal device or the network device in the solutions provided by the embodiments of the present disclosure.

In an eighth aspect, an embodiment of the present disclosure provides a computer-readable storage medium storing a computer program that causes a communication device (e.g., a terminal device or a network device) to perform some or all operations of the methods according to the above aspects.

In a ninth aspect, an embodiment of the present disclosure provides a computer program product, which includes a non-transitory computer-readable storage medium storing a computer program operable to cause a communication device (e.g., a terminal device or a network device) to perform some or all operations of the methods according to the above aspects. In some implementations, the computer program product may be a software installation package.

In a tenth aspect, an embodiment of the present disclosure provides a chip including a memory and a processor, the processor being capable of invoking and executing a computer program from the memory to implement some or all operations described in the methods according to the above aspects.

In the present disclosure, by performing an operation related to LCH processing based on the first information, transmission of data (e.g., multimodal data) over an air interface can be realized through processing of the LCH.

### BRIEF DESCRIPTION OF THE DRAWINGS

FIG. 1 is a wireless communication system 100 to which an embodiment of the present disclosure is applied.
FIG. 2 is a schematic flowchart of a wireless communication method provided by an embodiment of the present disclosure.
FIG. 3 is a schematic flowchart of another wireless communication method provided by an embodiment of the present disclosure.
FIG. 4 is a schematic block diagram of a terminal device provided by an embodiment of the present disclosure.
FIG. 5 is a schematic block diagram of a network device provided by an embodiment of the present disclosure.
FIG. 6 is a schematic structural diagram of an apparatus provided by an embodiment of the present disclosure.

### DETAILED DESCRIPTION

The technical solutions in the present disclosure will be described below with reference to the accompanying drawings.

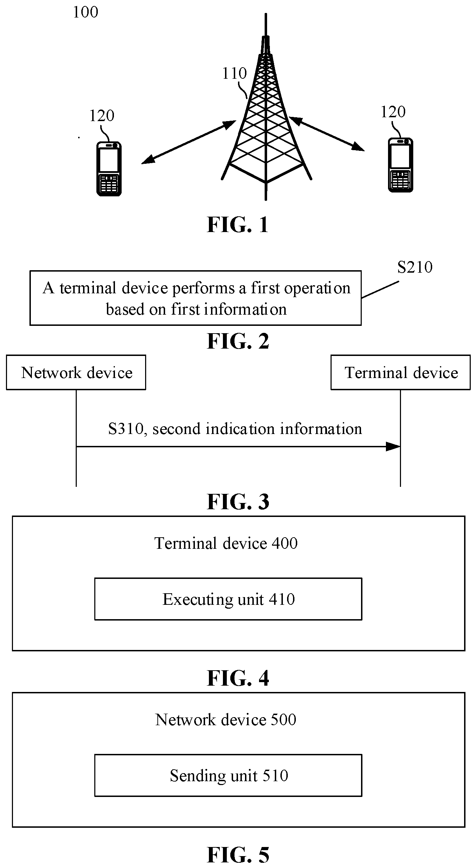

FIG. 1 illustrates a wireless communication system 100 to which an embodiment of the present disclosure is applied. The wireless communication system 100 may include a network device 110 and a terminal device 120. The network device 110 may be a device configured to communicate with the terminal device 120. The network device 110 may provide communication coverage for a specific geographical area and may communicate with the terminal device 120 located within the coverage area.

FIG. 1 exemplarily shows one network device and two terminals. Optionally, the wireless communication system 100 may include multiple network devices, and the coverage area of each network device may include other numbers of terminal devices, which are not limited in the embodiment of the present disclosure.

Optionally, the wireless communication system 100 may further include other network entities such as a network controller, a mobility management entity, and the like, which are not limited in the embodiments of the present disclosure.

It should be appreciated that the technical solutions in the embodiments of the present disclosure may be applied to various communication systems, for example: a 5th generation (5G) system or new radio (NR), a long term evolution (LTE) system, an LTE frequency division duplex (FDD) system, an LTE time division duplex (TDD) system, and the like. The technical solutions provided in the present disclosure may also be applied to future communication systems, such as a sixth generation mobile communication system, a satellite communication system, and so on.

The terminal device in the embodiments of the present disclosure may also be referred to as a user equipment (UE), an access terminal, a subscriber unit, a subscriber station, a mobile site, a mobile station (MS), a mobile terminal (MT), a remote station, a remote terminal, a mobile device, a user terminal, a terminal, a wireless communication device, a user agent, or a user apparatus. The terminal device in the embodiments of the present disclosure may be a device that provides voice and/or data connectivity for a user and may be used to connect people, things, and machines, such as a handheld device with a wireless connection function, an in-vehicle device, and the like. The terminal device in the embodiments of the present disclosure may be a mobile phone, a tablet computer (Pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transport safety, a wireless terminal in a smart city, a wireless terminal in a smart home, and the like. Optionally, a UE may be configured to act as a base station. For example, the UE may act as a scheduling entity that provides sidelink signals among UEs in V2X or D2D, etc. For example, a cellular phone and a car may communicate with each other using sidelink signals. A cellular phone may communicate with a smart home device without need of relaying a communication signal through a base station.

The network device in the embodiments of the present disclosure may be a device configured to communicate with a terminal device, and the network device may also be referred to as an access network device or a radio access network device, for example, the network device may be a base station. The network device in the embodiments of the present disclosure may refer to a radio access network (RAN) node (or device) that connects a terminal device to a wireless network. A base station may broadly cover various names in the following, or be replaced with the following names, such as: NodeB, evolved NodeB (eNB), next generation NodeB (gNB), relay station, access point, transmitting and receiving point (TRP), transmitting point (TP), MeNB, SeNB, multi-standard radio (MSR) node, home base station, network controller, access node, radio node, access point (AP), transmission node, transceiver node, base band unit (BBU), Remote Radio Unit (RRU), active antenna unit (AAU), remote radio head (RRH), central unit (CU), distributed unit (DU), positioning node, and the like. A base station may be a macro base station, a micro base station, a relay node, a donor node, or the like, or a combination thereof. A base station may also refer to a communication module, a modem, or a chip disposed in the aforementioned device or apparatus. A base station may also be a mobile switching center, a device undertaking a base station function in device-to-device (D2D), vehicle-to-everything (V2X), machine-to-machine (M2M) communication, a network-side device in a 6G network, a device undertaking a base station function in a future communication system, and the like. A base station may support networks of the same or different access technologies. The specific technology and specific device form adopted by the network device are not restricted in the embodiments of the present disclosure.

A base station may be fixed or mobile. For example, a helicopter or a drone may be configured to act as a mobile base station, and one or more cells may move according to the location of the mobile base station. In other examples, a helicopter or a drone may be configured to act as a device communicating with another base station.

In some deployments, the network device in the embodiments of the present disclosure may refer to a CU or a DU, or the network device includes a CU and a DU. A gNB may further include an AAU.

The network device and the terminal device may be deployed on land, including indoors or outdoors, handheld or vehicle-mounted; they may also be deployed on water; they may also be deployed on aircraft, balloons, and satellites in the air. The embodiments of the present disclosure do not limit the scenarios where the network device and the terminal device are located.

It should be appreciated that all or part of the functions of the communication device in the present disclosure may also be implemented by software functions running on hardware, or by virtualized functions instantiated on a platform (such as a cloud platform).

### Application Scenarios of the Communication System

At present, main application scenarios of a communication system (e.g., 5G) may include enhanced mobile broadband (eMBB), ultra reliable low latency communication (URLLC), and massive machine type communication (mMTC).

eMBB may be applied to scenarios where users obtain multimedia content, services, data, and the like, and its demand grows very rapidly. In addition, since eMBB may be deployed in different environments, such as indoors, urban areas, rural areas, and the like, the capabilities and requirements for eMBB vary greatly in different environments.

URLLC may be applied to scenarios such as industrial automation, power automation, remote medical operations (surgery), traffic safety guarantee, and the like. Typical characteristics of mMTC include: high connection density, small data volume, delay-insensitive services, low cost and long service life of modules, and the like.

### Radio Resource Control (RRC) States and Mobility Management

At present, three RRC states of a terminal device are defined in a protocol: an RRC_connected state, an RRC-idle state, and an RRC-inactive state.

The RRC_connected state may refer to a state of a terminal device after completion of a random access procedure and before RRC release. An RRC connection exists between the terminal device and a network device (e.g., an access network device). In the RRC_connected state, the terminal device and the network device may perform data transmission, such as downlink data transmission and/or uplink data transmission. Alternatively, the terminal device and the network device may also perform transmission of a data channel and/or a control channel specific to the terminal device, so as to transmit specific information or unicast information of the terminal device.

In the RRC_connected state, the network device may determine cell-level location information of the terminal device, that is, the network device may determine a cell to which the terminal device belongs. In the RRC_connected state, after the terminal device moves in location, e.g., from one cell to another cell, the network device may control the terminal device to perform cell handover. It can be seen that mobility management of the terminal device in the RRC_connected state may include cell handover. In addition, mobility management of the terminal device in the RRC_connected state may be controlled by the network device, and correspondingly, the terminal device may be switched to a specified cell according to an instruction issued by the network device.

The RRC-idle state refers to a state where a terminal device camps on a cell but does not perform random access. The terminal device usually enters the RRC-idle state after being powered on or after RRC release. In the RRC-idle state, there is no RRC connection between the terminal device and a network device (e.g., a camping network device), the network device does not store context of the terminal device, and no connection for the terminal device is established between the network device and a core network. When the terminal device needs to enter the RRC_connected state from the RRC-idle state, it needs to initiate an RRC connection establishment procedure.

In the RRC-idle state, a core network (CN) may send a paging message to the terminal device, that is, a paging procedure may be triggered by the CN. Optionally, a paging area may also be configured by the CN. In some cases, for the terminal device in the RRC-idle state, after the terminal device moves in location (e.g., from one cell to another cell), the terminal device may initiate a cell reselection procedure. In other cases, for the terminal device in the RRC-idle state, when the terminal device needs to access a cell, the terminal device may initiate a cell selection procedure. That is, mobility management of the terminal device in the RRC-idle state may include cell reselection and/or cell selection.

The RRC-inactive state is a state defined to reduce air interface signaling, quickly restore a wireless connection, and quickly restore a data service. The RRC-inactive state is a state between the connected state and the idle state. A terminal device has previously entered the RRC_connected state and then released a RRC connection with a network device, but the network device stores the context of the terminal device. In addition, the connection for the terminal device established between the network device and a core network (CN) is not released, that is, a user-plane bearer and a control-plane bearer between a RAN and the CN are still maintained, i.e., a CN-NR connection exists.

In the RRC-inactive state, the RAN may send a paging message to the terminal device, that is, a paging procedure may be triggered by the RAN. A RAN-based paging area is managed by the RAN, and the network device can know the location of the terminal device at a RAN-based paging area level.

In some cases, for the terminal device in the RRC-inactive state, after the terminal device moves in location (e.g., from one cell to another cell), the terminal device may initiate a cell reselection procedure. In other cases, for the terminal device in the RRC-inactive state, when the terminal device needs to access a cell, the terminal device may initiate a cell selection procedure. That is, mobility management of the terminal device in the RRC-inactive state may include cell reselection and/or cell selection.

### XR

In some meetings (e.g., 3GPP RAN #88e meeting), a research project entitled "Evolution of eXtended reality (XR) and cloud game (CG) in NR" is proposed. XR services studied by the project may include augmented reality (AR) and virtual reality (VR). A main service in an XR service and/or a CG service is a video stream service, which has high requirements on transmission rate. For example, measured in frame per second (fps), requirements of the video stream service on the transmission rate may be 30 fps, 60 fps, 90 fps, 120 fps, and correspondingly, periods corresponding to the video stream service are {33.33 ms, 16.67 ms, 11.11 ms, 8.33 ms}.

At present, characteristics of data in an XR service include: a data volume in a data packet corresponding to the service is variable, and an average data volume in the data packet is large. For an AR/VR service with a data transmission rate of 100 Mbps, an average data volume of an uplink data packet is 20833 bytes, a maximum value is 31250 bytes, and a minimum value is 10417 bytes, that is, a size of a data packet to be transmitted in each period is between [10417 bytes, 31250 bytes]. Generally, in a communication system with a bandwidth of 100M, 4 time slots may be required to be occupied for transmitting a data packet of 20833 bytes.

In some scenarios, it is proposed that multiple PUSCH occasions may be configured in one CG period for transmitting data packets with a large data volume (also referred to as "large data packets") in an XR service. In addition, multiple sets of CGs may also be configured to transmit data packets with a large data volume in an XR service. When a data volume of a certain data transmission is relatively small, pre-configured multiple PUSCH occasions may not be occupied. In this case, a terminal device may notify a network device not to use the PUSCH occasions, and correspondingly, the network device may reallocate unused PUSCH occasions to other terminal devices for data transmission, thereby improving system efficiency.

In some scenarios, application layer data interacted between a terminal device and an application server or other terminal devices may include, for example, data such as AR, VR, CG, live video, and the like. Such data usually includes multiple modes of data streams such as voice, video, text, control information, and the like, and multiple modes of data streams may also be referred to as multi-modality flows. Multi-modality flows usually require synchronization among data streams. For example, a voice data stream, a video data stream, and a subtitle data stream need to be synchronously displayed to a user. At present, multi-modality flows can only be synchronized at an application layer, that is, the received multi-modality flows are cached at the application layer, and data frames of different data streams in the multi-modality flows are extracted according to timestamps for playing the data streams, and the data frames of different data streams are synchronously displayed to the user.

In a scenario where multi-modality is considered in XR, current solutions cannot fully meet multi-modality requirements, such as meeting synchronization requirements or coordination requirements of multi-modality. There is currently no clear solution on how to implement support and enhancement for multi-modality. For example, there is currently no clear solution on how to support coordinated transmission for multi-modality flows with a single terminal device, or how to enable application synchronization and QoS policy coordination for Multi-modal Data flows among multiple terminal devices.

In addition, since service transmission has delay requirements, it is necessary to consider how to take delay into account in scheduling and perform delay-based scheduling, otherwise, delay requirements of services may not be met.

In view of the above problems, embodiments of the present disclosure provide a wireless communication method. A terminal device may perform an operation related to a transmission priority of data based on first information, so that data can be transmitted according to a corresponding priority, thereby facilitating meeting requirements of data on, for example, synchronization, coordination, or delay.

The wireless communication method according to the embodiments of the present disclosure will be described below with reference to FIG. 2 and FIG. 3.

FIG. 2 is a schematic flowchart of a wireless communication method provided by an embodiment of the present disclosure. The method shown in FIG. 2 includes operation S210.

In operation S210, a terminal device performs a first operation based on first information. The first operation is related to LCH processing.

The first information may be determined by the terminal device itself or indicated by a network device, which is not limited in the embodiment of the present disclosure.

FIG. 3 is a schematic flowchart of another wireless communication method provided by an embodiment of the present disclosure. The method shown in FIG. 3 includes operation S310.

In operation S310, a network device sends second indication information to a terminal device, and the second indication information may be used to indicate the first information.

The solutions described below are applicable to both FIG. 2 and FIG. 3.

The first information is not restricted in the embodiments of the present disclosure. As an example, the first information may include information associated with target information. As another example, the first information may include second information associated with time information. The two cases will be described below respectively.

In some implementations, the first information may include information associated with target information. In some implementations, the information associated with target information may include an index or an identifier of the target information, and the like. In some implementations, the first information may include target information.

In some embodiments, the target information includes one or more of: multi-modality information, information with a consistent-transmission requirement, information with a coordinated-transmission requirement (also referred to as coordination information), information with a synchronous-transmission requirement (also referred to as synchronization information).

In some implementations, multi-modality information may also be referred to as synchronization and/or coordination information (sync/coordination info), or information associated with synchronization and/or coordination.

In some implementations, the information associated with target information may be used to identify or mark an object (e.g., a first object) involved in the embodiments of the present disclosure. In some implementations, the information associated with target information may be used to identify or mark one or more of the following information: an object having a first relationship; an object on which a first operation is required to be performed based on the first information; and an object corresponding to the target information.

In some implementations, a granularity of the target information may include one or more of: a quality of service (QoS) flow, a data stream, an LCH (LCH), an LCH group (LCG), a data radio bearer (DRB), and a data packet. That is, the target information may be divided according to the above granularities. Taking the target information including multi-modality information as an example, the target information may include one or more of: multi-modality information for a QoS flow, multi-modality information for a data stream, multi-modality information for an LCH, multi-modality information for a LCG, multi-modality information for a DRB, and multi-modality information for a data packet.

In some implementations, the first relationship may include one or more of: a multi-modality relationship, a relationship with a consistent-transmission requirement, a relationship with a coordinated-transmission requirement (also referred to as a coordination relationship), and a relationship with a synchronous-transmission requirement (also referred to as a synchronization relationship).

In some implementations, the a consistent-transmission requirement may mean that the transmission requirements are the same or similar.

In some implementations, the first information may include second information related to time information, or the first information may include second information for time information.

The time information is not restricted in the embodiments of the present disclosure. The time information may be information related to time of data transmission. As an example, the time information may include one or more of: information indicated by a timestamp, decoding time, transmission time, generation time of a data packet, expected reception time of a network device, required reception time of the network device, required display time of the network device, delay, remaining delay information, latest transmission time of the data packet, packet delay budget (PDB) time, and PDU set delay budget (PSDB) time.

In some embodiments, the data packet in the embodiments of the present disclosure may be one or more of: a service data unit (SDU), a control protocol data unit (PDU), a PDU set, a data burst, and the like. The data packet in the embodiments of the present disclosure may be one packet or multiple packets (e.g., a bunch of packets).

The above time information is exemplified below. The information indicated by a timestamp may be a time indicated by a timestamp carried by data. The decoding time may be a time required for decoding a data packet or a time when data should be decoded. The transmission time may refer to a time when data is transmitted or a time when data should be transmitted. The generation time of a data packet may refer to a time when the terminal device generates a data packet. The expected reception time of a network device may refer to a time when the network device expects to receive a data packet. The required reception time of the network device may refer to a time when the network device needs to receive a data packet. The delay may refer to a delay of a data packet. The remaining delay information may refer to a remaining delay of a data packet. The latest transmission time of the data packet may refer to a latest transmission time of a data packet under the condition of meeting a delay requirement. The PDB time may refer to a maximum allowable transmission delay of a data packet. The PSDB time may refer to a maximum allowable transmission delay of a PDU set.

In some implementations, the second information includes remaining delay information. In some embodiments, the second information may include remaining delay information of a second object. In some embodiments, the second information may include remaining delay information of all objects of the second object or remaining delay information of some objects of the second object. The some objects may include one or more of: an object with a shortest remaining delay, an object with a longest remaining delay, an object with a remaining delay less than or equal to a preset threshold, and an object with a remaining delay greater than or equal to a preset threshold.

In some implementations, the second information may include a latest time required for a data packet. In some embodiments, the second information may include a latest time required for a data packet of a second object. In some embodiments, the latest time required for a data packet may refer to a latest time when the data packet needs to be transmitted or a latest transmission time of the data packet.

In some embodiments, the second information may be related to target data, or the second information may be time information for target data, or the second information may be related to a target service, or the second information may be time information for a target service. In other embodiments, the second information is related to data with a consistent-time requirement. Data with a consistent-time requirement may refer to data with the same time information or similar time information. Similar time information may mean that a difference between the time information is less than or equal to a preset threshold.

In some embodiments, the target service may include one or more of: a multi-modality service, a service with a synchronous-transmission requirement, a service with a coordinated-transmission requirement, and a service with a delay requirement.

In some implementations, the second information includes time information for a second object. The number of second objects may be one or more than one, which is not limited in the embodiments of the present disclosure.

The second object is not limited in the embodiments of the present disclosure. As an example, the second object may include a first object. As another example, the second object may include some objects of the first object. As another example, the second object may include one or more of: an object having a first relationship; an object having data to be transmitted among objects having a first relationship; an object with a shortest delay tolerance among objects having a first relationship; an object with a longest delay tolerance among objects having a first relationship; an object with consistent time information among objects having a first relationship; a specific object having a first relationship; an object with consistent time information; an object satisfying a third condition; an object reporting the first information; and an object having time information and whose time information satisfies a preset condition. The above second object will be described below respectively.

In some implementations, the second object may include an object having a first relationship. In other words, as long as the first relationship exists among multiple objects, the multiple objects belong to the second object. That is, the second object may include all objects having the first relationship. For example, when the first relationship exists between object 1 and object 2, the second object may include object 1 and object 2.

In some embodiments, the second object may be some objects of the objects having the first relationship. For example, the second object may be one object of the objects having a first relationship, or the second object may be a specific object of the objects having a first relationship, or the second object may be one or more objects satisfying a condition among the objects having the first relationship. An example is given below.

In some implementations, the second object may include an object having data to be transmitted among objects having a first relationship. When the first relationship exists among multiple objects, some objects may have completed data transmission, some objects may have untransmitted data, and some objects may have partially transmitted data but still have untransmitted data. The second object in the embodiments of the present disclosure may refer to an object still having data to be transmitted, and the data to be transmitted may refer to untransmitted data or data remained after partial data transmission.

In some implementations, the objects included in the second object are related to delay tolerance of the objects. Delay tolerance may be understood as a tolerable delay. As an example, the second object may include an object having a first relationship and whose delay tolerance is less than or equal to a preset threshold. As another example, the second object may include an object with a shortest delay tolerance among objects having a first relationship. As another example, the second object may include an object having a first relationship and whose delay tolerance is greater than or equal to a preset threshold. As another example, the second object may include an object with a longest delay tolerance among objects having a first relationship.

In some implementations, the second object may include an object with consistent time information among objects having a first relationship. Consistent time information may mean that the time information is the same or similar. Similar time information may mean that a difference between the time information is less than or equal to a preset threshold. Taking the time information as delay for example, assuming that objects having a first relationship include object 1, object 2, and object 3, the delays of object 1 and object 2 are both 1s, and the delay of object 3 is 5s. Since the delays of object 1 and object 2 are the same, and the delay of object 3 is greatly different from the delays of object 1 and object 2, the second object includes object 1 and object 2, but not object 3.

In some implementations, the second object may include a specific object, for example, the second object may include a specific object having a first relationship.

In some implementations, the specific object may be an object indicated by a network device, an object predefined in a protocol, a default object, or the like. In some implementations, the specific object may be an object with a smallest index, an object with a largest index, an object with a shortest delay, an object with a longest delay, or the like.

In some implementations, the second object may include an object with consistent time information. Consistent time information may mean that the time information is the same or similar.

In some implementations, the second object may include one object of the an object with consistent time information. Consistent time information may mean that the time information is the same or similar.

In some implementations, the second object may include an object having time information. In some implementations, the second object may include an object whose time information satisfies a preset condition.

In some implementations, the second object may include an object satisfying a third condition or a first object satisfying a third condition. The third condition may be a trigger condition. The trigger condition may be a condition for triggering generation of an object or a condition for triggering use of an object. Taking an object as an LCH for example, the trigger condition may include one or more of: a condition for triggering reporting of information corresponding to the LCH, a condition for triggering generation of a medium access control packet data unit (MAC PDU) containing information corresponding to the LCH, and a condition for triggering generation of an uplink grant containing information corresponding to the LCH. The above corresponding LCH may be an LCH corresponding to the object. Taking an object as a quality of service (QoS) flow for example, the trigger condition may include one or more of: a condition for triggering reporting of information corresponding to the QoS flow, a condition for triggering generation of a MAC PDU containing information corresponding to the QoS flow, and a condition for triggering generation of an uplink grant containing information corresponding to the QoS flow.

In some implementations, the third condition may be related to time information, that is, whether the third condition is satisfied may be determined based on time information. Taking time information including delay for example, the third condition may be determined based on the delay. For example, when the delay is less than or equal to a preset threshold, it indicates that the third condition is satisfied.

In some implementations, the second object may include an object reporting the first information. Correspondingly, the second information may include delay information in a case where the second object reports the first information.

In some implementations, the second information may be related to time information of the second object or time information corresponding to a data packet of the second object, which is not limited in the embodiments of the present disclosure. An example is given below.

In some implementations, the second information includes time information of the second object. For example, assuming that the second object includes object 1 and object 2, the time information of object 1 is x, and the time information of object 2 is y, then the second information includes x and y.

In some implementations, the time information of the second object may include time information of a data packet of the second object.

In some implementations, the second information includes a difference between time information of any two objects among the plurality of second objects. For example, assuming that the second object includes object 1 and object 2, the time information of object 1 is x, and the time information of object 2 is y, then the second information may include a difference between x and y.

In some implementations, the second information includes a difference between time information of one object of the second object and time information of another object. The another object may be a reference object, and the reference object may be any object of the second object or a specific object of the second object. The second information may include a difference between time information of any object of the second object and time information of the reference object. For example, assuming that the second object includes object 1, object 2, and object 3, object 3 is a reference object, the time information of object 1 is x, the time information of object 2 is y, and the time information of object 3 is z, then the second information may include a difference between x and z, and a difference between y and z.

In some embodiments, the second information may be time information for a data packet. In some implementations, the second information may include time information of a data packet of the second object. The data packet of the second object may refer to a data packet corresponding to the second object or a data packet transmitted in the second object. Taking the second object as a QoS flow for example, the data packet of the second object may refer to a data packet corresponding to the QoS flow. Taking the second object as an LCH for example, the data packet of the second object may be a data packet transmitted in the LCH.

In some implementations, the second information includes a difference betweeen time information corresponding to first data packets of any two objects of the second object.

In some implementations, the first data packet may refer to a data packet with shortest time information.

For example, assuming that the second object includes object 1 and object 2, the data packets of object 1 include data packet a and data packet b, the time information of data packet a is x, the time information of data packet b is y, the data packets of object 2 include data packet m and data packet n, the time information of data packet m is p, the time information of data packet n is q, when x is less than y, the first data packet of object 1 is data packet a, and when p is less than q, the first data packet of object 2 is data packet m. In this case, the second information may include a difference between x and p.

In some implementations, the second information includes a difference between time information corresponding to second data packets of any two objects of the second object.

In some implementations, the second data packet may refer to a data packet with longest time information.

For example, assuming that the second object includes object 1 and object 2, the data packets of object 1 include data packet a and data packet b, the time information of data packet a is x, the time information of data packet b is y, the data packets of object 2 include data packet m and data packet n, the time information of data packet m is p, the time information of data packet n is q, when x is greater than y, the second data packet of object 1 is data packet a, and when p is greater than q, the second data packet of object 2 is data packet m. In this case, the second information may include a difference between x and p.

In some implementations, the second information may include a difference between time information of a first data packet of one object of the second object and time information of a first data packet of another object. The another object may be a reference object, and the reference object may be any object of the second object or a specific object. The second information may include a difference between time information of a first data packet of any object of the second object and time information of a first data packet of the reference object.

For example, assuming that the second object includes object 1, object 2, and object 3, object 3 is a reference object, the time information of the first data packet of object 1 is x, the time information of the first data packet of object 2 is y, and the time information of the first data packet of object 3 is z, then the second information may include a difference between x and z, and a difference between y and z.

In some implementations, the second information may include a difference between time information of a second data packet of one object of the second object and time information of a second data packet of another object. The another object may be a reference object. The second information may include a difference between time information of a second data packet of any object of the second object and time information of a second data packet of the reference object. Assuming that the second object includes object 1, object 2, and object 3, object 3 is a reference object, the time information of the second data packet of object 1 is x, the time information of the second data packet of object 2 is y, and the time information of the second data packet of object 3 is z, then the second information may include a difference between x and z, and a difference between y and z.

In some implementations, the second information may include time information of first data packets of the second object. For example, assuming that the second object includes object 1 and object 2, the time information of the first data packet of object 1 is x, and the time information of the first data packet of object 2 is y, then the second information includes x and y.

In some implementations, the second information may include time information of second data packets of the second object. For example, assuming that the second object includes object 1 and object 2, the time information of the second data packet of object 1 is x, and the time information of the second data packet of object 2 is y, then the second information includes x and y.

In some implementations, the second information is related to a first protocol layer. The first protocol layer may include a radio link control (RLC) layer and/or a packet data convergence protocol (PDCP) layer. In some implementations, when the second information is related to time information, the first protocol layer may include one or more of: an RLC layer, a PDCP layer, an application layer, and a service data adaptation protocol (SDAP) layer.

In some implementations, the first protocol layer is configured to perform a third operation, and the third operation includes one or more of: determining second information, maintaining the second information, calculating the second information, and transmitting the second information to a second protocol layer.

In some implementations, the second protocol layer may include one or more of: a MAC layer and an RLC layer.

In some implementations, when the first protocol layer includes an RLC layer, the second protocol layer may include a MAC layer; when the first protocol layer includes a PDCP layer, the second protocol layer may include an RLC layer and a MAC layer.

In some implementations, the first protocol layer may perform the third operation under any circumstances. In some implementations, the first protocol layer may perform the third operation when a fourth condition is satisfied.

The fourth condition is not liminted in the embodiments of the present disclosure. In some implementations, the fourth condition may include one or more of: a condition related to a period, a first execution condition, reception of a request message from a MAC layer, and determination by the MAC layer that a second execution condition is satisfied.

Taking the fourth condition including the condition related to a period for example, the first protocol layer may perform the third operation periodically, that is, the first protocol layer may perform the third operation per interval.

Taking the fourth condition including the first execution condition for example, the first protocol layer may perform the third operation when the first execution condition is satisfied. The first execution condition may be configured by a network device or predefined in a protocol. For example, the network device may configure a condition for performing the third operation for the first protocol layer. In some implementations, the first execution condition may include reception of data. In some implementations, the first execution condition may include that a data volume of received data is greater than or equal to a preset threshold.

Taking the fourth condition including reception of a request message from a MAC layer for example, the first protocol layer may perform the third operation when receiving a request message from the MAC layer. The request message may be used to request execution of the third operation.

Taking the fourth condition including determination by the MAC layer that a second execution condition is satisfied for example, the first protocol layer may perform the third operation when the MAC layer determines that the second execution condition is satisfied. The second execution condition may be for the MAC layer, that is, the second execution condition may be determined by the MAC layer. The second execution condition may be configured by a network device or predefined in a protocol. For example, the network device may configure, for the first protocol layer, a condition for performing the third operation. In some implementations, the second execution condition may include reception of data. In some implementations, the second execution condition may include that a data volume of received data is less than or equal to a preset threshold.

The above fourth conditions may be implemented independently or in combination with each other. As an example, the first protocol layer may perform the third operation when the MAC layer determines that the execution condition is satisfied and the MAC layer sends a request message to the first protocol layer. As another example, the first protocol layer may perform the third operation when the first execution condition is satisfied and the condition related to a period is satisfied.

A manner of determining the second information is not liminted in the embodiments of the present disclosure. A manner of determining the second information will be described in detail below.

In some embodiments, the second information may be determined based on one or more of: a second timer; a time when a data packet arrives at the first protocol layer; a waiting time of the data packet at the first protocol layer; a time for decoding the data packet; a time for receiving a data packet; a PDB of the data packet; a PSDB of the data packet; time information carried in the data packet; timestamp information of the data packet; and time information indicated by a higher layer. The above information will be described in detail below.

In some implementations, the second information may be determined based on the second timer. The second timer may be a data packet discard timer. As an example, the second timer may be a PDCP timer, for instance, a PDCP discard timer. When the second timer expires, a corresponding data packet is discarded, that is, the corresponding data packet will not be transmitted. Therefore, the second timer may influence decoding time, transmission time, generation time of the data packet, latest transmission time of the data packet, PDB time, PSDB time, and the like. In some embodiments, the second timer may be a basis for determining one or more of: decoding time, transmission time, generation time of a data packet, latest transmission time of the data packet, PDB time, PSDB time, and so on.

In some implementations, the second information may be determined based on a time when a data packet arrives at the first protocol layer. The earlier the data packet arrives at the first protocol layer, the longer time is reserved for subsequent operations. The time when the data packet arrives at the first protocol layer may influence subsequent transmission of the data, and thus may influence decoding time, transmission time, generation time of the data packet, delay, remaining delay, latest transmission time of the data packet, PDB time, PSDB time, and the like. In some embodiments, one or more of the following may be determined according to the time when the data packet arrives at the first protocol layer: decoding time, transmission time, generation time of the data packet, latest transmission time of the data packet, PDB time, PSDB time, and so on.

In some implementations, the second information may be determined based on a time for decoding a data packet. The earlier the time for decoding the data packet, the longer time is reserved for subsequent operations. The time for decoding the data packet may influence operations after the data packet is decoded, and thus may influence transmission time, generation time of the data packet, delay, remaining delay, latest transmission time of the data packet, PDB time, PSDB time, and the like. In some embodiments, the time for decoding a data packet may be a basis to determine one or more of: transmission time, generation time of the data packet, latest transmission time of the data packet, PDB time, PSDB time, and so on.

In some implementations, the second information may be determined based on a time for receiving a data packet. The time for receiving a data packet may be a time when a network device receives the data packet. The later the time for receiving a data packet, the longer time is reserved for the terminal device to generate the data packet. The time for receiving a data packet may influence data packet generation, and thus may influence decoding time, transmission time, generation time of a data packet, delay, remaining delay, latest transmission time of the data packet, PDB time, PSDB time, and the like. In some embodiments, the time for receiving a data packet may be a basis for determining one or more of: decoding time, transmission time, generation time of the data packet, latest transmission time of the data packet, PDB time, PSDB time, and so on.

In some implementations, the second information may be determined based on a PDB of a data packet. The PDB of the data packet influences final transmission of the data packet. Decoding time, transmission time, generation time of the data packet, delay, remaining delay, latest transmission time of the data packet, and the like may be determined based on the PDB of the data packet. Therefore, in some embodiments, the time for receiving a data packet may be a basis for determining one or more of: decoding time, transmission time, generation time of the data packet, delay, remaining delay, latest transmission time of the data packet.

In some implementations, the second information may be determined based on a PSDB of a data packet. The PSDB of the data packet influences final transmission of the data packet. Decoding time, transmission time, generation time of the data packet, delay, remaining delay, latest transmission time of the data packet, and the like may be determined according to the PSDB of the data packet. Therefore, in some embodiments, the time for receiving a data packet may be a basis for determining one or more of: decoding time, transmission time, generation time of the data packet, delay, remaining delay, latest transmission time of the data packet.

In some implementations, the second information may be determined based on time information carried in a data packet. The time information carried in the data packet may include timestamp information of the data packet. The timestamp information of the data packet may indicate transmission time of the data packet. The later the time indicated by the timestamp information of the data packet, the longer time is reserved for subsequent operations. The timestamp information of the data packet may influence decoding time, transmission time, generation time of the data packet, latest transmission time of the data packet, PDB time, PSDB time, and the like. In some embodiments, the timestamp information of the data packet may be a basis for determining one or more of: decoding time, transmission time, generation time of the data packet, latest transmission time of the data packet, PDB time, PSDB time, and so on.

For example, the time indicated by the timestamp information of the data packet may be a basis for determining one or more of: time when data needs to be transmitted, time when data needs to arrive at a receiving end, time when decoding needs to be performed, remaining time, and the like.

In some implementations, the second information may be determined based on time information indicated by a higher layer. As an example, the higher layer may directly indicate corresponding time information. For example, the higher layer may directly indicate one or more of: information indicated by a timestamp, decoding time, transmission time, generation time of a data packet, expected reception time of a network device, required reception time of the network device, delay, remaining delay, latest transmission time of the data packet, PDB time, and PSDB time.

In some implementations, in certain scenarios, for the above time information, shortest time information may be replaced with smallest time information or earliest time information, and longest time information may be replaced with largest time information or latest time information. For example, when the time information is transmission time, the shortest time information may refer to earliest transmission time, and the longest time information may refer to latest transmission time.

The first operation will be described in detail below.

In some implementations, the first operation may be an operation performed on data of a first object, in other words, the first operation may be used to transmit data of the first object. As an example, the first operation may be an operation on multi-modality data. As another example, the first operation may be an operation on data with a transmission delay requirement. As yet another example, the first operation may be an operation on data with a transmission delay requirement among multi-modality data.

In some implementations, the first operation is related to LCH processing. In other words, the first operation may be an operation on an LCH. By processing the LCH, data carried on the LCH may be adjusted, thereby adjusting transmission of the data.

The first operation is related to a priority of the LCH.

In some implementations, the first operation may be related to a priority of the LCH. As an example, the first operation includes adjusting a priority of a first LCH. That is, the terminal device may adjust the priority of the first LCH based on the first information.

In some implementations, the first LCH is related to the first information or data of the first object. In other words, the first LCH may be used to transmit data of the first object.

In some implementations, the first LCH is an LCH corresponding to the first object. In some embodiments, the first LCH may be an LCH transmitting the first object. The first object will be described in detail below.

In some implementations, an object involved in the embodiments of the present disclosure may refer to one or more of: a QoS flow, a PDU session, a DRB, a DRB group, a LCG, an LCH, and a data packet.

In some implementations, the first object satisfies one or more of: priorities of a plurality of LCHs included in the first LCH are the same; the priority of the first LCH is higher than priorities of other LCHs than the first LCH; the first LCH is transmitted preferentially compared with a second LCH, where the priority of the first LCH is the same as a priority of the second LCH; the first LCH is transmitted with low priority compared with a third LCH, where the priority of the first LCH is the same as a priority of the third LCH; both the first LCH and a fourth LCH correspond to a first priority and a second priority, the first priority of the first LCH is the same as the first priority of the fourth LCH, and the second priority of the first LCH is higher than the second priority of the fourth LCH; both the first LCH and a fifth LCH correspond to a third priority and a fourth priority, the third priority of the first LCH is the same as the third priority of the fifth LCH, and the fourth priority of the first LCH is lower than the fourth priority of the fifth LCH.

In some implementations, the priorities of the plurality of LCHs included in the first LCH are the same.

For example, assuming that both LCH1 and LCH2 are first LCHs, it may be considered that LCH1 and LCH2 have the same priority. By setting the priorities of the first LCHs to be the same, services of the first object may be transmitted simultaneously or as simultaneously as possible. Taking the first object including an object with a synchronization requirement as an example, by setting the priorities of the first LCHs to be the same, services with a synchronization requirement may be transmitted simultaneously or as simultaneously as possible, so as to meet transmission requirements of the services.

In some implementations, the priority of the first LCH is higher than priorities of other LCHs. The other LCHs may refer to LCHs other than the first LCH. The other LCHs may refer to LCHs transmitting other services or other data, in other words, the other LCHs may be used to transmit other data than data of the first object. Since the priority of the first LCH is higher than the priorities of the other LCHs, data of the first object may be transmitted preferentially or as soon as possible, so as to meet transmission requirements of the data.

For example, assuming that both LCH1 and LCH2 are first LCHs, the priority of LCH1 and LCH2 is 3, and the priority of LCH3 is 4, it may be considered that LCH1 and LCH2 have the same priority and the priority is higher than that of LCH3.

In some implementations, the priority of the first LCH is lower than priorities of other LCHs. The other LCHs may refer to LCHs other than the first LCH. The other LCHs may refer to LCHs transmitting other services or other data, in other words, the other LCHs may be used to transmit other data than data of the first object. Since the priority of the first LCH is lower than the priorities of the other LCHs, data of the first object may be transmitted with low priority or not transmitted. In some scenarios, for example, when data of the first object is too late to be transmitted or transmission delay cannot meet requirements, continuing to transmit data of the first object will waste transmission resources and affect transmission of other data. The solution in the embodiments of the present disclosure can avoid waste of transmission resources and impact on other transmitted data.

For example, assuming that both LCH1 and LCH2 are first LCHs, the priority of LCH1 and LCH2 is 3, and the priority of LCH3 is 1, it may be considered that LCH1 and LCH2 have the same priority and the priority is lower than that of LCH3.

In some implementations, the first LCH is transmitted preferentially compared with the second LCH, where the priority of the first LCH is the same as a priority of the second LCH. In other words, the priority of the first LCH is in a preferential position among LCHs with the same priority. For example, assuming that the first LCH includes LCH1 and LCH2, the priority of LCH1 and LCH2 is 3, and LCHs with priority 3 further include LCH3, it may be considered that LCH1 and LCH2 are in a preferential position compared with LCH3, or LCH1 and LCH2 are transmitted preferentially.

As an example, assuming that LCH1 and LCH2 are first LCHs, and the priority of LCH1, LCH2 and LCH3 is 3, when a new grant can include all data of LCH1 and LCH2, it may be considered that LCH1 and LCH2 are in a preferential position compared with LCH3, or LCH1 and LCH2 are transmitted preferentially.

As another example, LCH1 is an LCH with a delay requirement, or a delay of LCH1 satisfies a condition for triggering an LCH condition, or a delay of LCH1 is less than a preset threshold, and both LCH1 and LCH2 have a priority of 3, it may be considered that LCH1 is in a preferential position compared with LCH2, or LCH1 is transmitted preferentially.

As yet another example, LCH1 is an LCH with a delay requirement, or a delay of LCH1 satisfies a condition for triggering an LCH condition, or a delay of LCH1 is less than a first threshold; in addition, the new grant can carry data of LCH1 or a delay of LCH1 is not less than a second threshold, where the second threshold is lower than the first threshold; when both LCH1 and LCH2 have a priority of 3, it may be considered that LCH1 is in a preferential position compared with LCH2, or LCH1 is transmitted preferentially.

In some implementations, an LCH priority of the first object is a second priority, and the LCH priority of the first object is lower than priorities of other LCHs in the second priority. In other words, the LCH priority of the first object is in a lower-priority position among LCHs with the same priority. For example, assuming that LCHs of the first object include LCH1 and LCH2, the priority of LCH1 and LCH2 is 3, and LCHs with priority 3 further include LCH3, it may be considered that LCH1 and LCH2 are in a lower-priority position compared with LCH3, or LCH1 and LCH2 are transmitted with low priority.

As an example, assuming that LCH1 and LCH2 are LCHs of the first object (such as an object with a synchronization requirement), and the priority of LCH1, LCH2 and LCH3 is 3, when a new grant cannot include all data of LCH1 and LCH2, it may be considered that LCH1 and LCH2 are in a preferential position compared with LCH3, or LCH1 and LCH2 are transmitted preferentially.

As another example, LCH1 is an LCH with a delay requirement, or a delay of LCH1 satisfies a condition for triggering an LCH condition, or a delay of LCH1 is less than a preset threshold, and both LCH1 and LCH2 have a priority of 3, it may be considered that LCH1 is in a lower-priority position compared with LCH2, or LCH1 is transmitted with low priority.

As yet another example, LCH1 is an LCH with a delay requirement, or a delay of LCH1 satisfies a condition for triggering an LCH condition, or a delay of LCH1 is less than a first threshold; in addition, the new grant cannot carry data of LCH1 or a delay of LCH1 is less than a second threshold, where the second threshold is lower than the first threshold; when both LCH1 and LCH2 have a priority of 3, it may be considered that LCH1 is in a lower-priority position compared with LCH2, or LCH1 is transmitted with low priority.

In some implementations, both the first LCH and the fourth LCH correspond to a first priority and a second priority, the first priority of the first LCH is the same as the first priority of the fourth LCH, and the second priority of the first LCH is higher than the second priority of the fourth LCH. The first priority may also be referred to as a primary priority, and the second priority may be referred to as a sub-priority. In other words, a sub-priority of an LCH of the first object is higher than sub-priorities of other LCHs with the same primary priority. By setting the sub-priority, priorities of different LCHs may be determined more clearly.

For example, assuming that an LCH of the first object is LCH1, and both LCH1 and LCH2 have a first priority of 3, it may be considered that the second priority of LCH1 is 1 and the second priority of LCH2 is 2, that is, the priority of LCH1 is 3.1 and the priority of LCH2 is 3.2.

Taking the first object as an object with a synchronization requirement as an example, assuming that LCH1 and LCH2 are objects with a synchronization requirement, and the first priority of LCH1, LCH2 and LCH3 is 3, it may be considered that the second priority of LCH1 and LCH2 is 1 (final priority is 3.1), and the second priority of LCH3 is 2 (final priority is 3.2).

As an example, assuming that LCH1 and LCH2 are LCHs of the first object (such as an object with a synchronization requirement), and the first priority of LCH1, LCH2 and LCH3 is 3, when a new grant can include all data of LCH1 and LCH2, it may be considered that the second priority of LCH1 and LCH2 is 1 (final priority is 3.1), and the second priority of LCH3 is 2 (final priority is 3.2).

As another example, LCH1 is an LCH with a delay requirement, or a delay of LCH1 satisfies a condition for triggering an LCH condition, or a delay of LCH1 is less than a preset threshold, and both LCH1 and LCH2 have a first priority of 3, it may be considered that the second priority of LCH1 is 1 (final priority is 3.1), and the second priority of LCH2 is 2 (final priority is 3.2).

As yet another example, LCH1 is an LCH with a delay requirement, or a delay of LCH1 satisfies a condition for triggering an LCH condition, or a delay of LCH1 is less than a first threshold; in addition, the new grant can carry data of LCH1 or a delay of LCH1 is not less than a second threshold, where the second threshold is lower than the first threshold; when both LCH1 and LCH2 have a first priority of 3, it may be considered that the second priority of LCH1 is 1 (final priority is 3.1), and the second priority of LCH2 is 2 (final priority is 3.2).

In some implementations, both the first LCH and the fifth LCH correspond to a third priority and a fourth priority, the third priority of the first LCH is the same as the third priority of the fifth LCH, and the fourth priority of the first LCH is lower than the fourth priority of the fifth LCH. By setting the fourth priority, priorities of different LCHs may be determined more clearly. For example, assuming that an LCH of the first object is LCH1, and both LCH1 and LCH2 have a third priority of 3, it may be considered that the fourth priority of LCH1 is 2 and the fourth priority of LCH2 is 1, that is, the priority of LCH1 is 3.2 and the priority of LCH2 is 3.1.

Taking the first object as an object with a synchronization requirement as an example, assuming that LCH1 and LCH2 are objects with a synchronization requirement, and the third priority of LCH1, LCH2 and LCH3 is 3, it may be considered that the fourth priority of LCH1 and LCH2 is 1 (final priority is 3.2), and the fourth priority of LCH3 is 2 (final priority is 3.1).

As an example, assuming that LCH1 and LCH2 are LCHs of the first object (such as an object with a synchronization requirement), and the third priority of LCH1, LCH2 and LCH3 is 3, when a new grant cannot include all data of LCH1 and LCH2, it may be considered that the fourth priority of LCH1 and LCH2 is 2 (final priority is 3.2), and the fourth priority of LCH3 is 1 (final priority is 3.1).

As another example, LCH1 is an LCH with a delay requirement, or a delay of LCH1 satisfies a condition for triggering an LCH condition, or a delay of LCH1 is less than a preset threshold, and both LCH1 and LCH2 have a third priority of 3, it may be considered that the fourth priority of LCH1 is 2 (final priority is 3.2), and the fourth priority of LCH2 is 1 (final priority is 3.1).

As yet another example, LCH1 is an LCH with a delay requirement, or a delay of LCH1 satisfies a condition for triggering an LCH condition, or a delay of LCH1 is less than a first threshold; in addition, the new grant cannot carry data of LCH1 or a delay of LCH1 is less than a second threshold, where the second threshold is lower than the first threshold; when both LCH1 and LCH2 have a third priority of 3, it may be considered that the fourth priority of LCH1 is 2 (final priority is 3.2), and the fourth priority of LCH2 is 1 (final priority is 3.1).

In some implementations, LCH1 is an LCH with a delay requirement, or a delay of LCH1 satisfies a condition for triggering an LCH condition, or a delay of LCH1 is less than a preset threshold; under the condition of ensuring fairness of an existing priority and/or prioritised bit rate (PBR)-based, all data of LCH1 is transmitted before a PDB deadline, or data of LCH1 is not transmitted.

In some implementations, LCH1 and LCH2 are objects with a synchronization requirement; while ensuring existing priority and/or PBR-based fairness, data of LCH1 and LCH2 is fully transmitted, or fully transmitted as much as possible, or transmitted together, or transmitted together as much as possible, or not transmitted at all.

The foregoing manners of determining the priority of the first LCH may be implemented independently or in combination with each other. As an example, priorities of a plurality of LCHs included in the first LCH are the same, and the priority of the first LCH is higher than priorities of other LCHs than the first LCH, which can not only ensure that data on the first LCH is transmitted together, but also ensure that data of the first LCH is transmitted preferentially over data of other LCHs, thereby ensuring a delay requirement, a synchronization requirement, and the like of data on the first LCH. As another example, priorities of a plurality of LCHs included in the first LCH are the same, and the first LCH is transmitted preferentially compared with the second LCH, where the priority of the first LCH is the same as a priority of the second LCH, which can not only ensure that data on the first LCH is transmitted together, but also ensure that data of the first LCH is transmitted preferentially over data of the second LCH, thereby ensuring a delay requirement, a synchronization requirement, and the like of data on the first LCH.

The first operation includes determining whether to perform a first action or performing the first action.

In some implementations, the first operation includes determining whether to perform the first action, or performing the first action. As an example, the terminal device may determine whether to perform the first action based on the first information. As another example, the terminal device may perform the first action based on the first information.

In some implementations, the terminal device may determine whether to perform the first action according to third information. The third information may include one or more of: a delay of the first object, whether multi-modality data includes time information, current time, an indication from a network device, and the like. As an example, when the delay of the first object is less than or equal to a preset threshold, the terminal device may perform the first action; when the delay of the first object is greater than the preset threshold, the terminal device may not perform the first action. As another example, when the multi-modality data includes time information, the terminal device may perform the first action; when the multi-modality data does not include time information, the terminal device may not perform the first action. As yet another example, when a time difference between time information of the multi-modality data and the current time is less than or equal to a preset threshold, the terminal device may perform the first action; when the time difference between time information of the multi-modality data and the current time is greater than the preset threshold, the terminal device may not perform the first action. As yet another example, when the terminal device receives indication information from the network device, the terminal device may perform the first action; when the terminal device does not receive indication information from the network device, the terminal device may not perform the first action.

In some implementations, the first action is related to one or more of: packetization of data of the first object, a transmission priority order of data of the first object, and an order of transmission resources carrying the data of the first object.

As an example, the first action is related to packetization corresponding to the first information. Packetization includes a process of composing data to be transmitted into data packets. For example, the first action may include a logical channel priority (LCP) procedure and/or a MAC PDU generation procedure.

As another example, the first action is related to a transmission order of data of the first object. The transmission order may include a transmission priority and/or a sequence order, and the like.

As yet another example, the first action is related to an order of transmission resources carrying the data of the first object. The order of transmission resources may include one or more of: a priority order of transmission resources, a usage order of transmission resources, and a priority of transmission resources. The transmission resources may include time-domain resources and/or frequency-domain resources.

In some implementations, the first action may be used for one or more of: preferentially transmitting the data of the first object in an uplink grant, transmitting the data of the first object with low priority in the uplink grant, preferentially transmitting the uplink grant carrying the data of the first object, and transmitting the uplink grant carrying the data of the first object with low priority. By performing the first action in the embodiments of the present disclosure, the terminal device may perform the foregoing operations or have an ability to perform the foregoing operations.

As an example, the first action may be used to preferentially transmit data of the first object in an uplink grant.

By preferentially transmitting the data of the first object, it can be ensured that the data of the first object is transmitted as soon as possible or preferentially, thereby facilitating meeting transmission requirements of the data.

As another example, the first action may be used to transmit the data of the first object with low priority in the uplink grant. By transmitting the data of the first object with low priority, it can be ensured that the data of the first object is transmitted with low priority or not transmitted. In some scenarios, for example, when the data of the first object is too late to be transmitted or transmission delay cannot meet requirements, continuing to transmit the data of the first object will waste transmission resources and affect transmission of other data. The solution in the embodiments of the present disclosure can avoid waste of transmission resources and impact on other transmitted data.

As yet another example, the first action is used to preferentially transmit an uplink grant carrying the data of the first object. By performing the first action in the embodiments of the present disclosure, the uplink grant may preferentially transmit or preferentially carry the data of the first object, which can ensure that data of the first object is transmitted as soon as possible or preferentially, thereby facilitating meeting transmission requirements of the data.

As yet another example, the first action is used to transmit an uplink grant carrying the data of the first object with low priority. By performing the first action in the embodiments of the present disclosure, the uplink grant may transmit the data of the first object with low priority or not transmit data of the first object, which facilitates avoiding waste of transmission resources and impact on other transmitted data.

In some implementations, the first action is related to one or more of: the first object, a first terminal device, and a second LCH.

In some implementations, the first terminal device may include one or more of: a terminal device with the first object, a terminal device that receives first indication information, a terminal device with the first indication information which indicates to enable the first action, and a terminal device that supports the first action.

In some implementations, the second LCH includes an LCH with the first object.

In some implementations, the first indication information is used to indicate the terminal device to perform the first operation based on the first information; or the first indication information is used to indicate whether the terminal device performs the first operation based on the first information; or the first indication information is used to indicate the terminal device to perform the first operation; or the first indication information is used to determine the first information.

In some implementations, the data of the first object may be preferentially carried in an uplink grant, so that the data of the first object may be transmitted preferentially to meet transmission requirements of the data (such as a delay requirement, a synchronization requirement, a coordination requirement, and the like).

In some implementations, the data of the first object may be carried with low priority in the uplink grant, so that the uplink grant may transmit the data of the first object with low priority or not transmit the data of the first object, which facilitates avoiding waste of transmission resources and impact on other transmitted data.

In some implementations, the data of the first object may not be carried in an uplink grant, so that in some scenarios, the uplink grant may not carry the data of the first object, which facilitates avoiding waste of transmission resources and impact on other transmitted data.

In some implementations, the data of the first object may not be carried in a specific uplink grant. In some scenarios, a specific grant may be dedicated to transmission of specific data; by not carrying data of the first object in the specific grant, impact of the data of the first object on specific data may be avoided.

In some implementations, the data of the first object is not carried within a time period. The time period may be a specific time period, a time period predefined by a protocol, a time period indicated by a network device, or a time period determined by the terminal device according to some policies. In some scenarios, more urgent or important data may need to be transmitted in the time period; by not transmitting the data of the first object in the time period, correct transmission of other data can be ensured.

In some implementations, the data of the first object may be carried simultaneously, for example, the data of the first object may be carried simultaneously in an uplink grant. By carrying the data of the first object simultaneously, a synchronization requirement, a coordination requirement, and the like of the data of the first object can be ensured.

As an example, assuming that LCH1 and LCH2 are the first object, the terminal device may perform the first action when the first indication information indicates to enable the first action. The first action may include carrying data of LCH1 and LCH2 simultaneously. As another example, taking the first action including performing a first LCP procedure and the first object being an object with a synchronization requirement as an example, assuming that LCH1 and LCH2 are objects with a synchronization requirement, the terminal device may perform the first LCP procedure when the first indication information indicates enable. The first LCP procedure may include carrying data of LCH1 and LCH2 simultaneously.

In some implementations, the data of the first object may be carried preferentially. By preferentially carrying the data of the first object, it can be ensured that the data of the first object is transmitted preferentially or as soon as possible, so as to meet transmission requirements of data of the first object.

As an example, assuming that LCH1 and LCH2 are the first object, the terminal device may perform the first action when the first indication information indicates to enable the first action. The first action may include preferentially carrying data of LCH1 and LCH2. As another example, taking the first action including performing a first LCP procedure and the first object being an object with a synchronization requirement as an example, assuming that LCH1 and LCH2 are objects with a synchronization requirement, the terminal device may perform the first LCP procedure when the first indication information indicates enable. The first LCP procedure may include preferentially carrying data of LCH1 and LCH2.

In some implementations, the data of the first object may be carried within a time period. The time period may be a specific time period, a time period predefined by a protocol, a time period indicated by a network device, or a time period determined by the terminal device according to some policies. The time period may be determined according to a delay requirement of data. By carrying the data of the first object within a time period, the data of the first object may be transmitted intensively within a time period, which facilitates meeting transmission requirements of the data.

In some implementations, the data of the first object may be carried with low priority, for example, the data of the first object is carried with low priority in the uplink grant. By carrying the data of the first object with low priority, the data of the first object may be transmitted with low priority or not transmitted, so as to avoid waste of transmission resources and impact on other transmitted data.

In some implementations, the data of the first object may be discarded. In some scenarios, the data of the first object is too late to be transmitted, or even when transmitted, cannot meet a delay requirement of the data, and the like. In this case, the data of the first object may be discarded, so as to avoid waste of transmission resources or impact on transmission of other data.

In some implementations, the data of the first object may not be carried, for example, the data of the first object may not be carried in an uplink grant. By not carrying the data of the first object, waste of transmission resources or impact on transmission of other data may be avoided.

In some implementations, performing the first action may include one or more of: performing a first packetization action, performing a first LCP procedure, and performing a first MAC PDU generation procedure.

In some implementations, performing the first packetization action may refer to a process of assembling data into data packets. The first packetization action may include a process of assembling data into data packets by a protocol layer. For example, the first packetization action may include a process of assembling data by a PDCP layer. As another example, the first packetization action may include a process of assembling data into data packets by an RLC layer. The first packetization action may influence an LCP procedure and/or a MAC PDU generation procedure. For example, data preferentially assembled will be preferentially transmitted, so that the data may be carried on an LCH with high priority, or the data will be preferentially used to generate a MAC PDU.

In some embodiments, performing the first LCP procedure may refer to a process of sorting priorities of first LCHs, so that priorities of the first LCHs may be determined.

In some embodiments, performing the first MAC PDU generation procedure may refer to a process of assembling data of the first object into a first MAC PDU.

In some embodiments, the first packetization action may be a packetization action for data of the first object. Performing the first packetization action may refer to performing packetization on data of the first object. In some embodiments, the first packetization action may influence a transmission order of data of the first object. For example, when data of the first object is preferentially packetized, the data of the first object may be preferentially transmitted. As another example, when data of the first object is packetized with low priority, the data of the first object may be transmitted with low priority. In some embodiments, the first packetization action may influence an order of transmission resources carrying the data of the first object. For example, when data of the first object is preferentially packetized, an order of transmission resources carrying the data of the first object may be higher. As another example, when data of the first object is packetized with low priority, an order of transmission resources carrying the data of the first object may be lower.

In some embodiments, performing the first LCP procedure may be a procedure for data of the first object. In some embodiments, the LCP procedure may influence a transmission order of data of the first object. For example, when a predicted delay of data of the first object is small or indicated time is small, the data of the first object may be preferentially transmitted. As another example, when a predicted delay of data of the first object is large or indicated time is late, the data of the first object may be transmitted with low priority. In some embodiments, the LCP procedure may influence an order of transmission resources carrying the data of the first object. For example, when a predicted delay of data of the first object is small or indicated time is small, an order of transmission resources carrying the data of the first object may be higher. As another example, when a predicted delay of data of the first object is large or indicated time is late, an order of transmission resources carrying the data of the first object may be lower.

In some embodiments, the first MAC PDU generation procedure may be a packetization action for data of the first object. Performing the first MAC PDU generation procedure may refer to performing a data packet generation procedure on data of the first object. In some embodiments, the first MAC PDU generation procedure may influence a transmission order of data of the first object. For example, when data of the first object is preferentially used to generate a MAC PDU, the data of the first object may be preferentially transmitted. As another example, when data of the first object is used to generate a MAC PDU with low priority, the data of the first object may be transmitted with low priority. In some embodiments, the first MAC PDU generation procedure may influence an order of transmission resources carrying the data of the first object. For example, when data of the first object is preferentially used to generate a MAC PDU, an order of transmission resources carrying the data of the first object may be higher. As another example, when data of the first object is used to generate a MAC PDU with low priority, an order of transmission resources carrying the data of the first object may be lower.

The solution in the embodiments of the present disclosure will be described below by an example in which the first action includes using an LCP procedure.

In some implementations, assuming that LCH1 and LCH2 are the first object, and a delay difference between data of LCH1 and LCH2 is less than a first threshold, and/or the first indication information indicates to enable a first LCP procedure, the terminal device performs the first LCP procedure. The first LCP procedure includes preferentially carrying data of LCH1 and LCH2, and/or simultaneously carrying data of LCH1 and LCH2.

In some implementations, assuming that LCH1 and LCH2 are the first object, and data of LCH1 has been transmitted or partially transmitted, the terminal device performs the first LCP procedure when condition 1 is satisfied. The condition 1 includes one or more of: a delay of data of LCH1 is less than a second threshold, a delay difference between data of LCH1 and LCH2 is less than a first threshold, and the first indication information indicates to enable the first action. The first LCP procedure includes preferentially carrying data of LCH1 and LCH2, and/or simultaneously carrying data of LCH1 and LCH2.

In some implementations, assuming that LCH1 and LCH2 are the first object, and data of LCH2 has been transmitted or partially transmitted, the terminal device performs the first LCP procedure when condition 2 is satisfied. The condition 2 includes one or more of: a delay of data of LCH2 is less than a third threshold, a delay difference between data of LCH1 and LCH2 is less than the first threshold, and the first indication information indicates to enable the first action. The first LCP procedure may include one or more of: carrying data of LCH1 and LCH2 with low priority, not carrying data of LCH1 and LCH2, discarding data (or remaining data) of LCH1 and LCH2, and enabling an uplink grant to preferentially carry data with low priority in LCH1 and LCH2.

In some implementations, assuming that LCH1 and LCH2 are the first object, the terminal device performs the first LCP procedure when condition 3 is satisfied. The condition 3 includes one or more of: data of LCH1 has been transmitted or partially transmitted, a delay of data of LCH1 is less than the second threshold, a delay difference between data of LCH1 and LCH2 is less than the first threshold, the first indication information indicates to enable the first action, and an uplink grant can carry data of LCH1 and LCH2. The first LCP procedure includes preferentially carrying data of LCH1 and LCH2, and/or simultaneously carrying data of LCH1 and LCH2.

In some implementations, assuming that LCH1 and LCH2 are the first object, the terminal device performs the first LCP procedure when condition 4 is satisfied. The condition 4 includes one or more of: data of LCH2 has been transmitted or partially transmitted, a delay of data of LCH2 is less than the third threshold, a delay difference between data of LCH1 and LCH2 is less than the first threshold, the first indication information indicates to enable the first action, and an uplink grant cannot carry data of LCH1 and LCH2. The first LCP procedure may include one or more of: carrying data of LCH1 and LCH2 with low priority, not carrying data of LCH1 and LCH2, discarding data (or remaining data) of LCH1 and LCH2, and enabling an uplink grant to preferentially carry data with low priority in LCH1 and LCH2.

In some implementations, the terminal device may perform the first LCP procedure when condition 4 is satisfied. The condition 4 includes one or more of: LCH1 and LCH2 are the first object, data of LCH1 has been transmitted or partially transmitted, data of LCH1 and LCH2 cannot be transmitted simultaneously, an uplink grant cannot carry data (or all data) of LCH1 and LCH2, an uplink grant within a first time period cannot carry data (or all data) of LCH1 and LCH2, and there is no uplink grant or additional uplink grant (additional UL grant) within the first time period. The first LCP procedure may include one or more of: carrying data of LCH1 and LCH2 with low priority, not carrying data of LCH1 and LCH2, discarding data (or remaining data) of LCH1 and LCH2, and enabling an uplink grant to preferentially carry data with low priority in LCH1 and LCH2.

In some implementations, the terminal device may perform the first LCP procedure when condition 5 is satisfied. The condition 5 includes one or more of: LCH1 is an LCH with a delay requirement, a delay of LCH1 satisfies a condition for triggering an LCH condition, a delay of LCH1 is less than a first threshold, data of LCH1 has been transmitted or partially transmitted, a delay of data of LCH1 is not less than a second threshold (where the second threshold is lower than the first threshold), the first indication information indicates to enable the first action, and an uplink grant can carry data of LCH1. The first LCP procedure may include preferentially carrying data of LCH1 and LCH2, and/or simultaneously carrying data of LCH1 and LCH2.

In some implementations, the terminal device may perform the first LCP procedure when condition 6 is satisfied. The condition 6 includes one or more of: LCH1 is an LCH with a delay requirement, a delay of LCH1 satisfies a condition for triggering an LCH condition, a delay of LCH1 is less than a first threshold, data of LCH1 has not been transmitted, a delay of data of LCH1 is less than a second threshold (the second threshold is lower than the first threshold), the first indication information indicates to enable the first action, and an uplink grant cannot carry data of LCH1. The first LCP procedure may include one or more of: carrying data of LCH1 with low priority, not carrying data of LCH1, discarding data (or remaining data) of LCH1, and enabling an uplink grant to preferentially carry data of an LCH with a priority lower than that of LCH1.

In some implementations, the terminal device may perform the first LCP procedure when condition 7 is satisfied. The condition 7 includes one or more of: LCH1 is an LCH with a delay requirement, a delay of LCH1 satisfies a condition for triggering an LCH condition, a delay of LCH1 is less than a first threshold, data of LCH1 has been transmitted or partially transmitted, a delay of data of LCH1 is not less than a second threshold (the second threshold is lower than the first threshold), the first indication information indicates to enable the first action, and there is an uplink grant within a first time period that can carry data of LCH1. The first LCP procedure may include preferentially carrying data of LCH1 and LCH2, and/or simultaneously carrying data of LCH1 and LCH2.

In some implementations, the terminal device may perform the first LCP procedure when condition 8 is satisfied. The condition 8 includes one or more of: LCH1 is an LCH with a delay requirement, a delay of LCH1 satisfies a condition for triggering an LCH condition, a delay of LCH1 is less than a first threshold, data of LCH1 has not been transmitted or partially transmitted, a delay of data of LCH1 is less than a second threshold (the second threshold is lower than the first threshold), the first indication information indicates to enable the first action, and there is an uplink grant within a first time period that can carry data (or all data) of LCH1. The first LCP procedure may include one or more of: carrying data of LCH1 with low priority, not carrying data of LCH1, discarding data (or remaining data) of LCH1, and enabling an uplink grant to preferentially carry data of an LCH with a priority lower than that of LCH1.

In some implementations, the terminal device may perform the first LCP procedure when condition 9 is satisfied. The condition 9 includes one or more of: LCH1 is an LCH with a delay requirement; the delay of LCH1 satisfies a condition for triggering an LCH condition; the delay of LCH1 is less than threshold 1; data of LCH1 cannot be transmitted simultaneously; an uplink grant cannot carry data (or all data) of the LCH; and there exists an uplink grant or an additional uplink grant within a first time period. The first LCP procedure may include one or more of: carrying data of LCH1 with low priority, not carrying data of LCH1, discarding data (or remaining data) of LCH1, and enabling an uplink grant to preferentially carry data of an LCH with a priority lower than that of LCH1.

In some implementations, the terminal device may perform the first LCP procedure when condition 10 is satisfied. The condition 10 includes one or more of: LCH1 is an LCH with a delay requirement; the delay of LCH1 satisfies a condition for triggering an LCH condition; and the delay of LCH1 is less than threshold 1. The first LCP procedure may include: while ensuring existing priority and/or PBR-based fairness, transmitting all the data of LCH1 before a PDB deadline, or not transmitting the data of LCH1 at all.

In some implementations, when LCH1 and LCH2 are the first object, the first LCP procedure may be performed. The first LCP procedure includes: while ensuring existing priority and/or PBR-based fairness, data of LCH1 and LCH2 is fully transmitted, or fully transmitted as much data as possible, or transmitted together, or transmitted together as much as possible, or not transmitted at all.

In some embodiments, that the foregoing LCH1 and/or LCH2 are/is the first object may mean that LCH1 and/or LCH2 are/is an object with a synchronization requirement.

It can be seen from the foregoing solution that, in the embodiments of the present disclosure, by performing the first LCP procedure or adjusting a packetization or mapping order of LCHs in the LCP procedure, it is possible to ensure that services with a synchronization requirement are transmitted simultaneously or as simultaneously as possible, or ensure that services with a delay requirement are transmitted as soon as possible or not transmitted. The foregoing mapping order may include a priority order.

The first operation includes adjusting a first parameter.

In some implementations, the first operation may include adjusting the first parameter. The embodiments of the present disclosure do not specifically limit the first parameter. As an example, the first parameter may be related to data packetization or a transmission order of data of the first object. In some embodiments, the transmission order of the data of the first object may refer to a priority of the data of the first object, preferential transmission of the data of the first object, low-priority transmission of the data of the first object, or the like.

In some implementations, the first parameter may include a configuration parameter of an LCH. In other implementations, the first parameter may include a configuration parameter of an RLC.

In some implementations, the first parameter may include a PBR and/or a bucket size duration (BSD).

In some implementations, adjusting the first parameter may refer to adjusting the first parameter for the first object.

In some implementations, by adjusting the first parameter, the data of the first object may be transmitted preferentially, transmitted with low priority, not transmitted, not carried preferentially, not carried, carried with low priority, discarded, or the like.

In some implementations, a value of the adjusted first parameter may be a size of data to be transmitted of the first object, so that the data to be transmitted of the first object can be transmitted to meet a transmission requirement of the data.

In some implementations, the value of the adjusted first parameter may be 0, so that the data of the first object is not transmitted, thereby ensuring preferential transmission of other data and meeting transmission requirements of the other data.

In some implementations, the value of the adjusted first parameter may be a specific value. The specific value may be greater than or equal to a preset threshold to ensure that the data of the first object can be transmitted, or the specific value may be less than the preset threshold so that the data of the first object is not transmitted. In some embodiments, the specific value may be 0 or 1.

In some implementations, the adjusted first parameter may enable the data to be transmitted of the first object to be transmitted in a first uplink grant, thereby ensuring that the data of the first object can be carried.

In some implementations, the adjusted first parameter may satisfy one or more of the foregoing conditions. As an example, the adjusted first parameter may be used to transmit the data to be transmitted of the first object in an uplink grant, and the value of the adjusted first parameter is the size of the data to be transmitted of the first object. That is, by setting the value of the adjusted first parameter to the size of the data to be transmitted of the first object, the data to be transmitted of the first object can be transmitted in the uplink grant.

The embodiments of the present disclosure do not specifically limit the first uplink grant. In some embodiments, the first uplink grant has a priority. In other embodiments, the first uplink grant may be a specific uplink grant. The specific grant may be an uplink grant with a highest priority, an uplink grant with a relatively high priority, an uplink grant with a lowest priority, or an uplink grant with a relatively low priority. In other embodiments, the first uplink grant may be an uplink grant within a first time period. The first time period may be a preset time period, a time period indicated by a network device, or a time period predefined by a protocol. In another embodiment, the first uplink grant may be an obtained uplink grant.

The foregoing first uplink grants may be used independently or in combination with each other. As an example, the first uplink grant may be a specific grant within the first time period. As another example, the first uplink grant may be an obtained specific grant. As yet another example, the first uplink grant may be an obtained uplink grant within the first time period.

The solution in the embodiments of the present disclosure is described below by an example in which the first parameter includes a PBR and/or a BSD.

In some implementations, assuming that LCH1 and LCH2 are the first object, a value of a PBR and/or a BSD of LCH1 may be adjusted to a size of data to be transmitted of LCH1, and/or a value of a PBR and/or a BSD of LCH2 may be adjusted to a size of data to be transmitted of LCH2.

In some implementations, assuming that LCH1 and LCH2 are the first object, the value of the PBR and/or the BSD of LCH1 may be adjusted to the size of the data to be transmitted of LCH1, and/or the value of the PBR and/or the BSD of LCH2 may be adjusted to the size of the data to be transmitted of LCH2 when first indication information indicates to enable the first operation.

In some implementations, assuming that LCH1 and LCH2 are the first object, the value of the PBR and/or the BSD of LCH1 may be adjusted to the size of the data to be transmitted of LCH1, and/or the value of the PBR and/or the BSD of LCH2 may be adjusted to the size of the data to be transmitted of LCH2 when a delay difference between data of LCH1 and LCH2 is less than a first threshold, and/or when the first indication information indicates to enable the first operation.

In some implementations, the value of the PBR and/or the BSD of LCH1 is adjusted to the size of the data to be transmitted of LCH1, and/or the value of the PBR and/or the BSD of LCH2 is adjusted to the size of the data to be transmitted of LCH2 when condition 1 is satisfied. The condition 1 includes one or more of: LCH1 and LCH2 are the first object; data of LCH1 has been transmitted or partially transmitted; a delay of the data of LCH1 is less than a second threshold; the delay difference between the data of LCH1 and LCH2 is less than a first threshold; and the first indication information indicates to enable the first operation.

In some implementations, the value of the PBR and/or the BSD of LCH1 is adjusted to a specific value or 0, and/or the value of the PBR and/or the BSD of LCH2 is adjusted to a specific value or 0 when condition 2 is satisfied. The condition 2 includes one or more of: LCH1 and LCH2 are the first object; the data of LCH1 has been transmitted or partially transmitted; the delay of the data of LCH1 is less than a third threshold; the delay difference between the data of LCH1 and LCH2 is less than the first threshold; and the first indication information indicates to enable the first operation.

In some implementations, the value of the PBR and/or the BSD of LCH1 is adjusted to the size of the data to be transmitted of LCH1, and/or the value of the PBR and/or the BSD of LCH2 is adjusted to the size of the data to be transmitted of LCH2 when condition 3 is satisfied. The condition 3 includes one or more of: LCH1 and LCH2 are the first object; the data of LCH1 has been transmitted or partially transmitted; the delay of the data of LCH1 is less than the second threshold; the delay difference between the data of LCH1 and LCH2 is less than the first threshold; the first indication information indicates to enable the first operation; and an uplink grant can carry the data of LCH1 and LCH2.

In some implementations, the value of the PBR and/or the BSD of LCH1 is adjusted to a specific value or 0, and/or the value of the PBR and/or the BSD of LCH2 is adjusted to a specific value or 0 when condition 4 is satisfied. The condition 4 includes one or more of: LCH1 and LCH2 are the first object; the data of LCH1 has been transmitted or partially transmitted; the delay of the data of LCH1 is less than the third threshold; the delay difference between the data of LCH1 and LCH2 is less than the first threshold; the first indication information indicates to enable the first operation; and an uplink grant cannot carry the data of LCH1 and LCH2.

In some implementations, the value of the PBR and/or the BSD of LCH1 is adjusted to a specific value or 0, and/or the value of the PBR and/or the BSD of LCH2 is adjusted to a specific value or 0 when condition 5 is satisfied. The condition 5 includes one or more of: LCH1 and LCH2 are the first object; the data of LCH1 has been transmitted or partially transmitted; the data of LCH1 and LCH2 cannot be transmitted simultaneously; an uplink grant cannot carry the data (or all data) of LCH1 and LCH2; an uplink grant within a first time period cannot carry the data (or all data) of LCH1 and LCH2; and there is no uplink grant or additional uplink grant within the first time period.

In some implementations, the value of the PBR and/or the BSD of LCH1 is adjusted to a specific value or 0, or the value of the PBR and/or the BSD of LCH1 is adjusted to the size of the data to be transmitted of LCH1 when condition 6 is satisfied. The condition 6 includes one or more of: LCH1 is an LCH with a delay requirement; a delay of LCH1 satisfies a condition for triggering an LCH condition; the delay of LCH1 is less than a first threshold; and the first indication information indicates to enable the first operation.

In some implementations, the value of the PBR and/or the BSD of LCH1 is adjusted to the size of the data to be transmitted of LCH1 when condition 7 is satisfied. The condition 7 includes one or more of: LCH1 is an LCH with a delay requirement; the delay of LCH1 satisfies the condition for triggering an LCH condition; the delay of LCH1 is less than the first threshold; the data of LCH1 has been transmitted or partially transmitted; the delay of the data of LCH1 is less than the second threshold (the second threshold is less than the first threshold); the first indication information indicates to enable the first operation; and an uplink grant can carry the data of LCH1.

In some implementations, the value of the PBR and/or the BSD of LCH1 is adjusted to a specific value or 0 when condition 8 is satisfied. The condition 8 includes one or more of: LCH1 is an LCH with a delay requirement; the delay of LCH1 satisfies the condition for triggering an LCH condition; the delay of LCH1 is less than the first threshold; the data of LCH1 has not been transmitted; the delay of the data of LCH1 is less than the second threshold (the second threshold is less than the first threshold); the first indication information indicates to enable the first action; and an uplink grant cannot carry the data of LCH1.

In some implementations, the value of the PBR and/or the BSD of LCH1 is adjusted to a specific value or 0 when condition 9 is satisfied. The condition 9 includes one or more of: LCH1 is an LCH with a delay requirement; the delay of LCH1 satisfies the condition for triggering an LCH condition; the delay of LCH1 is less than the first threshold; the data of LCH1 has been transmitted or partially transmitted; the delay of the data of LCH1 is less than the second threshold (the second threshold is less than the first threshold); the first indication information indicates to enable the first operation; and there is an uplink grant within a first time period that can carry the data of LCH1.

In some implementations, the value of the PBR and/or the BSD of LCH1 is adjusted to a specific value or 0 when condition 10 is satisfied. The condition 10 includes one or more of: LCH1 is an LCH with a delay requirement; the delay of LCH1 satisfies the condition for triggering an LCH condition; the delay of LCH1 is less than the first threshold; the data of LCH1 has been transmitted or partially transmitted; the delay of the data of LCH1 is less than the second threshold (the second threshold is less than the first threshold); the first indication information indicates to enable the first operation; and there is no uplink grant within the first time period that can carry the data (or all data) of LCH1.

In some implementations, the value of the PBR and/or the BSD of LCH1 is adjusted when condition 11 is satisfied, so that data of LCH1 is fully transmitted before a PDB deadline or is not transmitted at all while ensuring existing priority and/or PBR-based fairness. The condition 11 includes one or more of: LCH1 is an LCH with a delay requirement; the delay of LCH1 satisfies the condition for triggering an LCH condition; and the delay of LCH1 is less than the first threshold.

In some implementations, when LCH1 and LCH2 are the first object, by adjusting the value of the PBR and/or the BSD of LCH1, data of LCH1 and LCH2 is fully transmitted, or fully transmitted as much as possible, or transmitted together, or transmitted together as much as possible, or not transmitted at all while ensuring existing priority and/or PBR-based fairness.

In some embodiments, the case that the foregoing LCH1 and/or LCH2 are/is the first object may mean that LCH1 and/or LCH2 are/is an object with a synchronization requirement.

The first operation includes using a first rule.

In some implementations, the first operation may include transmitting the data of the first object according to the first rule, or the first operation may include transmitting the data of the first object according to the first rule in a first process.

The embodiments of the present disclosure do not specifically limit the first rule.

As an example, the first rule may include carrying the data of the first object in an uplink grant. By carrying the data of the first object, the data of the first object can be transmitted.

As another example, the first rule includes preferentially carrying the data of the first object in an uplink grant. By preferentially carrying the data of the first object, the data of the first object can be transmitted preferentially to meet a transmission requirement of the data of the first object.

As another example, the first rule includes not carrying the data of the first object in an uplink grant. In some scenarios, when the data of the first object is too late to be transmitted (for example, a delay requirement cannot be met), the data of the first object may not be carried in the uplink grant, so that the data of the first object is not transmitted, thereby saving resources.

As another example, the first rule includes carrying the data of the first object with low priority in an uplink grant. In some scenarios, when the data of the first object is too late to be transmitted (for example, a delay requirement cannot be met) or other more important data needs to be transmitted, the data of the first object may be transmitted with low priority to meet transmission requirements of the other data.

As another example, the first rule includes preferentially delivering the data of the first object in a first protocol layer to a MAC layer. By preferentially delivering the data of the first object to the MAC layer, the data of the first object can be transmitted preferentially to meet the transmission requirement of the data of the first object.

As another example, the data of the first object in the first protocol layer is delivered to the MAC layer with low priority. When the data of the first object is too late to be transmitted (for example, a delay requirement cannot be met) or other more important data needs to be transmitted, the data of the first object may be delivered to the MAC layer with low priority, thereby ensuring preferential transmission of other data (data other than the data of the first object) to meet transmission requirements of the other data.

In some embodiments, the first protocol layer includes a PDCP layer and/or an RLC layer. Alternatively, the first protocol layer includes one or more of: a PDCP layer, an RLC layer, an application layer, and an SDAP layer.

In some implementations, the first rule may include delivering the data of the first object to the MAC layer simultaneously, so that the data of the first object can be transmitted simultaneously. In some implementations, the first rule may include delivering the data of the first object to the MAC layer in adjacent time periods, so that the data of the first object can be transmitted in the adjacent time periods. In some implementations, the first rule may include carrying the data of the first object in a same grant, so that the data of the first object can be transmitted simultaneously. In some implementations, the first rule may include carrying the data of the first object in an uplink grant within a first time period, so that the data of the first object can be transmitted within the first time period.

In some implementations, the data of the first object may be delivered to the MAC layer last. When the data of the first object is too late to be transmitted (for example, a delay requirement cannot be met) or other more important data needs to be transmitted, the data of the first object may be delivered to the MAC layer, thereby ensuring preferential transmission of other data (data other than the data of the first object) to meet transmission requirements of the other data.

In some implementations, the data of the first object may be deleted. When the data of the first object is too late to be transmitted (for example, a delay requirement cannot be met), the data of the first object may be deleted to save transmission resources.

In some implementations, the data of the first object may be carried with low priority in an uplink grant within a first time period. In some scenarios, the uplink grant within the first time period may be required for important data, and carrying the data of the first object with low priority in the uplink grant within the first time period can prevent the data of the first object from affecting the important data.

In some implementations, the data of the first object may be not carried in an uplink grant within a first time period. In some scenarios, the uplink grant within the first time period may be required for important data, and not carrying the data of the first object in the uplink grant within the first time period can ensure transmission of the important data. In this case, the data of the first object may be carried in an uplink grant within a time period other than the first time period.

In some implementations, there may be multiple types of the first process. As an example, the first process may include an LCP process. As another example, the first process may include a MAC PDU packetization process. As another example, the first process may include a process of delivering data of the first protocol layer to the MAC layer. As another example, the first process may include a process of delivering a data packet to a lower layer. Delivering a data packet to a lower layer may refer to delivering a data packet of the first protocol layer to a second protocol layer, where a level of the second protocol layer is lower than a level of the first protocol layer.

The first operation includes transmitting the data of the first object by using a first path.

In some implementations, the first operation may include transmitting the data of the first object by using a first path. The path in the embodiments of the present disclosure may include one or more of: an LCH, a PDCP, a DRB, a carrier, and the like.

In some embodiments, the first operation may include: transmitting the data of the first object by using the first path when a first condition is satisfied. The first condition may be a condition which is set for whether the first path can be used. In some embodiments, the first condition may be the same as a seventh condition.

In some implementations, the first path is different from a second path. The embodiments of the present disclosure do not specifically limit the second path. In some embodiments, the second path may be a default path. In other embodiments, the second path is associated with the first protocol layer. The first protocol layer may be the first protocol layer described above. In other embodiments, the second path is a path configured by a network device. In other embodiments, the second path is a path indicated in RRC configuration information. In other embodiments, the second path is a path used when the first condition is not satisfied.

In some implementations, the first path is associated with the first protocol layer. The first protocol layer may be the first protocol layer described above.

In some implementations, paths associated with the data of the first object are the same. As an example, the paths associated with the data of the first object are a same first path.

In some implementations, the paths associated with the data of the first object are different. As an example, the paths associated with the data of the first object are different first paths.

In some implementations, the data of the first object may include data of the first object and/or data requiring synchronization. In some embodiments, the data of the first object and the data of the first object may be replaced with each other.

The solution in the embodiments of the present disclosure is described below by an example in which the first parameter includes a PBR and/or a BSD.

In some implementations, assuming that LCH1 and LCH2 are the first object, the first path may be used to transmit data of LCH1 and data of LCH2.

In some implementations, assuming that LCH1 and LCH2 are the first object, the first path may be used to transmit data of LCH1 and data of LCH2 when first indication information indicates to enable the first operation.

In some implementations, assuming that LCH1 and LCH2 are the first object, the first path may be used to transmit data of LCH1 and data of LCH2 when a delay difference between the data of LCH1 and the data of LCH2 is less than a first threshold, and/or when the first indication information indicates to enable the first operation.

In some implementations, the first path is used to transmit the data of LCH1 and LCH2 when condition 1 is satisfied. The condition 1 includes one or more of: LCH1 and LCH2 are the first object; data of LCH1 has been transmitted or partially transmitted; a delay of the data of LCH1 is less than a second threshold; the delay difference between the data of LCH1 and data of LCH2 is less than the first threshold; and the first indication information indicates to enable the first operation.

In some implementations, the first path is not used to transmit the data of LCH1 and LCH2 when condition 2 is satisfied. The condition 2 includes one or more of: LCH1 and LCH2 are the first object; the data of LCH1 has been transmitted or partially transmitted; the delay of the data of LCH1 is less than a third threshold; the delay difference between the data of LCH1 and data of LCH2 is less than the first threshold; and the first indication information indicates to enable the first operation.

In some implementations, the first path is used to transmit the data of LCH1 and LCH2 when condition 3 is satisfied. The condition 3 includes one or more of: LCH1 and LCH2 are the first object; the data of LCH1 has been transmitted or partially transmitted; the delay of the data of LCH1 is less than the second threshold; the delay difference between the data of LCH1 and data of LCH2 is less than the first threshold; the first indication information indicates to enable the first operation; and an uplink grant can carry the data of LCH1 and LCH2.

In some implementations, the first path is not used to transmit data of LCH1 and data of LCH2 when condition 4 is satisfied. The condition 4 includes one or more of: LCH1 and LCH2 are the first object; the data of LCH1 has been transmitted or partially transmitted; the delay of the data of LCH1 is less than the third threshold; the delay difference between the data of LCH1 and the data of LCH2 is less than the first threshold; the first indication information indicates to enable the first operation; and an uplink grant cannot carry the data of LCH1 and the data of LCH2.

In some implementations, the first path is not used to transmit data of LCH1 and data of LCH2 when condition 5 is satisfied. The condition 5 includes one or more of: LCH1 and LCH2 are the first object; the data of LCH1 has been transmitted or partially transmitted; the data of LCH1 and the data of LCH2 cannot be transmitted simultaneously; an uplink grant cannot carry the data (or all data) of LCH1 and LCH2; an uplink grant within a first time period cannot carry the data (or all data) of LCH1 and LCH2; and there is no uplink grant or additional uplink grant within the first time period.

In some implementations, the first path is used or not used to transmit data of LCH1 when condition 6 is satisfied. The condition 6 includes one or more of: LCH1 is an LCH with a delay requirement; a delay of LCH1 satisfies a condition for triggering an LCH condition; the delay of LCH1 is less than the first threshold; and the first indication information indicates to enable the first operation.

In some implementations, the first path is used to transmit the data of LCH1 when condition 7 is satisfied. The condition 7 includes one or more of: LCH1 is an LCH with a delay requirement; the delay of LCH1 satisfies the condition for triggering an LCH condition; the delay of LCH1 is less than the first threshold; the data of LCH1 has been transmitted or partially transmitted; the delay of the data of LCH1 is less than the second threshold (the second threshold is less than the first threshold); the first indication information indicates to enable the first operation; and an uplink grant can carry the data of LCH1.

In some implementations, the first path is not used to transmit the data of LCH1 when condition 8 is satisfied. The condition 8 includes one or more of: LCH1 is an LCH with a delay requirement; the delay of LCH1 satisfies the condition for triggering an LCH condition; the delay of LCH1 is less than the first threshold; the data of LCH1 has not been transmitted; the delay of the data of LCH1 is less than the second threshold (the second threshold is less than the first threshold); the first indication information indicates to enable the first action; and an uplink grant cannot carry the data of LCH1.

In some implementations, the first path is not used to transmit the data of LCH1 when condition 9 is satisfied. The condition 9 includes one or more of: LCH1 is an LCH with a delay requirement; the delay of LCH1 satisfies the condition for triggering an LCH condition; the delay of LCH1 is less than the first threshold; the data of LCH1 has been transmitted or partially transmitted; the delay of the data of LCH1 is less than the second threshold (the second threshold is less than the first threshold); the first indication information indicates to enable the first operation; and there is an uplink grant within a first time period that can carry the data of LCH1.

In some implementations, the first path is not used to transmit the data of LCH1 when condition 10 is satisfied. The condition 10 includes one or more of: LCH1 is an LCH with a delay requirement; the delay of LCH1 satisfies the condition for triggering an LCH condition; the delay of LCH1 is less than the first threshold; the data of LCH1 has been transmitted or partially transmitted; the delay of the data of LCH1 is less than the second threshold (the second threshold is less than the first threshold); the first indication information indicates to enable the first operation; and there is no uplink grant within the first time period that can carry the data (or all data) of LCH1.

In some implementations, the first path is used to transmit the data of LCH1 when condition 11 is satisfied, so that data of LCH1 is fully transmitted before a PDB deadline or is not transmitted at all while ensuring existing priority and/or PBR-based fairness. The condition 11 includes one or more of: LCH1 is an LCH with a delay requirement; the delay of LCH1 satisfies the condition for triggering an LCH condition; and the delay of LCH1 is less than the first threshold.

In some implementations, when LCH1 and LCH2 are the first object, by using the first path to transmit the data of LCH1 and LCH2, data of LCH1 and LCH2 is fully transmitted, or fully transmitted as much as possible, or transmitted together, or transmitted together as much as possible, or not transmitted at all while ensuring existing priority and/or PBR-based fairness.

In some embodiments, case that the LCH1 and/or LCH2 are/is the first object may mean that LCH1 and/or LCH2 are/is an object with a synchronization requirement.

The first operations may be performed independently or in combination with each other, which is not limited in the embodiments of the present disclosure. As an example, the first operation may include adjusting the priority of the first LCH and adjusting the first parameter. By adjusting the first parameter, the priority of the first LCH can be adjusted, so as to implement high-priority or low-priority transmission of data and meet a transmission requirement of the data. As another example, the first operation may include adjusting the priority of the first LCH and performing the first action. By performing the first action and adjusting the priority of the first LCH, the data can be processed with high priority or with low priority in both a generation process and a transmission process, so as to meet the transmission requirement of the data.

A deactivation operation of the terminal device is described below.

In some implementations, the terminal device may further deactivate a second operation to reduce overhead of the terminal device. In some embodiments, the terminal device may deactivate the second operation when a second condition is satisfied. The second operation may include performing the first operation based on the first information.

There may be multiple second conditions, which are not limited in the embodiments of the present disclosure. The second condition is described below by examples.

In some embodiments, the second condition may include that the data of the first object is discarded. When the data of the first object is discarded, it is unnecessary for the terminal device to transmit the data of the first object, and therefore, the terminal device may deactivate the second operation.

In other embodiments, the second condition may include that an uplink grant capable of carrying data of an object having the first relationship is newly added. When an uplink grant link is newly added and the uplink grant link is capable of carrying the data of the object having a first relationship, the terminal device may deactivate the second operation and transmit the data of the object having a first relationship by using the newly added uplink grant, so as to improve success rate of data transmission.

In other embodiments, the second condition may include that time information of the data of the first object is less than or equal to a first threshold. When the time information of the data of the first object is less than the first threshold, it indicates that the data of the first object is too late to be transmitted, and the terminal device may deactivate the second operation to avoid waste of transmission resources.

In other embodiments, the second condition may include that the first object is reconfigured. After the first object is reconfigured, the current first object may have changed compared with the previous first object, and therefore, the terminal device may deactivate the first operation to avoid waste of transmission resources.

In other embodiments, the second condition may include that time information of multiple pieces of data of the first object is consistent.

In other embodiments, the second condition may include that a MAC entity is reconfigured. After the MAC entity is reconfigured, a data transmission procedure may change. Therefore, in this case, the terminal device may deactivate the second operation to avoid data transmission failure and waste of transmission resources.

In other embodiments, the second condition may include that a first timer expires or the first timer is not running. The first timer may be used to indicate a duration during which the terminal device can perform the second operation. The first timer may be configured by a network device or predefined by a protocol. The terminal device may start the first timer when starting to perform the second operation, and deactivate the second operation after the first timer expires.

The foregoing second conditions may be used independently or in combination with each other, which is not limited in the embodiments of the present disclosure. As an example, the second condition may include that time information of the data of the first object is less than or equal to a first threshold, and the first timer expires. Although the time information of the data of the first object is less than the first threshold, the data of the first object may still be transmitted as long as the first timer does not expire, so that a receiving device can receive the data of the first object, for example, for subsequent redundancy calculation, helping improve a success rate of data transmission.

The first indication information is described below.

In some implementations, the terminal device may perform one or more of the following operations based on the first indication information: determining first information; performing a first operation; and performing the first operation based on the first information. The first indication information may be sent by a network device to the terminal device.

In some embodiments, the first indication information may be used to indicate whether the terminal device performs the first operation based on the first information. When the first indication information indicates that the terminal may perform the first operation based on the first information, the terminal device may perform the first operation based on the first information. When the first indication information indicates that the terminal device cannot perform the first operation based on the first information, the terminal device does not perform the first operation based on the first information.

In other embodiments, the first indication information may be used to indicate the terminal device to perform the first operation based on the first information. In this case, after the first indication information is received, the terminal device may perform the first operation based on the first information.

In other embodiments, the first indication information may be used to indicate the terminal device to perform the first operation. In this case, the terminal device may perform the first operation when the first indication information is received. The terminal device may perform the first operation based on the first information or other information.

In some implementations, the first indication information may be determined based on information reported by the terminal device. For example, the network device may determine the first indication information based on the information reported by the terminal device. There may be multiple types of information reported by the terminal device. Examples of the information reported by the terminal device are described below.

In some implementations, the information reported by the terminal device may include whether the terminal device can identify the first object. When the terminal device can identify the first object, the first indication information may be used to indicate that the terminal device may perform the first operation based on the first information, or the first indication information may be used to indicate the terminal device to perform the first operation. When the terminal device cannot identify the first object, the first indication information may be used to indicate that the terminal device cannot perform the first operation based on the first information, or the first indication information may be used to indicate the terminal device not to perform the first operation.

In some implementations, the information reported by the terminal device may include whether the terminal device can perform the first operation. When the terminal device can perform the first operation, the first indication information may be used to indicate that the terminal device may perform the first operation based on the first information, or the first indication information may be used to indicate the terminal device to perform the first operation. When the terminal device cannot perform the first operation, the first indication information may be used to indicate that the terminal device cannot perform the first operation based on the first information, or the first indication information may be used to indicate the terminal device not to perform the first operation.

In some implementations, the information reported by the terminal device may include that multiple objects have the first relationship. For example, the terminal device may report to the network device through a first indication field that the multiple objects have the first relationship. When a value of the first indication field is non-zero, it indicates that the multiple objects have the first relationship; when the value of the first indication field is 0, it indicates that the multiple objects do not have the first relationship. The indication field may include one bit or multiple bits.

In some implementations, the information reported by the terminal device may include objects having a first relationship. For example, when object a, object b, and object c have the first relationship, the terminal device may indicate object a, object b, and object c to the network device. For example, the terminal device may report identifiers and/or indexes of object a, object b, and object c to the network device.

In some implementations, the information reported by the terminal device may include information of an identifiable first object. For example, when objects identifiable by the terminal device include object a, object b, and object c, the terminal device may indicate object a, object b, and object c to the network device. For example, the terminal device may report identifiers and/or indexes of object a, object b, and object c to the network device.

In some implementations, the information reported by the terminal device may include information of an identifiable delay-based scheduled object. For example, when delay-scheduled objects identifiable by the terminal device include object a, object b, and object c, the terminal device may indicate object a, object b, and object c to the network device. For example, the terminal device may report identifiers and/or indexes of object a, object b, and object c to the network device.

There are multiple manners of carrying the first indication information, which are not limited in the embodiments of the present disclosure. For example, the first indication information may be carried in RRC signaling. For another example, the first indication information may be carried in a MAC CE. For another example, the first indication information may be carried in a change indication.

The seventh condition is described below.

In some embodiments, the terminal device may perform the first operation based on the first information in any case. In other embodiments, the terminal device may perform the first operation based on the first information when the seventh condition is satisfied.

There may be multiple seventh conditions, which are not limited in the embodiments of the present disclosure. The seventh condition is described in detail below.

In some embodiments, the seventh condition may include that the first indication information is received. The terminal device may perform the first operation based on the first information when the first indication information is received. The first indication information may be used to indicate the terminal device to perform the first operation based on the first information.

In some embodiments, the seventh condition may include that the first indication information is received and the first indication information indicates to enable the first operation. In other words, the terminal device may perform the first operation based on the first information when the first indication information is received and the first indication information indicates to enable the first operation.

In some embodiments, the seventh condition may include arrival of data of the first object. The terminal device may perform the first operation based on the first information after the data of the first object arrives. When the data of the first object has not arrived, the terminal device may not perform the first operation based on the information, thereby saving power consumption of the terminal device.

In some embodiments, the seventh condition may include that time information of the data of the first object is less than or equal to a second threshold. The second threshold may be determined based on a delay of the data. When the time information of the data of the first object is less than or equal to the second threshold, it indicates that the data of the first object needs to be transmitted as soon as possible. In this case, the terminal device may perform the first operation based on the first information, so that the data of the first object can be transmitted as soon as possible to meet a transmission requirement of the data.

In some embodiments, the seventh condition may include that a data volume of the data of the first object is greater than or equal to a third threshold. When the data volume of the data of the first object is greater than or equal to the third threshold, it may indicate that the data of the first object meets a transmission condition. In this case, the terminal device may perform the first operation based on the first information, so that the data of the first object can be transmitted.

In some embodiments, the seventh condition may include that data to be transmitted includes data having target information. The data having target information may also be referred to as target data. The first operation may also be an operation for the target data. The terminal device may perform the first operation based on the first information when there is target data to be transmitted. When there is no target data to be transmitted, the terminal device may not perform the first operation based on the first information, so as to save power consumption of the terminal device.

In some embodiments, the seventh condition may include that the data to be transmitted includes data carrying time information. The data carrying time information may indicate that the data has a time requirement, such as a delay requirement. In this case, the terminal device may perform the first operation based on the first information, so that the data carrying time information can be transmitted as soon as possible.

In some embodiments, the seventh condition may include that time information carried by multiple pieces of data to be transmitted is consistent. The case that the time information carried by the multiple pieces of data is consistent may indicate that the multiple pieces of data have a coordinated-transmission requirement or a synchronous-transmission requirement. In this case, the terminal device may perform the first operation based on the first information, so that the multiple pieces of data can be transmitted in a coordinated or synchronous manner to meet a transmission requirement of the data.

In some embodiments, the seventh condition may include that a third timer does not expire or the third timer is running. The third timer may be used to indicate a duration during which the terminal device can perform the first operation, or the third timer may be used to indicate a duration during which the terminal device can perform the first operation based on the first information. When the third timer does not expire or is running, the terminal device may perform the first operation based on the first information. When the third timer expires or is not running, the terminal device may not perform the first operation based on the first information.

The seventh conditions may be used independently or in combination with each other, which is not limited in the embodiments of the present disclosure. As an example, the seventh condition may include reception of the first indication information, indication by the first indication information to enable the first operation, and arrival of data of the first object, so that the data of the first object can be transmitted. As another example, the seventh condition may include that time information of the data of the first object is less than or equal to a second threshold and a data volume of the data of the first object is greater than or equal to a third threshold, so that the data of the first object is transmitted when the time information and the data volume information meet corresponding conditions, thereby saving transmission resources while ensuring that the data of the first object can be transmitted.

The first object is described below.

There may be multiple types of first objects, which are not limited in the embodiments of the present disclosure. The first object is described in detail below.

In some implementations, the first object may include an object configured by a network device. The terminal device may perform related operations in the embodiments of the present disclosure based on the object configured by the network device.

In some implementations, the first object may include an object supported by the terminal device. The first object may include all objects supported by the terminal device, some objects supported by the terminal device, or a certain object supported by the terminal device.

In some implementations, the first object may include an object having time information. The first object may include all objects having time information, some objects having time information, or a certain object having time information.

In some implementations, the first object may include an object having target information. The first object may include all objects having target information, some objects having target information, or a certain object having target information.

In some implementations, the first object may include an object whose target requirement meets a fifth condition. The fifth condition may be a condition which is set for the target requirement. For example, when the target requirement includes a delay requirement, the fifth condition may be a condition for a delay, for example, the fifth condition may include that the delay is less than or equal to a preset threshold. For example, when the target requirement includes a multimodal requirement, the fifth condition may be a condition for the multimodal requirement, for example, the fifth condition includes that multi-modal information is consistent or a multimodal relationship exists.

In some implementations, the first object may include an object carrying time information. For example, when the time information includes timestamp information, an object carrying timestamp information is the first object.

In some implementations, the first object may include an object having specific time information. The specific time information may be indicated by a network device or predefined by a protocol.

In some implementations, the first object may include an object whose time information meets a sixth condition. For example, the sixth condition may include that the time information is greater than or equal to a preset threshold, or the sixth condition includes that the time information is less than or equal to a preset threshold.

In some implementations, the first object may include an object capable of performing the first operation. When an object is capable of performing the first operation, it indicates that the terminal device can perform the first operation for the object.

In some implementations, the first object may include an object having a delay requirement. In some implementations, the first object may include an object whose delay meets a preset condition. In some implementations, the first object may include an object having a synchronization requirement. In some implementations, the first object may include an object having a coordination requirement. In some implementations, the first object may include an object whose synchronization requirement meets a preset condition. In some implementations, the first object may include an object whose coordination requirement meets a preset condition.

In some implementations, the object involved in the embodiments of the present disclosure may include one or more of: a QoS flow, a PDU session, a DRB, a DRB group, an LCH group, an LCH, and a data packet.

In some implementations, the DRB group corresponds to an LCH group having a first relationship. In some implementations, the DRB corresponds to an LCH having the first relationship. In some implementations, the LCH group includes an LCH group having a first relationship. In some implementations, the LCH includes an LCH having a first relationship.

In some implementations, the data involved in the embodiments of the present disclosure may include one or more of: a data packet, a PDU, an SDU, a packet, a data burst, and a PDU set.

It should be noted that the time information involved in the embodiments of the present disclosure may include one or more of: a delay, time indicated by a timestamp, decoding time, transmission time, data packet generation time, expected reception time, required reception time, and the like.

The solution in the embodiments of the present disclosure is described in detail below with reference to four specific examples. It should be noted that the following examples are merely explanations for ease of understanding and are not intended to limit the embodiment of the present disclosure.

### Embodiment 1

A UE adjusts an LCH priority based on first information.

The first information includes at least one of: first indication information, delay information, and sync/coordination info (or multi-modal information).

The operation of adjusting an LCH priority includes: adjusting a priority of an object corresponding to sync/coordination info (or multi-modal information); or adjusting a priority of an object whose delay information (d) meets an execution condition (e). The priority is an LCH priority.
I. In some implementations, the priorities of the objects are considered to be the same.
II. In some implementations, the priority of the object is considered to be higher than priorities of other LCHs, or the priority of the object is considered to be lower than the priorities of other LCHs.
III. In some implementations, the object is considered to be at higher or lower priority among LCHs with a same priority.
IV. In some implementations, sub-priority is introduced, and the sub-priority of the object is considered to be higher or lower than that of another LCH with a same priority.

The first information includes sync/coordination info (or multi-modal information). Alternatively, the first information may further include sync/coordination association information, where the sync/coordination association information is used by the UE to determine a sync/coordination object; or determine for which object the LCH priority is adjusted based on the first information; or determine for which object the UE may obtain sync/coordination info. In some implementations, a granularity of the object includes at least one of: a QoS flow, a data flow, an LCH, an LCH group, an LCG, or a DRB.

The first information includes first indication information. The first indication information is used to indicate that the UE may adjust the LCH priority based on the first information.

The first information includes delay information.
I. In some implementations, the delay information is multimodal delay information.

For example: the delay information is a delay difference between objects having a sync/coordination relationship, or a delay difference between one object having a sync/coordination relationship and another object, or delays of multiple objects having a sync/coordination relationship, or a delay of an object that still has data to be transmitted among the multiple objects having a sync/coordination relationship, or a delay of an object with a shortest delay tolerance among the multiple objects having a sync/coordination relationship, or a delay of an object with a longest delay tolerance among the multiple objects having a sync/coordination relationship, or a delay (such as a minimum index, a maximum index, a shortest delay, a longest delay, etc.) of a specific object having a sync/coordination relationship.

For another example, the delay information is a delay difference between data packets with a shortest delay of objects having a sync/coordination relationship, or a delay difference between a data packet with a shortest delay of one object having a sync/coordination relationship and a data packet with a shortest delay of another object, or delays of data packets with a shortest delay of multiple objects having a sync/coordination relationship, or a delay of a data packet with a shortest delay of an object that still has data to be transmitted among the multiple objects having a sync/coordination relationship, or a delay of a data packet with a shortest delay of an object with a shortest delay tolerance among the multiple objects having a sync/coordination relationship, or a delay of a data packet with a shortest delay of an object with a longest delay tolerance among the multiple objects having a sync/coordination relationship, or a delay (such as a minimum index, a maximum index, a shortest delay, a longest delay, etc.) of a data packet of a specific object having a sync/coordination relationship, or a delay (such as a minimum index, a maximum index, a shortest delay, a longest delay, etc.) of a data packet with a shortest delay of a specific object having a sync/coordination relationship.

For another example, the delay information is a delay difference between data packets with a longest delay of objects having a sync/coordination relationship, or a delay difference between a data packet with a longest delay of one object having a sync/coordination relationship and a data packet with a longest delay of another object, or delays of data packets with a longest delay of multiple objects having a sync/coordination relationship, or a delay of a data packet with a longest delay of an object that still has data to be transmitted among the multiple objects having a sync/coordination relationship, or a delay of a data packet with a longest delay of an object with a longest delay tolerance among the multiple objects having a sync/coordination relationship, or a delay of a data packet with a longest delay of an object with a longest delay tolerance among the multiple objects having a sync/coordination relationship.

II. In some implementations, the delay information is remaining delay information, or latest time (such as a deadline) of PDB/PSDB.

In some implementations, the delay information is delay information of the first object, or delay information when the first object meets a trigger condition, or delay information when the first object reports the first information, or delay information of a data packet with a shortest delay of the first object.

III. In some implementations, the object is an LCH group, an LCG, an LCH, an LCG having a sync/coordination relationship, a data packet of an LCH group having a sync/coordination relationship, or a data packet of an LCH having a sync/coordination relationship.

IV. In some implementations, the object may be configured by a network and/or supported by a UE (for example, the UE can identify or report the first information for a certain LCG or LCH; for another example, the UE can identify or report the first information for two associated LCHs or two associated LCGs).

An execution condition for adjusting the LCH priority based on the first information includes at least one of the following: first indication information is received, the first indication information indicates enable, data of an object having a sync/coordination relationship arrives, remaining delay of data having a sync/coordination relationship is less than or equal to threshold 1, a data volume of the data having a sync/coordination relationship is greater than or equal to threshold 3, partial data or data having a sync/coordination relationship is to be transmitted, data of the first object arrives (where the first object is network-configured and/or UE-supported, and/or the first object has delay information or sync/coordination info (or multi-modal information), and/or the first object meets a certain condition for a delay or sync/coordination requirement (or multimodal requirement), and/or the first object is configured to be capable of performing LCH adjustment), remaining delay of data of the first object is less than or equal to threshold 1, a data volume of the data of the first object is greater than or equal to threshold 3, or a first timer does not expire (the LCH priority is adjusted based on the first information within a duration of the first timer).

In some implementations, a condition for deactivating the action of adjusting an LCH priority based on the first information includes at least one of: data of an object having a sync/coordination relationship being discarded, a new UL grant being capable of carrying data of an object having a sync/coordination relationship, remaining delay of data having a sync/coordination relationship being less than or equal to threshold 2 (threshold 2 < threshold 1), data of the first object being discarded, a new UL grant being capable of carrying data of the first object, remaining delay of data of the first object being less than or equal to threshold 2 (threshold 2 < threshold 1), the first object being reconfigured, a MAC entity being reconfigured, or the first timer expiring or not running.

The delay information may be calculated and/or counted and/or exchanged to a MAC by an RLC and/or a PDCP.
I. In some implementations, the RLC and/or the PDCP may calculate and/or count and/or exchange the first information to the MAC when a condition is satisfied (periodically or when an execution condition is met). Alternatively, when requested by the MAC or when the MAC determines that an execution condition is met, the RLC and/or the PDCP may calculate and/or count and/or exchange the first information to the MAC.
II. In some implementations, the delay information may be determined according to a PDCP discard timer, or according to a time when a data packet arrives at the PDCP/RLC, or according to a time when the data packet waits in the PDCP/RLC, or according to PDB/PSDB of the data packet. The delay information may also be determined according to at least two of these factors.

2. A base station may configure whether the UE may adjust the LCH priority based on the first information.

In some implementations, the base station may determine, based on a UE report, whether to configure the UE to adjust the LCH priority based on the first information (for example, the network sends first indication information to the UE).

In some implementations, the first indication information may be indicated by RRC, or indicated by a MAC CE or through a change indication.

In some implementations, the UE may report existence of a sync/coordination relationship and/or an object having the sync/coordination relationship (such as a QoS flow, a data flow, an LCH, an LCH group, an LCG, a DRB).

In some implementations, the UE may report that it can identify or report an object in which the first information exists and/or information of the object, or it can identify or report information (such as a QoS flow, a data flow, an LCH, an LCH group, an LCG, a DRB) of an object which is scheduled based on delay.

An implementation example is as follows.

LCH1 and LCH2 are objects having a sync requirement, and priorities of LCH1 and LCH2 are considered to be the same.

LCH1 and LCH2 are objects having a sync requirement, priorities of LCH1 and LCH3 are 3, and a priority of LCH2 is 4. Priorities of LCH1 and LCH2 are considered to be the same and higher than that of LCH2.

LCH1 and LCH2 are objects having a sync requirement, priorities of LCH1 and LCH3 are 3, and a priority of LCH2 is 1. A priority of LCH2 is considered to be the highest, and priorities of LCH 1 and LCH 3 are considered to be the same.

LCH1 and LCH2 are objects having a sync requirement, and priorities of LCH1, LCH2, and LCH3 are 3. A priority of LCH3 is considered to be the highest, and priorities of LCH1 and LCH2 are considered to be higher than that of LCH3.

LCH1 and LCH2 are objects having a sync requirement, and priorities of LCH1, LCH2, and LCH3 are 3. Sub-priorities of LCH1 and LCH2 are considered to be 1 (final priority: 3.1), and a sub-priority of LCH3 is considered to be 2 (final priority: 3.2).

LCH1 and LCH2 are objects having a sync requirement, and priorities of LCH1, LCH2, and LCH3 are 3. When a new grant can include all data of LCH1 and LCH2, priorities of LCH1 and LCH2 are considered to be higher than that of LCH3, or sub-priorities of LCH1 and LCH2 are considered to be 1 (final priority: 3.1), and a sub-priority of LCH3 is considered to be 2 (final priority: 3.2).

LCH1 and LCH2 are objects having a sync requirement, and priorities of LCH1, LCH2, and LCH3 are 3. When a new grant cannot include all data of LCH1 and LCH2, priorities of LCH1 and LCH2 are considered to be lower than that of LCH3, or sub-priorities of LCH1 and LCH2 are considered to be 2 (final priority: 3.2), and a sub-priority of LCH3 is considered to be 1 (final priority: 3.1).

LCH1 is an LCH having a delay requirement, or a delay of LCH1 meets a condition for triggering an LCH condition, or a delay of LCH1 is less than a threshold. Priorities of LCH1 and LCH2 are 3. A priority of LCH1 is considered to be higher than that of LCH2, or a sub-priority of LCH1 is considered to be 1 (final priority: 3.1), and a sub-priority of LCH3 is considered to be 2 (final priority: 3.2).

LCH1 is an LCH having a delay requirement, or a delay of LCH1 meets a condition for triggering an LCH condition, or a delay of LCH1 is less than a threshold. A priority of LCH1 is 3 and a priority of LCH2 is 2. A priority of LCH1 is considered to be higher than that of LCH2, or a priority of LCH1 is considered to be 1 and a sub-priority of LCH3 is considered to be 2.

LCH1 is an LCH having a delay requirement, or a delay of LCH1 meets a condition for triggering an LCH condition, or a delay of LCH1 is less than threshold 1, and a new grant can carry data of LCH1 or a delay of LCH1 is not less than threshold 2 (threshold 2 < threshold 1). Priorities of LCH1 and LCH2 are 3. A priority of LCH1 is considered to be higher than that of LCH2, or a sub-priority of LCH1 is considered to be 1 (final priority: 3.1), and a sub-priority of LCH3 is considered to be 2 (final priority: 3.2).

LCH1 is an LCH having a delay requirement, or a delay of LCH1 meets a condition for triggering an LCH condition, or a delay of LCH1 is less than threshold 1, and a new grant cannot carry data of LCH1 or a delay of LCH1 is less than threshold 2 (threshold 2 < threshold 1). A priority of LCH1 is 3 and a priority of LCH2 is 2. A priority of LCH1 is considered to be higher than that of LCH2, or a priority of LCH1 is considered to be 1 and a sub-priority of LCH3 is considered to be 2.

LCH1 is an LCH having a delay requirement, or a delay of LCH1 meets a condition for triggering an LCH condition, or a delay of LCH1 is less than threshold 1. While ensuring existing priority and/or PBR-based fairness, data of LCH1 is fully transmitted before a PDB deadline or is not transmitted at all.

LCH1 and LCH2 are objects having a sync requirement. While ensuring existing priority and/or PBR-based fairness, data of LCH1 and LCH2 is fully transmitted, or fully transmitted as much as possible, or transmitted together, or transmitted together as much as possible, or not transmitted at all.

Beneficial effects of the foregoing solution are: adjusting a priority of an LCH to ensure that services having a sync requirement are transmitted simultaneously or as simultaneously as possible; or adjusting a priority of an LCH to ensure that a service having a delay requirement is transmitted as soon as possible or not transmitted.

### Embodiment 2

Whether to use a first LCP procedure or perform a first MAC PDU generation procedure may be determined based on first information. The procedure is used to transmit, with high or low priority, data corresponding to the first information in a UL grant.

A specific implementation is as follows:
A UE may determine whether to use a first LCP procedure or perform a first MAC PDU generation procedure based on first information.

The procedure is used to transmit, with high or low priority, data corresponding to the first information in a UL grant.

The first information includes at least one of: first indication information, delay information, and sync/coordination info (or multi-modal information).

Whether to use the first LCP procedure or perform the first MAC PDU generation procedure is determined.
I. The procedure includes: transmitting, with high priority or low priority, data corresponding to the first information in a UL grant.
II. The procedure applies to: an object corresponding to sync/coordination info (or multi-modal information); an object whose delay information (d) satisfies an execution condition (e); a UE/LCH (where an object corresponding to sync/coordination info (or multi-modal information) exists); a UE or LCH (where an object whose delay information (d) satisfies an execution condition (e) exists); a UE that has received first indication information; or a UE that the first indication information indicates to enable the first LCP procedure.

In some implementations, the UL grant preferentially carries data of the object, or carries data of the object with low priority (or carries no data of the object).

In some implementations, the objects are considered to be carried or transmitted simultaneously or as simultaneously as possible, or preferentially carried or transmitted.

In some implementations, the objects are considered to be carried or transmitted within a time period, carried or transmitted with low priority, or discarded/flush.

The first information includes sync/coordination info (or multi-modal information), or may alternatively be sync/coordination association information. The information is used by the UE to determine a sync/coordination object; determine for which object whether to use the first LCP procedure or perform the first MAC PDU generation procedure based on the first information; or determine for which object the UE can obtain sync/coordination info.

In some implementations, a granularity of the object includes at least one of: a QoS flow, a data flow, an LCH, an LCH group, an LCG, or a DRB.

The first information includes first indication information. The first indication information is used to indicate that the UE can determine whether to use the first LCP procedure or perform the first MAC PDU generation procedure based on the first information.

The first information includes delay information.
I. In some implementations, the delay information is multimodal delay information.

In some implementations, the delay information is a delay difference between objects having a sync/coordination relationship; a delay difference between one object having a sync/coordination relationship and another object; respective delays of multiple objects having a sync/coordination relationship; a delay of an object that still has data to be transmitted among multiple objects having a sync/coordination relationship; a delay of an object with a shortest delay tolerance among multiple objects having a sync/coordination relationship; a delay of an object with a longest delay tolerance among multiple objects having a sync/coordination relationship; or a delay (e.g., with a minimum index, maximum index, shortest delay, longest delay, etc.) of a specific object having a sync/coordination relationship.

In some implementations, the delay information is a delay difference between data packets with a shortest delay of objects having a sync/coordination relationship; a delay difference between a data packet with a shortest delay of one object having a sync/coordination relationship and a data packet with a shortest delay of another object; respective delays of data packets with a shortest delay of multiple objects having a sync/coordination relationship; a delay of a data packet with a shortest delay of an object that still has data to be transmitted among multiple objects having a sync/coordination relationship; a delay of a data packet with a shortest delay of an object with a shortest delay tolerance among multiple objects having a sync/coordination relationship; a delay of a data packet with a shortest delay of an object with a longest delay tolerance among multiple objects having a sync/coordination relationship; a delay (e.g., with a minimum index, maximum index, shortest delay, longest delay, etc.) of a data packet of a specific object having a sync/coordination relationship; or a delay (e.g., with a minimum index, maximum index, shortest delay, longest delay, etc.) of a data packet with a shortest delay of a specific object having a sync/coordination relationship.

In some implementations, the delay information is a delay difference between data packets with a longest delay of objects having a sync/coordination relationship; a delay difference between a data packet with a longest delay of one object having a sync/coordination relationship and a data packet with a longest delay of another object; respective delays of data packets with a longest delay of multiple objects having a sync/coordination relationship; a delay of a data packet with a longest delay of an object that still has data to be transmitted among multiple objects having a sync/coordination relationship; a delay of a data packet with a longest delay of an object with a longest delay tolerance among multiple objects having a sync/coordination relationship; or a delay of a data packet with a longest delay of an object with a longest delay tolerance among multiple objects having a sync/coordination relationship.

II. In some implementations, the delay information is remaining delay information or latest time (e.g., deadline) of PDB/PSDB. For example, the delay information is delay information of the first object; delay information when the first object satisfies a trigger condition; delay information when the first object reports the first information; or delay information of a data packet with a shortest delay of the first object.

III. In some implementations, the object is an LCH group, an LCG, an LCH, an LCG having a sync/coordination relationship, a data packet of an LCH group having a sync/coordination relationship, or a data packet of an LCH having a sync/coordination relationship.

IV. In some implementations, the object is network-configured and/or UE-supported (e.g., the UE can identify or report the first information for a certain LCG or LCH; or the UE can identify or report the first information for two associated LCHs or two associated LCGs).

In some implementations, an execution condition for determining whether to use the first LCP procedure or perform the first MAC PDU generation procedure based on the first information includes at least one of: reception of first indication information, where the first indication information indicates enable; arrival of data of an object having a sync/coordination relationship; remaining delay of data having a sync/coordination relationship being less than or equal to threshold 1; a data volume of data having a sync/coordination relationship being greater than or equal to threshold 3; existence of to-be-transmitted partial data or data having a sync/coordination relationship; arrival of data of the first object (where the first object is network-configured and/or UE-supported; and/or the first object has delay information or sync/coordination info (or multi-modal information); and/or the first object meets a certain condition for a delay or sync/coordination requirement (or multimodal requirement); and/or the first object is configured to be capable of performing LCH adjustment); remaining delay of data of the first object being less than or equal to threshold 1; a data volume of data of the first object being greater than or equal to threshold 3; and a first timer not expiring (where the first LCP procedure or the first MAC PDU generation procedure is performed within a duration of the first timer).

In some implementations, a deactivation condition for the action of determining whether to use the first LCP procedure or perform the first MAC PDU generation procedure based on the first information includes at least one of: data of an object having a sync/coordination relationship being discarded; a new UL grant being capable of carrying data of an object having a sync/coordination relationship; remaining delay of data having a sync/coordination relationship being less than or equal to threshold 2 (threshold 2 < threshold 1); data of the first object being discarded; a new UL grant being capable of carrying the data of the first object; remaining delay of data of the first object being less than or equal to threshold 2 (threshold 2 < threshold 1); the first object being reconfigured; a MAC entity being reconfigured; and the first timer expiring or not running.

The delay information may be calculated, counted, and/or exchanged to the MAC by the RLC and/or PDCP.
I. In some implementations, the RLC and/or PDCP may calculate, count, and/or exchange the first information to the MAC when a condition is satisfied (periodically or when an execution condition is met). Alternatively, the RLC and/or PDCP may calculate, count, and/or exchange the first information to the MAC upon a request from the MAC or when the MAC determines that an execution condition is satisfied.
II. In some implementations, the delay information may be determined according to: a PDCP discard timer, time when a data packet arrives at the PDCP/RLC, time during which the data packet waits in the PDCP/RLC, or PDB/PSDB of the data packet.

In some implementations, the delay information may also be determined according to at least two of the foregoing factors.

A base station may configure whether a UE can determine whether to use the first LCP procedure or perform the first MAC PDU generation procedure based on the first information.

In some implementations, the base station may determine, based on a UE report, whether to configure the UE to determine whether to use the first LCP procedure or perform the first MAC PDU generation procedure based on the first information (e.g., the network sends first indication information to the UE).

In some implementations, the first indication information may be indicated by RRC, or indicated by a MAC CE or through a change indication.

In some implementations, the UE may report existence of a sync/coordination relationship and/or an object thereof (e.g., a QoS flow, a data flow, an LCH, an LCH group, an LCG, a DRB).

In some implementations, the UE may indentify or report an object with the first information and/or object information thereof, or may indentify or report information (e.g., a QoS flow, a data flow, an LCH, an LCH group, an LCG, a DRB) of an object which is delay-based scheduled.

Implementation examples are as follows.

LCH1 and LCH2 are objects having a sync requirement. When the first indication information indicates enable, the UE may use the first LCP procedure. The first LCP procedure preferentially carries data of LCH1 and LCH2, or carries data of LCH1 and LCH2 simultaneously.

LCH1 and LCH2 are objects having a sync requirement, and a delay difference between data of LCH1 and LCH2 is less than a first threshold; and/or when the first indication information indicates enable, the UE may use the first LCP procedure. The first LCP procedure preferentially carries data of LCH1 and LCH2, or carries data of LCH1 and LCH2 simultaneously.

LCH1 and LCH2 are objects having a sync requirement, data of LCH1 has been transmitted or partially transmitted, and a delay of data of LCH1 is less than a second threshold; and/or a delay difference between data of LCH1 and LCH2 is less than the first threshold; and/or when the first indication information indicates enable, the UE uses the first LCP procedure. The first LCP procedure preferentially carries data of LCH1 and LCH2, or carries data of LCH1 and LCH2 simultaneously.

LCH1 and LCH2 are objects having a sync requirement, data of LCH1 has been transmitted or partially transmitted, and a delay of data of LCH1 is less than a third threshold; and/or a delay difference between data of LCH1 and LCH2 is less than the first threshold; and/or when the first indication information indicates enable, the UE uses the first LCP procedure. The first LCP procedure carries data of LCH1 and LCH2 with low priority, or carries no data of LCH1 and LCH2, or discards (remaining) data of LCH1 and LCH2, or causes the UL grant to preferentially carry data of an LCH with a lower priority (lower than priorities of LCH1 and LCH2).

LCH1 and LCH2 are objects having a sync requirement, data of LCH1 has been transmitted or partially transmitted; and/or a delay of data of LCH1 is less than the second threshold; and/or a delay difference between data of LCH1 and LCH2 is less than the first threshold; and/or when the first indication information indicates enable and/or a UL grant can carry data of LCH1 and LCH2, the UE may use the first LCP procedure. The first LCP procedure preferentially carries data of LCH1 and LCH2, or carries data of LCH1 and LCH2 simultaneously.

LCH1 and LCH2 are objects having a sync requirement, data of LCH1 has been transmitted or partially transmitted; and/or a delay of data of LCH1 is less than the third threshold; and/or a delay difference between data of LCH1 and LCH2 is less than the first threshold; and/or when the first indication information indicates enable and/or a UL grant cannot carry data of LCH1 and LCH2, the UE may use the first LCP procedure. The first LCP procedure carries, with low priority, data of LCH1 and LCH2, or carries no data of LCH1 and LCH2, or discards (remaining) data of LCH1 and LCH2, or causes the UL grant to preferentially carry data of an LCH with a lower priority (lower than priorities of LCH1 and LCH2).

LCH1 and LCH2 are objects having a sync requirement, and/or data of LCH1 has been transmitted or partially transmitted. If data of LCH1 and LCH2 cannot be transmitted simultaneously, or a UL grant cannot carry (all) data of LCH1 and LCH2, or UL grants within a first time period cannot carry (all) data of LCH1 and LCH2, or no UL grant or additional UL grant exists within the first time period, then data of LCH1 and LCH2 is processed with low priority, or no data of LCH1 and LCH2 is carried, or (remaining) data of LCH1 and LCH2 is discarded, or the UL grant is caused to preferentially carry data of an LCH with a lower priority (lower than priorities of LCH1 and LCH2).

LCH1 is an LCH having a delay requirement, or a delay of LCH1 satisfies a condition for triggering an LCH condition, or a delay of LCH1 is less than threshold 1. When the first indication information indicates enable, the UE may use the first LCP procedure. The first LCP procedure preferentially carries data of LCH1.

LCH1 is an LCH having a delay requirement, or a delay of LCH1 satisfies a condition for triggering an LCH condition, or a delay of LCH1 is less than threshold 1. The UE may use the first LCP procedure when data of LCH1 has been transmitted or partially transmitted, and/or a delay of data of LCH1 is not less than threshold 2 (threshold 2 < threshold 1), and/or the first indication information indicates enable, and/or a UL grant can carry data of LCH1. The first LCP procedure preferentially carries data of LCH1 and LCH2, or carries data of LCH1 and LCH2 simultaneously.

LCH1 is an LCH having a delay requirement, or a delay of LCH1 satisfies a condition for triggering an LCH condition, or a delay of LCH1 is less than threshold 1. The UE may use the first LCP procedure when data of LCH1 has not been transmitted, and/or a delay of data of LCH1 is less than threshold 2 (threshold 2 < threshold 1), and/or the first indication information indicates enable, and/or a UL grant cannot carry data of LCH1. The first LCP procedure carries, with low priority, data of LCH1, or carries no data of LCH1, or discards (remaining) data of LCH1, or causes the UL grant to preferentially carry data of an LCH with a lower priority (lower than a priority of LCH1).

LCH1 is an LCH having a delay requirement, or a delay of LCH1 satisfies a condition for triggering an LCH condition, or a delay of LCH1 is less than threshold 1. The UE may use the first LCP procedure when data of LCH1 has been transmitted or partially transmitted, and/or a delay of data of LCH1 is not less than threshold 2 (threshold 2 < threshold 1), and/or the first indication information indicates enable, and/or a UL grant that can carry data of LCH1 exists within a first time period. The first LCP procedure preferentially carries data of LCH1.

LCH1 is an LCH having a delay requirement, or a delay of LCH1 satisfies a condition for triggering an LCH condition, or a delay of LCH1 is less than threshold 1. The UE may use the first LCP procedure when data of LCH1 has not been transmitted or partially transmitted, and/or a delay of data of LCH1 is less than threshold 2 (threshold 2 < threshold 1), and/or the first indication information indicates enable, and/or no UL grant that can carry (all) data of LCH1 exists within the first time period. The first LCP procedure carries, with low priority, data of LCH1, or carries no data of LCH1, or discards (remaining) data of LCH1, or causes the UL grant to preferentially carry data of an LCH with a lower priority (lower than a priority of LCH1).

LCH1 is an LCH having a delay requirement, or a delay of LCH1 satisfies a condition for triggering an LCH condition, or a delay of LCH1 is less than threshold 1. If data of LCH1 cannot be transmitted simultaneously, a UL grant cannot carry (all) data of LCH1, UL grants within the first duration cannot carry (all) data of LCH1, or no UL grant or additional UL grant exists within the first time period, then data of LCH1 is depriorizted, or no data of LCH1 is carried, or (remaining) data of LCH1 is discarded, or the UL grant is caused to preferentially carry data of an LCH with a lower priority (lower than a priority of LCH1).

LCH1 is an LCH having a delay requirement, or a delay of LCH1 satisfies a condition for triggering an LCH condition, or a delay of LCH1 is less than threshold 1. While ensuring existing priority and/or PBR-based fairness, data of LCH1 is either fully transmitted before a PDB deadline or not transmitted at all.

LCH1 and LCH2 are objects having a sync requirement. While ensuring existing priority and/or PBR-based fairness, data of LCH1 and LCH2 is fully transmitted, or fully transmitted as much as possible, or transmitted together, or transmitted together as much as possible, or not transmitted at all.

Beneficial effects of the foregoing solution are: using the first LCP procedure or adjusting a packetization/mapping order (or priority) of an LCH in an LCP procedure to ensure that services having a sync requirement are transmitted simultaneously or as simultaneously as possible, or ensure that a service having a delay requirement is transmitted as soon as possible or not transmitted.

### Embodiment 3

A parameter of PBR and/or BSD may be adjusted based on first information, so that data corresponding to the first information is transmitted with high priority or low priority. A specific implementation is as follows:

A UE may adjust a configuration parameter of an LCH based on the first information, where the configuration parameter of the LCH may be a parameter of PBR and/or BSD.

The first information includes at least one of: first indication information, delay information, and sync/coordination info (or multi-modal information).

Specifically, at least one of the following is included:
The operation of adjusting a configuration parameter of an LCH, e.g., a parameter of PBR and/or BSD, includes: adjusting an LCH configuration parameter (e.g., a parameter of PBR and/or BSD) of an object corresponding to sync/coordination info (or multi-modal information), or adjusting an LCH configuration parameter (e.g., a parameter of PBR and/or BSD) of an object whose delay information (d) satisfies an execution condition (e).
I. For example, PBR (prioritisedBitRate) and/or BSD (prioritisedBitRate) are/is adjusted to a data volume of data to be transmitted of the object.
II. For example, PBR (prioritisedBitRate) and/or BSD (prioritisedBitRate) are/is adjusted to 0 or a specific value.
III. For example, PBR (prioritisedBitRate) and/or BSD (prioritisedBitRate) are/is adjusted so that the data to be transmitted of the object can be transmitted in a UL grant within a first time period.
IV. For example, PBR (prioritisedBitRate) and/or BSD (prioritisedBitRate) are/is adjusted so that the data to be transmitted of the object can be transmitted in an obtained UL grant.

The first information includes sync/coordination info (or multi-modal information). Alternatively, the first information may be sync/coordination association information, which is used by a UE to determine a sync/coordination object, or determine for which object a configuration parameter (e.g., a parameter of PBR and/or BSD) of an LCH is adjusted based on the first information, or determine for which object the UE may obtain sync/coordination info.

In some implementations, a granularity of the object includes at least one of: a QoS flow, a data flow, an LCH, an LCH group, an LCG, or a DRB.

The first information includes first indication information. The first indication information is used to indicate that the UE can adjust a configuration parameter of an LCH, e.g., a parameter of PBR and/or BSD, based on the first information.

The first information includes delay information.
I. In some implementations, the delay information is multimodal delay information.

In some implementations, the delay information is: a delay difference between objects having a sync/coordination relationship; a delay difference between one object having a sync/coordination relationship and another object; respective delays of multiple objects having a sync/coordination relationship; a delay of an object that still has data to be transmitted among multiple objects having a sync/coordination relationship; a delay of an object with a shortest delay tolerance among multiple objects having a sync/coordination relationship; a delay of an object with a longest delay tolerance among multiple objects having a sync/coordination relationship; or a delay (e.g., with a minimum index, maximum index, shortest delay, longest delay, etc.) of a specific object having a sync/coordination relationship.

In some implementations, the delay information is: a delay difference between data packets with a shortest delay of objects having a sync/coordination relationship; a delay difference between a data packet with a shortest delay of one object having a sync/coordination relationship and a data packet with a shortest delay of another object; respective delays of data packets with a shortest delay of multiple objects having a sync/coordination relationship; a delay of a data packet with a shortest delay of an object that still has data to be transmitted among multiple objects having a sync/coordination relationship; a delay of a data packet with a shortest delay of an object with a shortest delay tolerance among multiple objects having a sync/coordination relationship; a delay of a data packet with a shortest delay of an object with a longest delay tolerance among multiple objects having a sync/coordination relationship; a delay (e.g., with a minimum index, maximum index, shortest delay, longest delay, etc.) of a data packet of a specific object having a sync/coordination relationship; or a delay (e.g., with a minimum index, maximum index, shortest delay, longest delay, etc.) of a data packet with a shortest delay of a specific object having a sync/coordination relationship.

In some implementations, the delay information is: a delay difference between data packets with a longest delay of objects having a sync/coordination relationship; a delay difference between a data packet with a longest delay of one object having a sync/coordination relationship and a data packet with a longest delay of another object; respective delays of data packets with a longest delay of multiple objects having a sync/coordination relationship; a delay of a data packet with a longest delay of an object that still has data to be transmitted among multiple objects having a sync/coordination relationship; a delay of a data packet with a longest delay of an object with a longest delay tolerance among multiple objects having a sync/coordination relationship; or a delay of a data packet with a longest delay of an object with a longest delay tolerance among multiple objects having a sync/coordination relationship.

II. In some implementations, the delay information is remaining delay information or latest time (e.g., deadline) of PDB/PSDB.

In some implementations, the delay information is delay information of the first object; delay information when the first object satisfies a trigger condition; delay information when the first object reports the first information; or delay information of a data packet with a shortest delay of the first object.

III. In some implementations, the object is an LCH group, an LCG, an LCH, an LCG having a sync/coordination relationship, a data packet of an LCH group having a sync/coordination relationship, or a data packet of an LCH having a sync/coordination relationship.

IV. In some implementations, the object is configured by a network and/or supported by a UE (e.g., the UE can identify or report the first information for a certain LCG or LCH; or the UE can identify or report the first information for two associated LCHs or two associated LCGs).

In some implementations, an execution condition for adjusting a configuration parameter (e.g., a parameter of PBR and/or BSD) of an LCH based on the first information includes at least one of: reception of first indication information, where the first indication information indicates enable; arrival of data of an object having a sync/coordination relationship; remaining delay of data having a sync/coordination relationship being less than or equal to threshold 1; a data volume of data having a sync/coordination relationship being greater than or equal to threshold 3; existence of to-be-transmitted partial data or data having a sync/coordination relationship; arrival of data of the first object (where the first object is network-configured and/or UE-supported, and/or the first object has delay information or sync/coordination info (or multi-modal information), and/or the first object meets a certain condition for a delay or sync/coordination requirement (or multimodal requirement), and/or the first object is configured to be capable of performing LCH adjustment); remaining delay of data of the first object being less than or equal to threshold 1; a data volume of data of the first object being greater than or equal to threshold 3; or a first timer not expiring (where the LCH parameter is adjusted based on the first information within a duration of the first timer).

In some implementations, a deactivation condition for the action of adjusting a configuration parameter (e.g., a parameter of PBR and/or BSD) of an LCH based on the first information includes at least one of: data of an object having a sync/coordination relationship being discarded; a new UL grant being capable of carrying data of an object having a sync/coordination relationship; remaining delay of data having a sync/coordination relationship being less than or equal to threshold 2 (threshold 2 < threshold 1); data of the first object being discarded; a new UL grant being capable of carrying the data of the first object; remaining delay of data of the first object being less than or equal to threshold 2 (threshold 2 < threshold 1); the first object being reconfigured; a MAC entity being reconfigured; or the first timer expiring or not running.

The delay information may be calculated, counted, and/or exchanged to the MAC by the RLC and/or PDCP.
I. In some implementations, the RLC and/or PDCP may calculate, count, and/or exchange the first information to the MAC when a condition is satisfied (periodically or when an execution condition is met). Alternatively, the RLC and/or PDCP may calculate, count, and/or exchange the first information to the MAC upon a request from the MAC or when the MAC determines that an execution condition is satisfied.
II. In some implementations, the delay information may be determined according to a PDCP discard timer, or according to time when a data packet arrives at the PDCP/RLC, or according to time during which the data packet waits in the PDCP/RLC, or according to PDB/PSDB of the data packet.

In some implementations, the delay information may also be determined according to at least two of the foregoing factors.

2. A base station may configure whether the UE may adjust a configuration parameter of an LCH based on the first information, where the configuration parameter of the LCH may be a parameter of PBR and/or BSD.

In some implementations, the base station may determine, based on a UE report, whether to configure the UE to adjust a configuration parameter of an LCH, e.g., a parameter of PBR and/or BSD, based on the first information (e.g., the network sends first indication information to the UE).

In some implementations, the first indication information may be indicated by RRC, or indicated by a MAC CE or through a change indication.

In some implementations, the UE may report existence of a sync/coordination relationship and/or an object thereof (e.g., a QoS flow, a data flow, an LCH, an LCH group, an LCG, a DRB).

In some implementations, the UE may report that it can identify or report an object in which the first information exists and/or information of the object, or it can identify or report information (e.g., a QoS flow, a data flow, an LCH, an LCH group, an LCG, a DRB) of an object which is scheduled based on delay.

Implementation examples are as follows.

LCH1 and LCH2 are objects having a sync requirement. PBR and/or BSD values of LCH1 and LCH2 are adjusted to respective data volumes of data to be transmitted of LCH1 and LCH2.

LCH1 and LCH2 are objects having a sync requirement. When the first indication information indicates enable, PBR and/or BSD values of LCH1 and LCH2 are adjusted to respective data volumes of data to be transmitted of LCH1 and LCH2.

LCH1 and LCH2 are objects having a sync requirement, and a delay difference between data of LCH1 and LCH2 is less than a first threshold; and/or when the first indication information indicates enable, PBR and/or BSD values of LCH1 and/or LCH2 are adjusted to respective data volumes of data to be transmitted of LCH1 and LCH2.

LCH1 and LCH2 are objects having a sync requirement, data of LCH1 has been transmitted or partially transmitted; and/or a delay of data of LCH1 is less than a second threshold; and/or a delay difference between data of LCH1 and LCH2 is less than the first threshold; and/or when the first indication information indicates enable, a PBR and/or BSD value of LCH2 is adjusted to a data volume of data to be transmitted of LCH2 (and/or a PBR and/or BSD value of LCH1 is adjusted to a data volume of data to be transmitted of LCH1).

LCH1 and LCH2 are objects having a sync requirement, data of LCH1 has been transmitted or partially transmitted; and/or a delay of data of LCH1 is less than a third threshold; and/or a delay difference between data of LCH1 and LCH2 is less than the first threshold; and/or when the first indication information indicates enable, a PBR and/or BSD value of LCH2 is adjusted to a specific value or 0 (and/or a PBR and/or BSD value of LCH1 is adjusted to 0 or a specific value).

LCH1 and LCH2 are objects having a sync requirement, data of LCH1 has been transmitted or partially transmitted; and/or a delay of data of LCH1 is less than the second threshold; and/or a delay difference between data of LCH1 and LCH2 is less than the first threshold; and/or when the first indication information indicates enable and/or a UL grant can carry data of LCH1 and LCH2, PBR and/or BSD values of LCH1 and/or LCH2 are adjusted to respective data volumes of data to be transmitted of LCH1 and LCH2.

LCH1 and LCH2 are objects having a sync requirement, data of LCH1 has been transmitted or partially transmitted; and/or a delay of data of LCH1 is less than the third threshold; and/or a delay difference between data of LCH1 and LCH2 is less than the first threshold; and/or when the first indication information indicates enable and/or a UL grant cannot carry data of LCH1 and LCH2, a PBR and/or BSD value of LCH2 is adjusted to a specific value or 0 (and/or a PBR and/or BSD value of LCH1 is adjusted to 0 or a specific value).

LCH1 and LCH2 are objects having a sync requirement, and/or data of LCH1 has been transmitted or partially transmitted. When data of LCH1 and LCH2 cannot be transmitted simultaneously; a UL grant cannot carry (all) data of LCH1 and LCH2; UL grants within a first time period cannot carry (all) data of LCH1 and LCH2; or no UL grant or additional UL grant exists within the first time period, a PBR and/or BSD value of LCH2 is adjusted to a specific value or 0 (and/or a PBR and/or BSD value of LCH1 is adjusted to 0 or a specific value).

LCH1 is an LCH having a delay requirement, or a delay of LCH1 satisfies a condition for triggering an LCH condition, or a delay of LCH1 is less than threshold 1. When the first indication information indicates enable, a PBR and/or BSD value of LCH1 is adjusted to a value of a data to be transmitted volume of LCH1, or a PBR and/or BSD value of LCH1 is adjusted to 0 or a specific value.

LCH1 is an LCH having a delay requirement, or a delay of LCH1 satisfies a condition for triggering an LCH condition, or a delay of LCH1 is less than threshold 1. When data of LCH1 has been transmitted or partially transmitted, and/or a delay of data of LCH1 is not less than threshold 2 (threshold 2 < threshold 1), and/or the first indication information indicates enable, and/or a UL grant can carry data of LCH1, a PBR and/or BSD value of LCH1 is adjusted to a value of a data to be transmitted volume of LCH1.

LCH1 is an LCH having a delay requirement, or a delay of LCH1 satisfies a condition for triggering an LCH condition, or a delay of LCH1 is less than threshold 1. When data of LCH1 has not been transmitted, and/or a delay of data of LCH1 is less than threshold 2 (threshold 2 < threshold 1), and/or the first indication information indicates enable, and/or a UL grant cannot carry data of LCH1, a PBR and/or BSD value of LCH1 is adjusted to 0 or a specific value.

LCH1 is an LCH having a delay requirement, or a delay of LCH1 satisfies a condition for triggering an LCH condition, or a delay of LCH1 is less than threshold 1. When data of LCH1 has been transmitted or partially transmitted, and/or a delay of data of LCH1 is not less than threshold 2 (threshold 2 < threshold 1), and/or the first indication information indicates enable, and/or a UL grant that can carry data of LCH1 exists within a first time period, a PBR and/or BSD value of LCH1 is adjusted to a value of a data to be transmitted volume of LCH1.

LCH1 is an LCH having a delay requirement, or a delay of LCH1 satisfies a condition for triggering an LCH condition, or a delay of LCH1 is less than threshold 1. When data of LCH1 has not been transmitted or partially transmitted, and/or a delay of data of LCH1 is less than threshold 2 (threshold 2 < threshold 1), and/or the first indication information indicates enable, and/or no UL grant that can carry (all) data of LCH1 exists within the first duration, a PBR and/or BSD value of LCH1 is adjusted to 0 or a specific value.

LCH1 is an LCH having a delay requirement, or a delay of LCH1 satisfies a condition for triggering an LCH condition, or a delay of LCH1 is less than threshold 1. While ensuring existing priority and/or PBR-based fairness, data of LCH1 is fully transmitted before a PDB deadline or is not transmitted at all.

LCH1 and LCH2 are objects having a sync requirement. While ensuring existing priority and/or PBR-based fairness, data of LCH1 and LCH2 is fully transmitted, or fully transmitted as much as possible, or transmitted together, or transmitted together as much as possible, or not transmitted at all.

### Extended Solution of Embodiment 3

There is no need to adjust an LCH parameter such as PBR and/or BSD. Instead, a first rule is used: during an LCP procedure, during MAC PDU packetization, or when data in the PDCP and/or RLC is devilered via UL to the MAC, a UE may carry/preferentially carry, or may not carry/carry with low priority, or may deliver/deliver with low priority related data.

There is no need to adjust an LCH parameter such as PBR and/or BSD. Instead, during an LCP procedure, during MAC PDU packetization, or when data in the PDCP and/or RLC is delivered via UL to the MAC, a UE may deliver synchronized data (or remaining part of the synchronized data) to the MAC simultaneously, or deliver the synchronized data to the MAC in adjacent time periods, or deliver the synchronized data to the MAC together, or carry the synchronized data in one UL grant, or carry the synchronized data in UL grants within a first time period, or carry the synchronized data in a same UL grant as much as possible, or carry the synchronized data in UL grants within the first time period.

In some implementations, there is no need to adjust an LCH parameter such as PBR and/or BSD. Instead, during an LCP procedure, during MAC PDU packetization, or when data in the PDCP and/or RLC is delivered via UL to the MAC, a UE may deliver data of a first object (e.g., an object having a delay requirement, or whose delay satisfies a condition, or having a synchronization requirement) to the MAC simultaneously, or deliver the data to the MAC in adjacent time periods, or deliver the data to the MAC together, or carry the data in one UL grant, or carry the data in UL grants within a first time period, or carry the data in a same UL grant as much as possible, or carry the data in UL grants within the first time period.

In some implementations, there is no need to adjust an LCH parameter such as PBR and/or BSD. Instead, during an LCP procedure, during MAC PDU packetization, or when data in the PDCP and/or RLC is delivered via UL to the MAC, a UE may deliver synchronized data (or remaining part of the synchronized data) to the MAC with low priority, or deliver the synchronized data to the MAC last, or delete the synchronized data, or carry the synchronized data in a UL grant with low priority, or carry the synchronized data in UL grants within a first time period with low priority, or carry no synchronized data in a UL grant, or carry no synchronized data in UL grants within the first time period.

In some embodiments, there is no need to adjust an LCH parameter, such as PBR and/or BSD. Instead, for example, when a UE is performing an LCP procedure, or when the UE is performing MAC PDU packetization, or when data in the PDCP and/or RLC is delivered via UL to MAC, data of the first object (e.g., an object with a delay requirement, with a delay meeting a condition, or with a synchronization requirement) is delivered to MAC with low priority, or delivered to MAC last, or the data is discarded, or carried with low priority in one UL grant, or carried with low priority in a UL grant within a first time period, or not carried in a UL grant, or not carried in a UL grant within the first time period.

The beneficial effects of the above solution are: adjusting an LCH parameter (such as PBR and/or BSD, as in the solution of Embodiment 3), or using a certain rule (as in the extended solution of Embodiment 3) to ensure that services with a sync requirement are transmitted simultaneously or as simultaneously as possible, or ensure that services with a delay requirement are transmitted as soon as possible or not transmitted.

### Embodiment 4

Based on the first information, an additional LCH or path is used. Its function may be: enabling data corresponding to the first information to be transmitted with high priority or low priority.

A specific implementation is as follows:
A UE may use an additional LCH or path based on the first information. Its function may be to enable data corresponding to the first information to be transmitted with high priority or low priority.

The first information may include at least one of: first indication information, delay information, or sync/coordination info (or multi-modal information).

The use of an additional LCH or path includes: transmitting data of an object corresponding to sync/coordination info (or multi-modal information) via another LCH/path, or transmitting data of an object for which delay information (d) is adjusted to meet an execution condition (e) via another LCH/path.

In some embodiments, multiple RLC/paths are configured to be associated with one DRB/PDCP. Under different conditions, different RLC/paths are used to transmit data of this DRB/PDCP. For example, another path is used based on the first information, or a default (original) path is used when the condition for using another path is not satisfied.

In some embodiments, for sync objects, when the sync objects are associated with different DRBs, their additional RLC/paths may be the same or different.

The first information includes sync/coordination info (or multi-modal information). Alternatively, the first information may be sync/coordination association information, which is used by the UE to determine sync/coordination objects, or to determine for which object the additional LCH or path is used based on the first information, or to determine for which object the UE may obtain sync/coordination info. In some embodiments, the granularity of the object includes at least one of: a QoS flow, a data flow, an LCH, an LCH group, an LCG, or a DRB.

The first information includes first indication information. The first indication information is used to indicate that the UE may use an additional LCH or path based on the first information.

The first information includes delay information.
I. In some embodiments, the delay information is multimodal delay information.

In some embodiments, the delay information is a delay difference between objects having a sync/coordination relationship, or a delay difference between one object having a sync/coordination relationship and another object, or delays of multiple objects having a sync/coordination relationship, or delays of objects having a sync/coordination relationship that still have data to be transmitted, or a delay of an object with a shortest delay tolerance among multiple objects having a sync/coordination relationship, or a delay of an object with a longest delay tolerance among multiple objects having a sync/coordination relationship, or a delay (e.g., minimum index, maximum index, shortest delay, longest delay, etc.) of a specific object having a sync/coordination relationship.

In some embodiments, the delay information is a delay difference between data packets with a shortest delay of respective objects having a sync/coordination relationship, or a delay difference between data packets with a shortest delay of one object having a sync/coordination relationship and data packets with a shortest delay of another object, or delays of data packets with a shortest delay of respective multiple objects having a sync/coordination relationship, or delays of data packets with a shortest delay of objects having a sync/coordination relationship that still have data to be transmitted, or a delay of data packets with a shortest delay of an object with a shortest delay tolerance among multiple objects having a sync/coordination relationship, or a delay of data packets with a shortest delay of an object with a longest delay tolerance among multiple objects having a sync/coordination relationship, or a delay (e.g., a minimum index, a maximum index, a shortest delay, a longest delay, etc.) of data packets of a specific object having a sync/coordination relationship, or a delay (e.g., a minimum index, a maximum index, a shortest delay, a longest delay, etc.) of data packets with a shortest delay of a specific object having a sync/coordination relationship.

In some embodiments, the delay information is a delay difference between data packets with a longest delay of respective objects having a sync/coordination relationship, or a delay difference between data packets with a longest delay of one object having a sync/coordination relationship and data packets with a longest delay of another object, or delays of data packets with a longest delay of respective multiple objects having a sync/coordination relationship, or delays of data packets with a longest delay of objects having a sync/coordination relationship that still have data to be transmitted, or a delay of data packets with a longest delay of an object with a longest delay tolerance among multiple objects having a sync/coordination relationship.

II. In some embodiments, the delay information is remaining delay information, or latest time such as deadline of PDB/PSDB. For example, the delay information is delay information of the first object, or delay information when the first object meets a trigger condition, or delay information when the first object reports the first information, or delay information of data packets with a shortest delay of the first object.

III. In some embodiments, the object is: an LCH group, or an LCG, or an LCH, or an LCG having a sync/coordination relationship, or data packets of an LCH group having a sync/coordination relationship, or data packets of an LCH having a sync/coordination relationship.

IV. In some embodiments, the object may be configured by a network and/or supported by a UE (e.g., the UE can identify or report the first information for a certain LCG or LCH; for another example, the UE can identify or report the first information for two associated LCHs or two associated LCGs).

In some embodiments, an execution condition for using an additional LCH or path based on the first information includes at least one of: first indication information is received, the first indication information indicates enable, data of an object having a sync/coordination relationship arrives, remaining delay of data having a sync/coordination relationship is less than or equal to threshold 1, a data volume of the data having a sync/coordination relationship is greater than or equal to threshold 3, partial data or data having a sync/coordination relationship is to be transmitted, data of the first object arrives (the first object is configured by the network and/or supported by the UE, and/or the first object has delay information or sync/coordination info (or multi-modal information), and/or the first object meets a certain condition for a delay or sync/coordination requirement (or multi-modal requirement), and/or the first object is configured to be capable of performing LCH adjustment), remaining delay of data of the first object is less than or equal to threshold 1, a data volume of data of the first object is greater than or equal to threshold 3, or a first timer does not expire (an additional LCH or path is used based on the first information within the duration of the first timer).

In some embodiments, a deactivation condition for the action of using an additional LCH or path based on the first information includes at least one of: data of an object having a sync/coordination relationship is discarded, a new UL grant can carry data of an object having a sync/coordination relationship, remaining delay of data having a sync/coordination relationship is less than or equal to threshold 2 (threshold 2 < threshold 1), data of the first object is discarded, a new UL grant can carry data of the first object, remaining delay of data of the first object is less than or equal to threshold 2 (threshold 2 < threshold 1), the first object is reconfigured, a MAC entity is reconfigured, or the first timer expires or is not running.

The delay information may be calculated and/or counted and/or exchanged to a MAC by an RLC and/or a PDCP.
I. In some embodiments, the RLC and/or the PDCP may calculate and/or count and/or exchange the first information to the MAC when a condition is satisfied (periodically, or when the execution condition is met). Alternatively, upon a request from the MAC or when the MAC determines that the execution condition is satisfied, the RLC and/or the PDCP may calculate and/or count and/or exchange the first information to the MAC.
II. In some embodiments, the delay information may be determined according to a PDCP discard timer, or according to a time when a data packet arrives at PDCP/RLC, or according to a waiting time of a data packet in PDCP/RLC, or according to PDB/PSDB of a data packet. (The delay information may also be determined based on at least two of these factors.)

2. A base station may configure whether the UE may use an additional LCH or path based on the first information.

In some embodiments, the base station may determine whether to configure the UE to use an additional LCH or path based on the first information according to a report from the UE (e.g., the network indicates first indication information to the UE).

In some embodiments, the first indication information may be indicated by RRC, or indicated by a MAC CE, or through a change indication.

In some embodiments, the UE may report existence of a sync/coordination relationship and/or an object thereof (such as a QoS flow, a data flow, an LCH, an LCH group, an LCG, a DRB).

In some embodiments, the UE may report that it can identify or report an object in which the first information exists and/or information of the object, or it can identify or report information (such as a QoS flow, a data flow, an LCH, an LCH group, an LCG, a DRB) of an object which is scheduled based on delay.

An implementation example may be as follows.

LCH1 and LCH2 are objects with a sync requirement, and an additional LCH or path is used as LCH1 and LCH2.

LCH1 and LCH2 are objects with a sync requirement, and when the first indication information indicates enable, an additional LCH or path is used as LCH1 and LCH2.

LCH1 and LCH2 are objects with a sync requirement, and a delay difference between data of LCH1 and LCH2 is less than a first threshold, and/or when the first indication information indicates enable, an additional LCH or path is used as LCH1 and LCH2.

LCH1 and LCH2 are objects with a sync requirement, data of LCH1 has been transmitted or partially transmitted, and/or a delay of data of LCH1 is less than a second threshold, and/or a delay difference between data of LCH1 and LCH2 is less than the first threshold, and/or when the first indication information indicates enable, an additional LCH or path is used as LCH2 (and/or a default LCH or path is used as LCH1).

LCH1 and LCH2 are objects with a sync requirement, data of LCH1 has been transmitted or partially transmitted, and/or a delay of data of LCH1 is less than a third threshold, and/or a delay difference between data of LCH1 and LCH2 is less than the first threshold, and/or when the first indication information indicates enable, an additional LCH or path is used as LCH2 (and/or a default LCH or path is used as LCH1).

LCH1 and LCH2 are objects with a sync requirement, data of LCH1 has been transmitted or partially transmitted, and/or a delay of data of LCH1 is less than the second threshold, and/or a delay difference between data of LCH1 and LCH2 is less than the first threshold, and/or when the first indication information indicates enable, and/or a UL grant can carry data of LCH1 and LCH2, a default LCH or path is used as LCH1 and LCH2.

LCH1 and LCH2 are objects with a sync requirement, data of LCH1 has been transmitted or partially transmitted, and/or a delay of data of LCH1 is less than the third threshold, and/or a delay difference between data of LCH1 and LCH2 is less than the first threshold, and/or when the first indication information indicates enable, and/or a UL grant cannot carry data of LCH1 and LCH2, a default LCH or path is used as LCH2 (and/or a default LCH or path is used as LCH1).

LCH1 and LCH2 are objects with a sync requirement, and/or data of LCH1 has been transmitted or partially transmitted. When data of LCH1 and LCH2 cannot be transmitted simultaneously, or a UL grant cannot carry (all) data of LCH1 and LCH2, or a UL grant within a first time period cannot carry (all) data of LCH1 and LCH2, or there is no UL grant or additional UL grant within the first time period, a default LCH or path is used as LCH2 (and/or a default LCH or path is used as LCH1).

LCH1 is an LCH with a delay requirement, or a delay of LCH1 meets a condition for triggering an LCH condition, or a delay of LCH1 is less than threshold 1. When the first indication information indicates enable, an additional LCH or path is used as LCH1, or a default LCH or path is used as LCH1.

LCH1 is an LCH with a delay requirement, or a delay of LCH1 meets a condition for triggering an LCH condition, or a delay of LCH1 is less than threshold 1. When data of LCH1 has been transmitted or partially transmitted, and/or a delay of data of LCH1 is not less than the second threshold (second threshold < threshold 1), and/or the first indication information indicates enable, and/or a UL grant can carry data of LCH1, an additional LCH or path is used as LCH1.

LCH1 is an LCH with a delay requirement, or a delay of LCH1 meets a condition for triggering an LCH condition, or a delay of LCH1 is less than threshold 1. When data of LCH1 has not been transmitted, and/or a delay of data of LCH1 is less than the second threshold (second threshold < threshold 1), and/or the first indication information indicates enable, and/or a UL grant cannot carry data of LCH1, a default LCH or path is used as LCH1.

LCH1 is an LCH with a delay requirement, or a delay of LCH1 meets a condition for triggering an LCH condition, or a delay of LCH1 is less than threshold 1. When data of LCH1 has been transmitted or partially transmitted, and/or a delay of data of LCH1 is not less than the second threshold (second threshold < threshold 1), and/or the first indication information indicates enable, and/or a UL grant within a first time period can carry data of LCH1, an additional LCH or path is used as LCH1.

LCH1 is an LCH with a delay requirement, or a delay of LCH1 meets a condition for triggering an LCH condition, or a delay of LCH1 is less than threshold 1. When data of LCH1 has not been transmitted or partially transmitted, and/or a delay of data of LCH1 is less than the second threshold (second threshold < threshold 1), and/or the first indication information indicates enable, and/or no UL grant within a first time period can carry (all) data of LCH1, a default LCH or path is used as LCH1.

LCH1 is an LCH with a delay requirement, or a delay of LCH1 meets a condition for triggering an LCH condition, or a delay of LCH1 is less than threshold 1. While ensuring existing priority and/or PBR-based fairness, data of LCH1 is fully transmitted before the PDB deadline, or not transmitted at all.

LCH1 and LCH2 are objects with a sync requirement. While ensuring existing priority and/or PBR-based fairness, data of LCH1 and LCH2 is fully transmitted, or fully transmitted as much as possible, or transmitted together, or transmitted together as much as possible, or not transmitted at all.

The method embodiments of the present disclosure are described in detail above with reference to FIGS. 1 to 3. The apparatus embodiments of the present disclosure are described in detail below with reference to FIGS. 4 to 6. It should be understood that the descriptions of the method embodiments correspond to the descriptions of the apparatus embodiments, and thus parts not described in detail may refer to the foregoing method embodiments.

FIG. 4 is a schematic block diagram of a terminal device provided by an embodiment of the present disclosure. The terminal device 400 shown in FIG. 4 may be any one of the terminal devices described above. The terminal device 400 may include an executing unit 410.

The executing unit 410 is configured to perform a first operation based on first information, where the first operation is related to LCH processing.

In some implementations, the first operation includes adjusting a priority of a first LCH, where the first LCH is related to the first information or data of a first object, and the data of the first object includes data corresponding to the first information.

In some implementations, the first LCH is an LCH corresponding to the first object.

In some implementations, the first object satisfies one or more of: multiple LCHs included in the first LCH have the same priority; the priority of the first LCH is higher than that of other LCHs than the first LCH; compared with a second LCH, the first LCH is transmitted preferentially, where the priority of the first LCH is the same as a priority of the second LCH; compared with a third LCH, the first LCH is transmitted with low priority, where the priority of the first LCH is the same as a priority of the third LCH; both the first LCH and a fourth LCH correspond to a first priority and a second priority, the first priority of the first LCH is the same as the first priority of the fourth LCH, and the second priority of the first LCH is higher than the second priority of the fourth LCH; both the first LCH and a fifth LCH correspond to a third priority and a fourth priority, the third priority of the first LCH is the same as the third priority of the fifth LCH, and the fourth priority of the first LCH is lower than the fourth priority of the fifth LCH.

In some implementations, the first operation includes determining whether to perform a first action, or performing a first action, where the first action is related to one or more of: packetization of data of the first object, a transmission order of the data of the first object, an order of transmission resources carrying the data of the first object.

In some implementations, the first action is used for one or more of: preferentially transmitting the data of the first object in an uplink grant, transmitting, with low priority, the data of the first object in the uplink grant, preferentially transmitting the uplink grant carrying the data of the first object, transmitting, with low priority, the uplink grant carrying the data of the first object.

In some implementations, the first action is related to one or more of: the first object, the terminal device, and a first LCH; the terminal device includes one or more of: a terminal device with the first object, a terminal device that receives first indication information, a terminal device that receives the first indication information which indicates to enable the first action, and a terminal device that supports the first action; and the first LCH is an LCH of the first object.

In some implementations, the first object satisfies one or more of the following: data of the first object is preferentially carried in an uplink grant; compared with data other than data of the first object, data of the first object is carried with low priority in the uplink grant; data of the first object is not carried in the uplink grant; data of the first object is not carried in a specific uplink grant; data of the first object is not carried within a first time period; data of the first object is carried within the first time period; multiple data corresponding to the first object are carried simultaneously; compared with data other than data of the first object, data of the first object is carried preferentially; compared with data other than data of the first object, data of the first object is carried with low priority; data of the first object is discarded; data of the first object is not carried.

In some implementations, performing the first action includes one or more of: performing a first packetization action, performing a first LCP procedure, and performing a first MAC PDU generation procedure.

In some implementations, the first operation includes adjusting a first parameter, where the first parameter is related to packetization or a transmission order of data of the first object, and the first parameter includes a configuration parameter of an LCH and/or a configuration parameter of a RLC.

In some implementations, adjusting the first parameter includes: adjusting the first parameter for the first object.

In some implementations, the adjusted first parameter satisfies one or more of: a value of the adjusted first parameter is a size of data to be transmitted of the first object; a value of the adjusted first parameter is 0; a value of the adjusted first parameter is a specific value; and the adjusted first parameter is used to transmit the data to be transmitted of the first object in a first uplink grant, where the first uplink grant includes one or more of: a specific uplink grant, an uplink grant within a first duration, and an obtained uplink grant.

In some implementations, the configuration parameter of the LCH includes a PBR and/or a BSD.

In some implementations, the first operation includes: using a first rule, where the first rule is related to transmission of data of the first object.

In some implementations, the first rule includes one or more of: carrying the data of the first object in an uplink grant; preferentially carrying the data of the first object in the uplink grant; not carrying the data of the first object in the uplink grant; carrying the data of the first object with low priority in the uplink grant; preferentially delivering data of the first object in a first protocol layer to a MAC layer; delivering the data of the first object in the first protocol layer to the MAC layer with low priority; delivering the data of the first object in the first protocol layer to the MAC layer last; delivering multiple data of the first object to the MAC layer simultaneously; delivering multiple data of the first object to the MAC layer within a first time period; carrying the data of the first object in a same uplink grant; carrying the data of the first object in an uplink grant within the first duration; deleting data of the first object; carrying the data of the first object with low priority in an uplink grant within the first time period; and not carrying the data of the first object in the uplink grant within the first time period, where the first protocol layer includes a PDCP layer and/or an RLC layer.

In some implementations, the first rule is related to a first procedure, where the first procedure includes one or more of: an LCP procedure; a MAC PDU packetization procedure; a procedure of delivering data of the first protocol layer to the MAC layer; and a procedure of delivering a data packet to a lower layer.

In some implementations, the first operation includes transmitting the data of the first object using a first channel.

In some implementations, the first operation includes: transmitting data corresponding to the first information using the first channel when a first condition is satisfied.

In some implementations, the first channel satisfies one or more of: the first channel is different from a second channel; and the first channel is associated with a first protocol layer. The second channel satisfies one or more of: the second channel is a default channel; the second channel is associated with the first protocol layer; the second channel is a channel configured by a network device; the second channel is a channel indicated in RRC configuration information; and the second channel is a channel used when the first condition is not satisfied, where the first protocol layer includes a PDCP layer and/or an RLC layer.

In some implementations, multiple data of the first object are associated with the same channel, or multiple data of the first object are associated with different channels.

In some implementations, the terminal device may further include: a deactivation unit, configured to deactivate a second operation when a second condition is satisfied, where the second operation includes: performing the first operation based on the first information.

In some implementations, the second condition includes one or more of: data of the first object is discarded; a new uplink grant capable of carrying the data of the first object is added; time information of the data of the first object is less than or equal to a first threshold; the first object is reconfigured; time information of multiple data of the first object is consistent; a MAC entity is reconfigured; a first timer expires; and the first timer is not running.

In some implementations, the first information includes information associated with target information.

In some implementations, the information associated with target information is used to identify or indicate one or more of: an object having a first relationship; an object on which the first operation is required to be performed based on the first information; and an object corresponding to the target information.

In some implementations, the granularity of the target information includes one or more of: a QoS flow, a data flow, an LCH, an LCH group, a DRB, and a data packet.

In some implementations, the first information includes second information related to time information.

In some implementations, the second information is related to target data.

In some implementations, the second information includes time information for a second object, where the second object includes one or more of: an object having a first relationship; an object having a first relationship that has data to be transmitted; an object with a shortest delay tolerance among multiple objects having a first relationship; an object with a longest delay tolerance among multiple objects having a first relationship; a specific object having a first relationship; an object with consistent time information among multiple objects having a first relationship; the first object; an object with consistent time information; the first object satisfying a third condition; and the first object reporting the first information.

In some implementations, the second information includes one or more of: a difference between time information of any two objects among the multiple second objects; time information of the second object; a difference between time information of one object of the second object and another object; a difference between time information corresponding to first data packets of any two objects of the second object; a difference between time information corresponding to second data packets of any two objects of the second object; a difference between time information of a first data packet of one object of the second object and a first data packet of another object; a difference between time information of a second data packet of one object of the second object and a second data packet of another object; time information corresponding to the first data packet of the second object; and time information corresponding to the second data packet of the second object; where the first data packet is a data packet with shortest time information, and the second data packet is a data packet with longest time information.

In some implementations, the time information includes one or more of: information indicated by a timestamp, decoding time, transmission time, generation time of a data packet, reception time expected by a network device, reception time required by a network device, delay, remaining delay, latest transmission time of the data packet, PDB time, and PSDB time.

In some implementations, the second information is related to a first protocol layer, where the first protocol layer is configured to perform a third operation, and the third operation includes one or more of: determining the second information; maintaining the second information; calculating the second information; and transmitting the second information to a second protocol layer; where the first protocol layer includes an RLC layer, and the second protocol layer includes a MAC layer; and/or the first protocol layer includes a PDCP layer, and the second protocol layer includes an RLC layer and a MAC layer.

In some implementations, the first protocol layer performs the third operation when a fourth condition is satisfied.

In some implementations, the fourth condition includes one or more of: a condition related to a period; a first execution condition; reception of a request message from the MAC layer; determination by the MAC layer that a second execution condition is satisfied.

In some implementations, the second information is determined based on one or more of: a second timer; time when a data packet arrives at the first protocol layer; waiting time of a data packet in the first protocol layer; time for decoding a data packet; time for receiving a data packet; PDB of a data packet; PSDB of a data packet; time information carried in a data packet; timestamp information of a data packet; and time information indicated by a higher layer.

In some implementations, the terminal device may further include: a determination unit, configured to determine the first information based on first indication information, and/or perform the first operation based on the first information.

In some implementations, the first indication information is used to indicate that the terminal device is configured to perform the first operation based on the first information.

In some implementations, the first indication information is determined based on information reported by the terminal device.

In some implementations, the information reported by the terminal device includes one or more of: whether the terminal device can identify the first object; whether the terminal device can perform the first operation; multiple objects have a first relationship; an object having a first relationship; information of an identifiable first object; and information of an identifiable delay-based scheduled object.

In some implementations, the first indication information is carried in RRC signaling, a MAC CE, or a change indication.

In some implementations, the first object includes one or more of: an object configured by a network device; an object supported by the terminal device; an object having time information; an object having target information; an object whose target requirement satisfies a fifth condition; an object carrying time information; an object having specific time information; an object whose time information satisfies a sixth condition; and an object capable of performing the first operation.

In some implementations, the process of the terminal device performing a first operation based on first information includes: the terminal device performs the first operation based on the first information when a seventh condition is satisfied.

In some implementations, the seventh condition includes one or more of: the first indication information is received; the first indication information is received and the first indication information indicates to enable the first operation; data of the first object arrives; time information of the data of the first object is less than or equal to a second threshold; a data volume of data of the first object is greater than or equal to a third threshold; data to be transmitted includes data having target information; data to be transmitted includes data carrying time information; time information carried by multiple data to be transmitted is consistent; and a third timer does not expire.

In some implementations, the object includes one or more of: a QoS flow, a PDU session, a DRB, a DRB group, an LCH group, an LCH, and a data packet.

In some implementations, the DRB group corresponds to an LCH group having a first relationship; and/or the LCH group includes an LCH group having a first relationship; and/or the DRB corresponds to an LCH having a first relationship; and/or the LCH includes an LCH having a first relationship.

In some implementations, the target information includes one or more of: multi-modal information, information with a consistent-transmission requirement, information with a coordinated-transmission requirement, and information with a synchronous-transmission requirement.

In some implementations, the first relationship includes one or more of: a multi-modal relationship, a relationship with a consistent-transmission requirement, a relationship with a coordinated-transmission requirement, and a relationship with a synchronous-transmission requirement.

In some implementations, the target data includes one or more of: multi-modal data, data with a consistent-transmission requirement, data with a coordinated-transmission requirement, data with a synchronous-transmission requirement, and data with a consistent-time requirement.

In some implementations, the target requirement includes one or more of: a multi-modal requirement, a transmission requirement, a coordination requirement, a synchronization requirement, and a time consistency requirement.

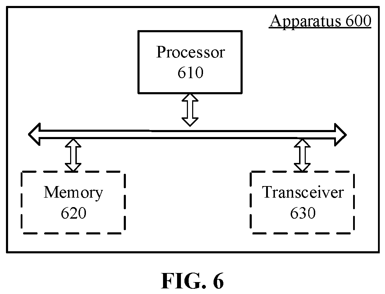

In an optional embodiment, the executing unit 410 may be a processor 610, and the receiving unit may be a transceiver 630. The terminal device 400 may further include a memory 620, as specifically shown in FIG. 6.

FIG. 5 is a schematic block diagram of a network device provided by an embodiment of the present disclosure. The network device 500 shown in FIG. 5 may be any one of the network devices described above. The network device 500 may include a sending unit 510.

The sending unit 510 is configured to send second indication information to a terminal device, where the second indication information is used to indicate first information, and the first information is used to perform a first operation related to LCH processing.

In some implementations, the first operation includes adjusting a priority of a first LCH, where the first LCH is related to the first information or data of a first object, and the data of the first object includes data corresponding to the first information.

In some implementations, the first LCH is an LCH corresponding to the first object.

In some implementations, the first object satisfies one or more of: multiple LCHs included in the first LCH have the same priority; the priority of the first LCH is higher than that of other LCHs than the first LCH; compared with a second LCH, the first LCH is transmitted preferentially, where the priority of the first LCH is the same as a priority of the second LCH; compared with a third LCH, the first LCH is transmitted with low priority, where the priority of the first LCH is the same as a priority of the third LCH; both the first LCH and a fourth LCH correspond to a first priority and a second priority, the first priority of the first LCH is the same as the first priority of the fourth LCH, and the second priority of the first LCH is higher than the second priority of the fourth LCH; both the first LCH and a fifth LCH correspond to a third priority and a fourth priority, the third priority of the first LCH is the same as the third priority of the fifth LCH, and the fourth priority of the first LCH is lower than the fourth priority of the fifth LCH.

In some implementations, the first operation includes determining whether to perform a first action, or performing a first action, where the first action is related to one or more of: packetization of data of the first object, a transmission order of data of the first object, and an order of transmission resources carrying the data of the first object.

In some implementations, the first action is used for one or more of: preferentially transmitting the data of the first object in an uplink grant, transmitting the data of the first object with low priority in the uplink grant, preferentially transmitting the uplink grant carrying the data of the first object, and transmitting the uplink grant carrying the data of the first object with low priority.

In some implementations, the first action is related to one or more of: the first object, the terminal device, and a first LCH; the terminal device includes one or more of: a terminal device with the first object, a terminal device that receives first indication information, a terminal device that receives first indication information and the first indication information indicates to enable the first action, and a terminal device that supports the first action; and the first LCH is an LCH of the first object.

In some implementations, the first object satisfies one or more of: data of the first object is preferentially carried in an uplink grant; compared with data other than data of the first object, data of the first object is carried with low priority in the uplink grant; data of the first object is not carried in the uplink grant; data of the first object is not carried in a specific uplink grant; data of the first object is not carried within a first duration; data of the first object is carried within the first time period; multiple data corresponding to the first object are carried simultaneously; compared with data other than data of the first object, data of the first object is carried preferentially; compared with data other than data of the first object, data of the first object is carried with low priority; data of the first object is discarded; and data of the first object is not carried.

In some implementations, performing the first action includes one or more of: performing a first packetization action, performing a first LCP procedure, and performing a first MAC PDU generation procedure.

In some implementations, the first operation includes: adjusting a first parameter, where the first parameter is related to packetization or a transmission order of data of the first object, and the first parameter includes a configuration parameter of an LCH and/or a configuration parameter of a RLC.

In some implementations, adjusting the first parameter includes: adjusting the first parameter for the first object.

In some implementations, the adjusted first parameter satisfies one or more of: a value of the adjusted first parameter is a size of data to be transmitted of the first object; a value of the adjusted first parameter is 0; a value of the adjusted first parameter is a specific value; and the adjusted first parameter is used to transmit the data to be transmitted of the first object in a first uplink grant, where the first uplink grant includes one or more of: a specific uplink grant, an uplink grant within a first duration, and an obtained uplink grant.

In some implementations, the configuration parameter of the LCH includes a PBR and/or a BSD.

In some implementations, the first operation includes: using a first rule, where the first rule is related to transmission of data of the first object.

In some implementations, the first rule includes one or more of: carrying the data of the first object in an uplink grant; preferentially carrying the data of the first object in the uplink grant; not carrying the data of the first object in the uplink grant; carrying the data of the first object with low priority in the uplink grant; preferentially delivering data of the first object in a first protocol layer to a MAC layer; delivering data of the first object in the first protocol layer to the MAC layer with low priority; delivering data of the first object in the first protocol layer to the MAC layer last; delivering multiple data of the first object to the MAC layer simultaneously; delivering multiple data of the first object to the MAC layer within a first time period; carrying the data of the first object in a same uplink grant; carrying the data of the first object in an uplink grant within the first time period; deleting data of the first object; carrying the data of the first object with low priority in an uplink grant within the first time period; and not carrying the data of the first object in an uplink grant within the first time period, where the first protocol layer includes a PDCP layer and/or an RLC layer.

In some implementations, the first rule is related to a first procedure, where the first procedure includes one or more of: an LCP procedure; a MAC PDU packetization procedure; a procedure of delivering data of the first protocol layer to the MAC layer; and a procedure of delivering data packets to a lower layer.

In some implementations, the first operation includes: transmitting the data of the first object using a first channel.

In some implementations, the first operation includes: transmitting data corresponding to the first information using the first channel when a first condition is satisfied.

In some implementations, the first channel satisfies one or more of: the first channel is different from a second channel, and the first channel is associated with a first protocol layer; where the second channel satisfies one or more of: the second channel is a default channel, the second channel is associated with the first protocol layer, the second channel is a channel configured by a network device, the second channel is a channel indicated in RRC configuration information, and the second channel is a channel used when the first condition is not satisfied; where the first protocol layer includes a PDCP layer and/or an RLC layer.

In some implementations, multiple data of the first object are associated with the same channel, or multiple data of the first object are associated with different channels.

In some implementations, the first information includes information associated with target information.

In some implementations, the information associated with target information is used to identify or indicate one or more of: an object having a first relationship; an object on which the first operation is required to be performed based on the first information; and an object corresponding to the target information.

In some implementations, the granularity of the target information includes one or more of: a QoS flow, a data flow, an LCH, an LCH group, and a DRB, data packet.

In some implementations, the first information includes second information related to time information.

In some implementations, the second information is related to target data.

In some implementations, the second information includes time information for a second object, where the second object includes one or more of: an object having a first relationship; an object having a first relationship that has data to be transmitted; an object with a shortest delay tolerance among multiple objects having a first relationship; an object with a longest delay tolerance among multiple objects having a first relationship; a specific object having a first relationship; an object with consistent time information among multiple objects having a first relationship; the first object; an object with consistent time information; the first object satisfying a third condition; and the first object reporting the first information.

In some implementations, the second information includes one or more of: a difference between time information of any two objects among the multiple second objects; time information of the second object; a difference between time information of one object of the second object and another object; a difference between time information corresponding to first data packets of any two objects of the second object; a difference between time information corresponding to second data packets of any two objects of the second object; a difference between time information of a first data packet of one object of the second object and a first data packet of another object; a difference between time information of a second data packet of one object of the second object and a second data packet of another object; time information corresponding to the first data packet of the second object; and time information corresponding to the second data packet of the second object; where the first data packet is a data packet with shortest time information, and the second data packet is a data packet with longest time information.

In some implementations, the time information includes one or more of: information indicated by a timestamp, decoding time, transmission time, generation time of a data packet, reception time expected by a network device, reception time required by a network device, delay, remaining delay, latest transmission time of the data packet, PDB time, and PSDB time.

In some implementations, the second information is related to a first protocol layer, where the first protocol layer is configured to perform a third operation, and the third operation includes one or more of: determining the second information; maintaining the second information; calculating the second information; and transmitting the second information to a second protocol layer, where the first protocol layer includes an RLC layer, and the second protocol layer includes a MAC layer; and/or the first protocol layer includes a PDCP layer, and the second protocol layer includes an RLC layer and a MAC layer.

In some implementations, the first protocol layer performs the third operation when a fourth condition is satisfied.

In some implementations, the fourth condition includes one or more of: a condition related to a period; a first execution condition; reception of a request message from the MAC layer; and determination by the MAC layer that a second execution condition is satisfied.

In some implementations, the second information is determined based on one or more of: a second timer; time when a data packet arrives at the first protocol layer; waiting time of a data packet in the first protocol layer; time for decoding a data packet; time for receiving a data packet; PDB of a data packet; PSDB of a data packet; time information carried in a data packet; timestamp information of a data packet; and time information indicated by a higher layer.

In some implementations, the sending unit is further configured to: send a first indication to the terminal device, where the first indication information is used to determine the first information, and/or perform the first operation based on the first information.

In some implementations, the first indication information is used to indicate that the terminal device is configured to perform the first operation based on the first information.

In some implementations, the first indication information is determined based on information reported by the terminal device.

In some implementations, the information reported by the terminal device includes one or more of: whether the terminal device can identify the first object; whether the terminal device can perform the first operation; multiple objects having a first relationship; an object having a first relationship; information of an identifiable first object; and information of an identifiable delay-based scheduled object.

In some implementations, the first indication information is carried in RRC signaling, a MAC CE, or a change indication.

In some implementations, the first object includes one or more of: an object configured by the network device; an object supported by the terminal device; an object having time information; an object having target information; an object whose target requirement satisfies a fifth condition; an object carrying time information; an object having specific time information; an object whose time information satisfies a sixth condition; and an object capable of performing the first operation.

In some implementations, the case of the terminal device performing a first operation based on first information includes that: the terminal device performs the first operation based on the first information when a seventh condition is satisfied.

In some implementations, the seventh condition includes one or more of: the first indication information is received; the first indication information is received and indicates enabling the first operation; data of the first object arrives; time information of the data of the first object is less than or equal to a second threshold; a volume of the data of the first object is greater than or equal to a third threshold; data to be transmitted includes data having target information; data to be transmitted includes data carrying time information; time information carried by multiple pieces of data to be transmitted is consistent; and a third timer has not expired.

In some implementations, the object includes one or more of: a QoS flow, a PDU session, a DRB, a DRB group, an LCH group, an LCH, and a data packet.

In some implementations, the DRB group corresponds to an LCH group having a first relationship; and/or the LCH group includes an LCH group having a first relationship; and/or the DRB corresponds to an LCH having a first relationship; and/or the LCH includes an LCH having a first relationship.

In some implementations, the target information includes one or more of: multi-modal information, information with a consistent-transmission requirement, information with a coordinated-transmission requirement, and information with a synchronous-transmission requirement.

In some implementations, the first relationship includes one or more of: a multi-modal relationship, a relationship with a consistent-transmission requirement, a relationship with a coordinated-transmission requirement, and a relationship with a synchronous-transmission requirement.

In some implementations, the target data includes one or more of: multi-modal data, data with a consistent-transmission requirement, data with a coordinated-transmission requirement, data with a synchronous-transmission requirement, and data with a consistent-time requirement.

In some implementations, the target requirement includes one or more of: a multi-modal requirement, a transmission requirement, a coordination requirement, a synchronization requirement, and a time consistency requirement.

In an optional embodiment, the sending unit 510 may be a transceiver 630. The network device 500 may further include a processor 610 and a memory 620, as specifically shown in FIG. 6.

FIG. 6 is a schematic structural diagram of a communication apparatus according to an embodiment of the present disclosure. A dashed line in FIG. 6 indicates that the unit or module is optional. The apparatus 600 may be configured to implement the method described in the foregoing method embodiments. The apparatus 600 may be a chip, a terminal device, or a network device.

The apparatus 600 may include one or more processors 610. The processor 610 may support the apparatus 600 in implementing the method described in the foregoing method embodiments. The processor 610 may be a general-purpose processor or a dedicated processor. For example, the processor may be a central processing unit (CPU). Alternatively, the processor may also be another general-purpose processor, a digital signal processor (DSP), an application specific integrated circuit (ASIC), a field programmable gate array (FPGA) or another programmable logic device, a discrete gate or transistor logic device, a discrete hardware component, or the like. A general-purpose processor may be a microprocessor or the processor may be any conventional processor or the like.

The apparatus 600 may further include one or more memories 620. The memory 620 is configured to store a program that can be executed by the processor 610, so that the processor 610 performs the method described in the foregoing method embodiments. The memory 620 may be independent of the processor 610 or integrated in the processor 610.

The apparatus 600 may further include a transceiver 630. The processor 610 may communicate with other devices or chips through the transceiver 630. For example, the processor 610 may transmit and receive data to and from other devices or chips through the transceiver 630.

An embodiment of the present disclosure further provides a computer-readable storage medium for storing a program. The computer-readable storage medium may be applied to the terminal or network device provided in the embodiments of the present disclosure, and the program causes a computer to perform the method performed by the terminal or network device in the various embodiments of the present disclosure.

An embodiment of the present disclosure further provides a computer program product. The computer program product includes a program. The computer program product may be applied to the terminal or network device provided in the embodiments of the present disclosure, and the program causes a computer to perform the method performed by the terminal or network device in the various embodiments of the present disclosure.

An embodiment of the present disclosure further provides a computer program. The computer program may be applied to the terminal or network device provided in the embodiments of the present disclosure, and the computer program causes a computer to perform the method performed by the terminal or network device in the various embodiments of the present disclosure.

It should be understood that in the present disclosure, the terms "system" and "network" may be used interchangeably. In addition, the terms used in the present disclosure are only used to explain specific embodiments of the present disclosure and are not intended to limit the present disclosure. The terms "first", "second", "third", "fourth", and the like in the description, claims, and accompanying drawings of the present disclosure are used to distinguish different objects rather than describing a specific order. In addition, the terms "include" and "have" as well as any variations thereof are intended to cover non-exclusive inclusion.

In the embodiments of the present disclosure, the "indication" mentioned may be a direct indication, an indirect indication, or an indication of an association relationship. For example, A indicates B may represent that A directly indicates B, for example, B can be obtained from A; or that A indirectly indicates B, for example, A indicates C, and B can be obtained from C; or that A and B have an association relationship.

In the embodiments of the present disclosure, "B corresponding to A" means that B is associated with A, and B can be determined according to A. However, it should also be understood that determining B according to A does not mean that B is determined only according to A, and B may also be determined according to A and/or other information.

In the embodiments of the present disclosure, the term "correspond" may indicate a direct or indirect correspondence between two, an association relationship between two, or an indicating-and-indicated relationship, or a configurating-and-configured relationship.

In the embodiments of the present disclosure, "predefined" or "preconfigured" may be implemented by pre-storing corresponding codes, tables, or other manners that can be used to indicate relevant information in a device (for example, including a terminal device and a network device), and the specific implementation manner is not limited in the present disclosure. For example, predefined may mean defined in a protocol.

In the embodiments of the present disclosure, the "protocol" may refer to a standard protocol in the communication field, and may include, for example, an LTE protocol, an NR protocol, and related protocols applied to a future communication system, which is not limited in the present disclosure.

In the embodiments of the present disclosure, the term "and/or" is merely an association relationship for describing an associated object, indicating that three relationships may exist. For example, A and/or B may indicate the existence of A alone, existence of B alone, or both existence of A and B. In addition, the character "/" herein generally represents an "or" relationship between associated objects.

In various embodiments of the present disclosure, the sequence numbers of the foregoing processes do not mean the execution order. The execution order of the processes should be determined based on their functions and internal logic and should not constitute any limitation on the implementation processes of the embodiments of the present disclosure.

In several embodiments provided in the present disclosure, it should be understood that the described system, apparatus, and method may be implemented in other manners. For example, the apparatus embodiments described above are merely schematic. For example, the division of the units is only a logical function division, and an actual implementation may have another division manner. For example, multiple units or components may be combined or integrated into another system, or some features may be ignored or not performed. In addition, the mutual coupling or direct coupling or communication connection shown or discussed may be an indirect coupling or communication connection through some interface, apparatus, or unit, and may be in an electrical, mechanical, or other form.

The units described as separate parts may or may not be physically separated, and the parts shown as units may or may not be physical units, that is, may be located in one place or distributed to multiple network units. Some or all of the units may be selected according to actual needs to achieve the objectives of the solutions of the embodiments.

In addition, functional units in various embodiments of the present disclosure may be integrated into one processing unit, or each unit may exist alone physically, or two or more units may be integrated into one unit.

In the foregoing embodiments, the implementation may be implemented in whole or in part by software, hardware, firmware, or any combination thereof. When implemented by software, the implementation may be implemented in whole or in part in the form of a computer program product. The computer program product includes one or more computer instructions. When the computer instructions are loaded and executed on a computer, the processes or functions according to the embodiments of the present disclosure are generated in whole or in part. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, coaxial cable, optical fiber, digital subscriber line (DSL)) or wireless (for example, infrared, wireless, microwave) manner. The computer-readable storage medium may be any available medium that can be accessed by a computer or a data storage device such as a server or data center that includes one or more available media integrated therein. The available medium may be a magnetic medium (for example, a floppy disk, a hard disk, or a magnetic tape), an optical medium (for example, a digital video disc (DVD)), or a semiconductor medium (for example, a solid state disk (SSD)).

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A wireless communication method, implemented by a terminal device, comprising:
performing a first operation based on first information, wherein the first operation is related to logical channel (LCH) processing.

2. The method according to claim 1, wherein the first operation comprises adjusting a priority of a first LCH, the first LCH is associated with the first information or data of a first object, and the data of the first object comprises data corresponding to the first information.

3. The method according to claim 2, wherein the first LCH is an LCH corresponding to the first object.

4. The method according to claim 3, wherein the first object satisfies one or more of:
priorities of a plurality of LCHs included in the first LCH are the same;
the priority of the first LCH is higher than priorities of other LCHs than the first LCH;
the first LCH is transmitted with higher priority than a second LCH, wherein the priority of the first LCH is the same as a priority of the second LCH;
the first LCH is transmitted with lower priority than a third LCH, wherein the priority of the first LCH is the same as a priority of the third LCH;
the first LCH and a fourth LCH each correspond to a first priority and a second priority, the first priority of the first LCH is the same as the first priority of the fourth LCH, and the second priority of the first LCH is higher than the second priority of the fourth LCH; and
the first LCH and a fifth LCH each correspond to a third priority and a fourth priority, the third priority of the first LCH is the same as the third priority of the fifth LCH, and the fourth priority of the first LCH is lower than the fourth priority of the fifth LCH.

5. The method according to claim 1, wherein the first operation comprises: determining whether to perform a first action, or performing a first action, wherein the first action is related to one or more of: packetization of data of a first object, a transmission order of the data of the first object, and an order of transmission resources carrying the data of the first object.

6. The method according to claim 5, wherein the first action is configured to perform one or more of:
transmitting, with high priority, the data of the first object in an uplink grant;
transmitting, with low priority, the data of the first object in the uplink grant;
transmitting, with high priority, the uplink grant carrying the data of the first object; and
transmitting, with low priority, the uplink grant carrying the data of the first object.

7. The method according to claim 5 or 6, wherein the first action is related to one or more of: the first object, the terminal device, and a first LCH;
the terminal device comprises one or more of: a terminal device with the first object, a terminal device that receives first indication information, a terminal device that receives the first indication information which indicates to enable the first action, and a terminal device that supports the first action; and
the first LCH is an LCH of the first object.

8. The method according to claim 7, wherein the first object satisfies one or more of:
the data of the first object is carried with high priority in an uplink grant;
the data of the first object is carried with low priority in the uplink grant as compared with data other than the data of the first object;
the data of the first object is not carried in the uplink grant;
the data of the first object is not carried in a specific uplink grant;
the data of the first object is not carried within a first time period;
the data of the first object is carried within the first time period;
a plurality of data corresponding to the first object are carried simultaneously;
the data of the first object is carried with higher priority as compared with data other than the data of the first object;
the data of the first object is carried with lower priority as compared with data other than the data of the first object;
the data of the first object is discarded; and
the data of the first object is not carried.

9. The method according to any one of claims 5 to 8, wherein performing the first action comprises one or more of: performing a first packetization action, performing a first LCH priority (LCP) procedure, and performing a first medium access control protocol data unit (MAC PDU) generation procedure.

10. The method according to claim 1, wherein the first operation comprises: adjusting a first parameter, wherein the first parameter is related to packetization or a transmission order of data of a first object, and the first parameter comprises a configuration parameter of an LCH and/or a configuration parameter of a radio link control (RLC).

11. The method according to claim 10, wherein adjusting the first parameter comprises:
adjusting the first parameter for the first object.

12. The method according to claim 11, wherein the adjusted first parameter satisfies one or more of:
a value of the adjusted first parameter is a size of data to be transmitted of the first object;
a value of the adjusted first parameter is 0;
a value of the adjusted first parameter is a specific value; and
the adjusted first parameter is used to transmit the data to be transmitted of the first object in a first uplink grant, wherein the first uplink grant comprises one or more of: a specific uplink grant, an uplink grant within a first time period, and an obtained uplink grant.

13. The method according to any one of claims 10 to 12, wherein the configuration parameter of the LCH comprises a prioritised bit rate (PBR) and/or a bucket size duration (BSD).

14. The method according to claim 1, wherein the first operation comprises: using a first rule, wherein the first rule is related to transmission of data of a first object.

15. The method according to claim 14, wherein the first rule comprises one or more of:
carrying the data of the first object in an uplink grant;
carrying the data of the first object with high priority in the uplink grant;
not carrying the data of the first object in the uplink grant;
carrying, with low priority, the data of the first object in the uplink grant;
delivering, with high priority, the data of the first object in a first protocol layer to a medium access control (MAC) layer;
delivering, with low priority, the data of the first object in the first protocol layer to the MAC layer;
delivering the data of the first object in the first protocol layer to the MAC layer last;
simultaneously delivering a plurality of data of the first object to the MAC layer;
delivering a plurality of data of the first object to the MAC layer within a first time period;
carrying the data of the first object in a same uplink grant;
carrying the data of the first object in an uplink grant within the first time period;
deleting the data of the first object;
carrying with low priority the data of the first object in the uplink grant within the first time period; and
not carrying the data of the first object in the uplink grant within the first time period,
wherein the first protocol layer comprises a packet data convergence protocol (PDCP) layer and/or a Radio Link Control (RLC) layer.

16. The method according to claim 14 or 15, wherein the first rule is related to a first procedure, wherein the first procedure comprises one or more of:
an LCP procedure;
a MAC PDU packetization procedure;
a procedure of delivering data of a first protocol layer to a MAC layer; and
a procedure of delivering a data packet to a lower layer.

17. The method according to claim 1, wherein the first operation comprises: transmitting data of a first object using a first channel.

18. The method according to claim 17, wherein the first operation comprises: transmitting data corresponding to the first information using the first channel in a case that a first condition is satisfied.

19. The method according to claim 17 or 18, wherein the first channel satisfies one or more of:
the first channel is different from a second channel; and
the first channel is associated with a first protocol layer;
wherein the second channel satisfies one or more of:
the second channel is a default channel;
the second channel is associated with the first protocol layer;
the second channel is a channel configured by a network device;
the second channel is a channel indicated in radio resource control (RRC) configuration information; and
the second channel is a channel used in a case that the first condition is not satisfied,
wherein the first protocol layer comprises a PDCP layer and/or an RLC layer.

20. The method according to any one of claims 17 to 19, wherein channels associated with a plurality of data of the first object are the same, or channels associated with a plurality of data of the first object are different.

21. The method according to any one of claims 1 to 20, further comprising:
deactivating, by the terminal device, a second operation in a case that a second condition is satisfied, wherein the second operation comprises: performing the first operation based on the first information.

22. The method according to claim 21, wherein the second condition comprises one or more of:
data of a first object is discarded;
an uplink grant capable of carrying the data of the first object is newly added;
time information of the data of the first object is less than or equal to a first threshold;
the first object is reconfigured;
time information of a plurality of data of the first object is consistent;
a MAC entity is reconfigured;
a first timer expires; and
a first timer is not running.

23. The method according to any one of claims 1 to 22, wherein the first information comprises information associated with target information.

24. The method according to claim 23, wherein the information associated with the target information is used to identify or indicate one or more of:
an object having a first relationship;
an object on which the first operation is required to be performed based on the first information; and
an object corresponding to the target information.

25. The method according to claim 23 or 24, wherein a granularity of the target information comprises one or more of: a quality of service (QoS) flow, a data flow, an LCH, a an LCH group, a data radio bearer (DRB), and a data packet.

26. The method according to any one of claims 1 to 25, wherein the first information comprises second information related to time information.

27. The method according to claim 26, wherein the second information is related to target data.

28. The method according to claim 26 or 27, wherein the second information comprises time information for a second object, wherein the second object comprises one or more of:
an object having a first relationship;
an object having data to be transmitted among objects having a first relationship;
an object with a shortest delay tolerance among a plurality of objects having a first relationship;
an object with a longest delay tolerance among a plurality of objects having a first relationship;
a specific object having a first relationship;
an object with consistent time information among a plurality of objects having a first relationship;
a first object;
an object with consistent time information;
a first object satisfying a third condition; and
a first object that reports the first information.

29. The method according to claim 28, wherein the second information comprises one or more of:
a difference between time information of any two objects among a plurality of the second objects;
time information of the second object;
a difference between time information of one object of the second object and time information of another object;
a difference between time information corresponding to first data packets of any two objects of the second objects;
a difference between time information corresponding to second data packets of any two objects of the second objects;
a difference between time information of a first data packet of one object of the second objects and time information of a first data packet of another object;
a difference between time information of a second data packet of one object of the second objects and time information of a second data packet of another object;
time information corresponding to a first data packet of the second object; and
time information corresponding to a second data packet of the second object,
wherein the first data packet is a data packet with shortest time information, and the second data packet is a data packet with longest time information.

30. The method according to any one of claims 26 to 29, wherein the time information comprises one or more of: information indicated by a timestamp, decoding time, transmission time, generation time of a data packet, expected reception time of a network device, required reception time of the network device, delay, remaining delay, latest transmission time of the data packet, packet delay budget (PDB) time, and PDU set delay budget (PSDB) time.

31. The method according to any one of claims 26 to 30, wherein the second information is related to a first protocol layer, wherein the first protocol layer is configured to perform a third operation, wherein the third operation comprises one or more of:
determining the second information;
maintaining the second information;
calculating the second information; and
transmitting the second information to a second protocol layer,
wherein the first protocol layer comprises an RLC layer, and the second protocol layer comprises a MAC layer; and/or the first protocol layer comprises a PDCP layer, and the second protocol layer comprises an RLC layer and a MAC layer.

32. The method according to claim 31, wherein the first protocol layer performs the third operation in a case that a fourth condition is satisfied.

33. The method according to claim 32, wherein the fourth condition comprises one or more of:
a condition related to a period;
a first execution condition;
reception of a request message from a MAC layer; and
determination by the MAC layer that a second execution condition is satisfied.

34. The method according to any one of claims 26 to 33, wherein the second information is determined based on one or more of following information:
a second timer;
time when a data packet arrives at a first protocol layer;
time that a data packet waits in the first protocol layer;
time for decoding a data packet;
time for receiving a data packet;
PDB of a data packet;
PSDB of a data packet;
time information carried in a data packet;
timestamp information of a data packet; and
time information indicated by a higher layer.

35. The method according to any one of claims 1 to 34, further comprising:
determining, by the terminal device, the first information based on first indication information, and/or performing the first operation based on the first information.

36. The method according to claim 35, wherein the first indication information is used to indicate that the terminal device is configured to perform the first operation based on the first information.

37. The method according to claim 35 or 36, wherein the first indication information is determined based on information reported by the terminal device.

38. The method according to claim 37, wherein the information reported by the terminal device comprises one or more of:
whether the terminal device is capable of identifying a first object;
whether the terminal device is capable of performing the first operation;
a plurality of objects having a first relationship;
an object having a first relationship;
information of an identifiable first object; and
information of an identifiable delay-based scheduled object.

39. The method according to any one of claims 35 to 38, wherein the first indication information is carried in RRC signaling, a MAC CE, or a change indication.

40. The method according to any one of claims 2 to 20, 22, 28 to 29, and 38, wherein the first object comprises one or more of:
an object configured by a network device;
an object supported by the terminal device;
an object having time information;
an object having target information;
an object whose target requirement satisfies a fifth condition;
an object carrying time information;
an object having specific time information;
an object whose time information satisfies a sixth condition; and
an object capable of performing the first operation.

41. The method according to any one of claims 1 to 40, wherein performing, by the terminal device, the first operation based on the first information comprises:
performing, by the terminal device, the first operation based on the first information in a case that a seventh condition is satisfied.

42. The method according to claim 41, wherein the seventh condition comprises one or more of:
the first indication information is received;
the first indication information is received and the first indication information indicates to enable the first operation;
data of the first object arrives;
time information of the data of the first object is less than or equal to a second threshold;
a volume of the data of the first object is greater than or equal to a third threshold;
data to be transmitted comprises data having target information;
data to be transmitted comprises data carrying time information;
time information carried by a plurality of data to be transmitted is consistent; and
a third timer has not expired.

43. The method according to any one of claims 2 to 20, 22, 24, 28 to 29, 38, 40, and 42, wherein the object comprises one or more of: a QoS flow, a PDU session, a DRB, a DRB group, an LCH group, an LCH, and a data packet.

44. The method according to claim 43, wherein the DRB group corresponds to an LCH group having a first relationship; and/or the LCH group comprises an LCH group having a first relationship; and/or the DRB corresponds to an LCH having a first relationship; and/or the LCH comprises an LCH having a first relationship.

45. The method according to any one of claims 23 to 25, 40, and 42, wherein the target information comprises one or more of: multi-modal information, information with a consistent-transmission requirement, information with a coordinated-transmission requirement, and information with a synchronous-transmission requirement.

46. The method according to any one of claims 24, 28, 38, and 44, wherein the first relationship comprises one or more of: a multi-modal relationship, a relationship with a consistent-transmission requirement, a relationship with a coordinated-transmission requirement, and a relationship with a synchronous-transmission requirement.

47. The method according to claim 27, wherein the target data comprises one or more of:
multi-modal data, data with a consistent-transmission requirement, data with a coordinated-transmission requirement, data with a synchronous-transmission requirement, and data with a consistent-time requirement.

48. The method according to claim 40, wherein the target requirement comprises one or more of: a multi-modal requirement, a transmission requirement, a coordination requirement, a synchronization requirement, and a time consistency requirement.

49. A wireless communication method, implemented by a network device, comprising:
sending second indication information to a terminal device, wherein the second indication information is used to indicate first information, the first information is used to perform a first operation, and the first operation is related to logical channel (LCH) processing.

50. The method according to claim 49, wherein the first operation comprises adjusting a priority of a first LCH, the first LCH is associated with the first information or data of a first object, and the data of the first object comprises data corresponding to the first information.

51. The method according to claim 50, wherein the first LCH is an LCH corresponding to the first object.

52. The method according to claim 51, wherein the first object satisfies one or more of:
priorities of a plurality of LCHs included in the first LCH are the same;
the priority of the first LCH is higher than priorities of other LCHs than the first LCH;
the first LCH is transmitted with higher priority than a second LCH, wherein the priority of the first LCH is the same as a priority of the second LCH;
the first LCH is transmitted with lower priority than a third LCH, wherein the priority of the first LCH is the same as a priority of the third LCH;
the first LCH and a fourth LCH each correspond to a first priority and a second priority, the first priority of the first LCH is the same as the first priority of the fourth LCH, and the second priority of the first LCH is higher than the second priority of the fourth LCH; and
the first LCH and a fifth LCH each correspond to a third priority and a fourth priority, the third priority of the first LCH is the same as the third priority of the fifth LCH, and the fourth priority of the first LCH is lower than the fourth priority of the fifth LCH.

53. The method according to claim 49, wherein the first operation comprises: determining whether to perform a first action, or performing a first action, wherein the first action is related to one or more of: packetization of data of a first object, a transmission order of the data of the first object, and an order of transmission resources carrying the data of the first object.

54. The method according to claim 53, wherein the first action is configured to perform one or more of:
transmitting, with high priority, the data of the first object in an uplink grant;
transmitting, with low priority, the data of the first object in the uplink grant;
transmitting, with high priority, the uplink grant carrying the data of the first object; and
transmitting, with low priority, the uplink grant carrying the data of the first object.

55. The method according to claim 53 or 54, wherein the first action is related to one or more of: the first object, the terminal device, and a first LCH;
the terminal device comprises one or more of: a terminal device with the first object, a terminal device that receives first indication information, a terminal device that receives the first indication information which indicates to enable the first action, and a terminal device that supports the first action; and
the first LCH is an LCH of the first object.

56. The method according to claim 55, wherein the first object satisfies one or more of:
the data of the first object is carried with high priority in an uplink grant;
the data of the first object is carried with low priority in the uplink grant as compared with data other than the data of the first object;
the data of the first object is not carried in the uplink grant;
the data of the first object is not carried in a specific uplink grant;
the data of the first object is not carried within a first time period;
the data of the first object is carried within the first time period;
a plurality of data corresponding to the first object are carried simultaneously;
the data of the first object is carried with higher priority as compared with data other than the data of the first object;
the data of the first object is carried with lower priority as compared with data other than the data of the first object;
the data of the first object is discarded; and
the data of the first object is not carried.

57. The method according to any one of claims 53 to 56, wherein performing the first action comprises one or more of: performing a first packetization action, performing a first LCH priority (LCP) procedure, and performing a first medium access control protocol data unit (MAC PDU) generation procedure.

58. The method according to claim 49, wherein the first operation comprises: adjusting a first parameter, wherein the first parameter is related to packetization or a transmission order of data of a first object, and the first parameter comprises a configuration parameter of an LCH and/or a configuration parameter of a radio link control (RLC).

59. The method according to claim 58, wherein adjusting the first parameter comprises:
adjusting the first parameter for the first object.

60. The method according to claim 59, wherein the adjusted first parameter satisfies one or more of:
a value of the adjusted first parameter is a size of data to be transmitted of the first object;
a value of the adjusted first parameter is 0;
a value of the adjusted first parameter is a specific value; and
the adjusted first parameter is used to transmit the data to be transmitted of the first object in a first uplink grant, wherein the first uplink grant comprises one or more of: a specific uplink grant, an uplink grant within a first time period, and an obtained uplink grant.

61. The method according to any one of claims 58 to 60, wherein the configuration parameter of the LCH comprises a prioritised bit rate (PBR) and/or a bucket size duration (BSD).

62. The method according to claim 49, wherein the first operation comprises: using a first rule, wherein the first rule is related to transmission of data of a first object.

63. The method according to claim 62, wherein the first rule comprises one or more of:
carrying the data of the first object in an uplink grant;
carrying the data of the first object with high priority in the uplink grant;
not carrying the data of the first object in the uplink grant;
carrying, with low priority, the data of the first object in the uplink grant;
delivering, with high priority, the data of the first object in a first protocol layer to a medium access control protocol (MAC) layer;
delivering, with low priority, the data of the first object in the first protocol layer to the MAC layer;
delivering the data of the first object in the first protocol layer to the MAC layer last;
simultaneously delivering a plurality of data of the first object to the MAC layer;
delivering a plurality of data of the first object to the MAC layer within a first time period;
carrying the data of the first object in a same uplink grant;
carrying the data of the first object in an uplink grant within the first time period;
deleting the data of the first object;
carrying, with low priority, the data of the first object in the uplink grant within the first time period; and
not carrying the data of the first object in the uplink grant within the first time period,
wherein the first protocol layer comprises a packet data convergence protocol (PDCP) layer and/or a Radio Link Control (RLC) layer.

64. The method according to claim 62 or 63, wherein the first rule is related to a first procedure, wherein the first procedure comprises one or more of:
an LCP procedure;
a MAC PDU packetization procedure;
a procedure of delivering data of a first protocol layer to a MAC layer; and
a procedure of delivering a data packet to a lower layer.

65. The method according to claim 49, wherein the first operation comprises transmitting data of a first object using a first channel.

66. The method according to claim 65, wherein the first operation comprises: transmitting data corresponding to the first information using the first channel in a case that a first condition is satisfied.

67. The method according to claim 65 or 66, wherein the first channel satisfies one or more of:
the first channel is different from a second channel; and
the first channel is associated with a first protocol layer;
wherein the second channel satisfies one or more of:
the second channel is a default channel;
the second channel is associated with the first protocol layer;
the second channel is a channel configured by a network device;
the second channel is a channel indicated in radio resource control (RRC) configuration information; and
the second channel is a channel used in a case that the first condition is not satisfied,
wherein the first protocol layer comprises a PDCP layer and/or an RLC layer.

68. The method according to any one of claims 65 to 67, wherein channels associated with a plurality of data of the first object are the same, or channels associated with a plurality of data of the first object are different.

69. The method according to any one of claims 49 to 68, wherein the first information comprises information associated with target information.

70. The method according to claim 69, wherein the information associated with the target information is used to identify or indicate one or more of:
an object having a first relationship;
an object on which the first operation is required to be performed based on the first information; and
an object corresponding to the target information.

71. The method according to claim 69 or 70, wherein a granularity of the target information comprises one or more of: a quality of service (QoS) flow, a data flow, an LCH, an LCH group, a data radio bearer (DRB), and a data packet.

72. The method according to any one of claims 49 to 71, wherein the first information comprises second information related to time information.

73. The method according to claim 72, wherein the second information is related to target data.

74. The method according to claim 72 or 73, wherein the second information comprises time information for a second object, wherein the second object comprises one or more of:
an object having a first relationship;
an object having data to be transmitted among objects having a first relationship;
an object with a shortest delay tolerance among a plurality of objects having a first relationship;
an object with a longest delay tolerance among a plurality of objects having a first relationship;
a specific object having a first relationship;
an object with consistent time information among a plurality of objects having a first relationship;
a first object;
an object with consistent time information;
a first object satisfying a third condition; and
a first object that reports the first information.

75. The method according to claim 74, wherein the second information comprises one or more of:
a difference between time information of any two objects among a plurality of the second objects;
time information of the second object;
a difference between time information of one object of the second object and time information of another object;
a difference between time information corresponding to first data packets of any two objects of the second objects;
a difference between time information corresponding to second data packets of any two objects of the second objects;
a difference between time information of a first data packet of one object of the second objects and time information of a first data packet of another object;
a difference between time information of a second data packet of one object of the second objects and time information of a second data packet of another object;
time information corresponding to a first data packet of the second object; and
time information corresponding to a second data packet of the second object,
wherein the first data packet is a data packet with shortest time information, and the second data packet is a data packet with longest time information.

76. The method according to any one of claims 72 to 75, wherein the time information comprises one or more of: information indicated by a timestamp, decoding time, transmission time, generation time of a data packet, expected reception time of a network device, required reception time of the network device, delay, remaining delay, latest transmission time of the data packet, packet delay budget (PDB) time, and PDU set delay budget (PSDB) time.

77. The method according to any one of claims 72 to 76, wherein the second information is related to a first protocol layer, wherein the first protocol layer is configured to perform a third operation, wherein the third operation comprises one or more of:
determining the second information;
maintaining the second information; and
calculating the second information; and
transmitting the second information to a second protocol layer,
wherein the first protocol layer comprises an RLC layer, and the second protocol layer comprises a MAC layer; and/or the first protocol layer comprises a PDCP layer, and the second protocol layer comprises an RLC layer and a MAC layer.

78. The method according to claim 77, wherein the third operation is performed by the first protocol layer in a case that a fourth condition is satisfied.

79. The method according to claim 78, wherein the fourth condition comprises one or more of:
a condition related to a period;
a first execution condition;
reception of a request message from a MAC layer; and
determination by the MAC layer that a second execution condition is satisfied.

80. The method according to any one of claims 72 to 79, wherein the second information is determined based on one or more of information:
a second timer;
time when a data packet arrives at a first protocol layer;
time that a data packet waits in the first protocol layer;
time for decoding a data packet;
time for receiving a data packet;
PDB of a data packet;
PSDB of a data packet;
time information carried in a data packet;
timestamp information of a data packet; and
time information indicated by a higher layer.

81. The method according to any one of claims 49 to 80, further comprising:
sending, by the network device, first indication information to the terminal device, wherein the first indication information is used to determine the first information, and/or perform the first operation based on the first information.

82. The method according to claim 81, wherein the first indication information is used to indicate that the terminal device is configured to perform the first operation based on the first information.

83. The method according to claim 81 or 82, wherein the first indication information is determined based on information reported by the terminal device.

84. The method according to claim 83, wherein the information reported by the terminal device comprises one or more of:
whether the terminal device is capable of identifying a first object;
whether the terminal device is capable of performing the first operation;
a plurality of objects having a first relationship;
an object having a first relationship;
information of an identifiable first object; and
information of an identifiable delay-based scheduled object.

85. The method according to any one of claims 81 to 84, wherein the first indication information is carried in RRC signaling, a MAC CE, or a change indication.

86. The method according to any one of claims 50 to 68, 74 to 75, and 84, wherein the first object comprises one or more of:
an object configured by the network device;
an object supported by the terminal device;
an object having time information;
an object having target information;
an object whose target requirement satisfies a fifth condition;
an object carrying time information;
an object having specific time information;
an object whose time information satisfies a sixth condition; and
an object capable of performing the first operation.

87. The method according to any one of claims 49 to 86, wherein performing, by the terminal device, the first operation based on the first information comprises:
performing, by the terminal device, the first operation based on the first information in a case that a seventh condition is satisfied.

88. The method according to claim 87, wherein the seventh condition comprises one or more of:
the first indication information is received;
the first indication information is received and the first indication information indicates to enable the first operation;
data of the first object arrives;
time information of the data of the first object is less than or equal to a second threshold;
a volume of the data of the first object is greater than or equal to a third threshold;
data to be transmitted comprises data having target information;
data to be transmitted comprises data carrying time information;
time information carried by a plurality of data to be transmitted is consistent; and
a third timer has not expired.

89. The method according to any one of claims 50 to 68, 70, 74 to 75, 84, 86, and 88, wherein the object comprises one or more of: a QoS flow, a PDU session, a DRB, a DRB group, an LCH group, an LCH, and a data packet.

90. The method according to claim 89, wherein the DRB group corresponds to an LCH group having a first relationship; and/or the LCH group comprises an LCH group having a first relationship; and/or the DRB corresponds to an LCH having a first relationship; and/or the LCH comprises an LCH having a first relationship.

91. The method according to any one of claims 69 to 71, 86, and 88, wherein the target information comprises one or more of: multi-modal information, information with a consistent-transmission requirement, information with a coordinated-transmission requirement, and information with a synchronous-transmission requirement.

92. The method according to any one of claims 70, 74, 84, and 90, wherein the first relationship comprises one or more of: a multi-modal relationship, a relationship with a consistent-transmission requirement, a relationship with a coordinated-transmission requirement, and a relationship with a synchronous-transmission requirement.

93. The method according to claim 73, wherein the target data comprises one or more of: multi-modal data, data with a consistent-transmission requirement, data with a coordinated-transmission requirement, data with a synchronous-transmission requirement, and data with a consistent-time requirement.

94. The method according to claim 86, wherein the target requirement comprises one or more of: a multi-modal requirement, a transmission requirement, a coordination requirement, a synchronization requirement, and a time consistency requirement.
